# EUROPEAN PATENT APPLICATION

(11) **EP 4 810 536 A1**
(43) Date of publication of application: **23.09.2026**
(21) Application number: 24891163.8
(22) Date of filing: 21.10.2024
(51) Int. Cl.: C08G 59/22, B32B 27/38, C09J 5/00, C09J 163/00, C09J 171/10

(54) **CURABLE RESIN COMPOSITION, CURED PRODUCT THEREOF, AND DISASSEMBLABLE ADHESIVE MATERIAL**

(30) Priority: 16.11.2023 JP 2023195113
(71) Applicant: DIC Corporation, Tokyo 174-8520 (JP)
(72) Inventor: OTSU Masato, Sakura-shi, Chiba 285-8668 (JP); ARITA Kazuo, Sakura-shi, Chiba 285-8668 (JP)
(74) Representative: TBK
(86) International application number: PCT/JP2024/037393
(87) International publication number: WO 2025/105121

(57) **Abstract**

To provide a curable resin composition that is excellent in adhesiveness, flexibility, and dismantling properties of a cured article as a curable resin composition, a cured article thereof, and a dismantlable adhesive material. The curable resin composition of the present embodiment contains an epoxy resin (A) having a specific structure and having an epoxy equivalent of from 500 to 10000 g/eq; an epoxy resin (B) having an epoxy equivalent of from 100 to 300 g/eq; a curable functional group-containing compound (C); and thermally expandable particles (D). The curable functional group-containing compound (C) has a specific structure having a reversible binding.

## Description

### TECHNICAL FIELD

The present invention relates to a curable resin composition, a cured article, and a dismantlable adhesive material composed of the cured article. The present application claims priority from JP 2023-195113, filed in Japan on November 16, 2023, the contents of which are incorporated herein by reference.

### BACKGROUND ART

A cured article obtained from an epoxy resin is excellent in heat resistance, mechanical strength, electrical properties, adhesiveness, and the like, and is an indispensable material in various fields such as electricity/electronics, coating materials, and adhesives.

On the other hand, a cured article using a thermosetting resin such as an epoxy resin has low long-term reliability, and for example, when the cured article of an epoxy resin is oxidatively deteriorated, cracks may occur.

In addition, a cured article obtained by temporarily curing a thermosetting resin such as an epoxy resin cannot be dissolved (is insoluble) in a solvent, and does not dissolve (is infusible) even at a high temperature. For this reason, the cured article is poor in recyclability and reusability, and the cured article after use becomes a waste. Thus, it is a problem to realize reduction of waste and reduction of environmental load.

Thus, a cured article using an epoxy resin or the like is required to solve problems such as extension of its life and reduction of waste, and it is considered that imparting easily dismantlable properties to the cured article is effective for solving these problems.

For example, as a technique for reducing the weight of automobiles, airplanes, and the like, it is essential to improve performance of an adhesive for structural materials. On the other hand, achievement of high adhesive performance is also a factor of producing a product that is difficult to recycle, and dismantling properties and reusability after use are limited. In the background of the recent increase in environmental awareness, it is also important to develop an adhesive that can be easily peeled off after the use period while maintaining high adhesion performance. Under such a background, development of an easily dismantlable adhesive has been actively conducted. In general, thermal melting of a thermoplastic resin is often used, but in recent years, there has also been proposed a technique in which a thermally expandable material or a thermally decomposable compound is mixed with a thermosetting resin in advance, and thermal energy is mainly applied after use to reduce adhesive strength for peeling (see Patent Documents 1 and 2, for example).

### CITATION LIST

### PATENT DOCUMENT

Patent Document 1: JP 2003-286464 A
Patent Document 2: JP 2013-256557 A

### SUMMARY OF INVENTION

### TECHNICAL PROBLEM

However, in the technique of Patent Document 1, a known curable resin composition is basically used as an adhesive. Thus, foaming due to the thermally expandable material in the cured article (adhesive layer) is less likely to be sufficiently developed. As a result, the adhesive layer is not cleanly removed in some cases because of insufficient peelability or the hardness of the adhesive layer.
In the technique of Patent Document 2, a thermally decomposable compound is contained in advance. Thus, it is necessary to highly control the heating temperature at the time of curing reaction. The technique has a complication in use like this. In particular, when a metal base material having high thermal conductivity is used, there may be a possibility that the adhesive is excessively heated at an unexpected place, and a defect occurs. In addition, the adhesive after being dismantled is discarded, and there is a problem that the base material, which is an adhesive to be bound, is recyclable, but the recyclability as a whole is insufficient.
Thus, an object of the present invention is to provide a curable resin composition excellent in adhesiveness, flexibility, and dismantling properties of a cured article as a curable resin, a cured article thereof, and a dismantlable adhesive material composed of the cured article.

### SOLUTION TO PROBLEM

As a result of intensive studies, the inventors of the present invention have found that the above-described problems can be solved by using a curable functional group-containing compound having a specific structure and an epoxy resin having a specific structure and blending thermally expandable particles in a resin composition, and have completed the invention.

That is, the present invention includes the following aspects.
[1] A curable resin composition containing:
   an epoxy resin (A) represented by General Formula (1) shown below and having an epoxy equivalent of from 500 to 10000 g/eq;
   an epoxy resin (B) having an epoxy equivalent of from 100 to 300 g/eq;
   a curable functional group-containing compound (C) represented by General Formula (4-1) or (4-2) shown below; and
   thermally expandable particles (D): 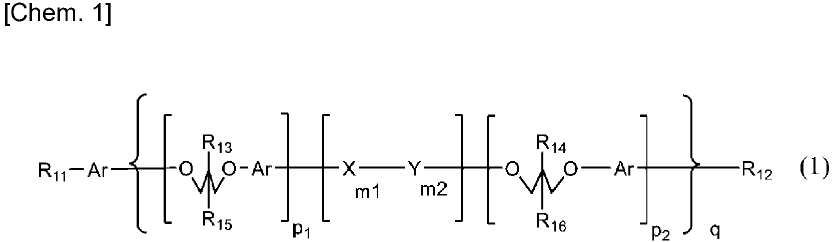
   where in Formula (1), Ar each independently represents a structure having an unsubstituted or substituted aromatic ring,
   X is a structural unit represented by General Formula (2) shown below, and Y is a structural unit represented by General Formula (3) shown below: 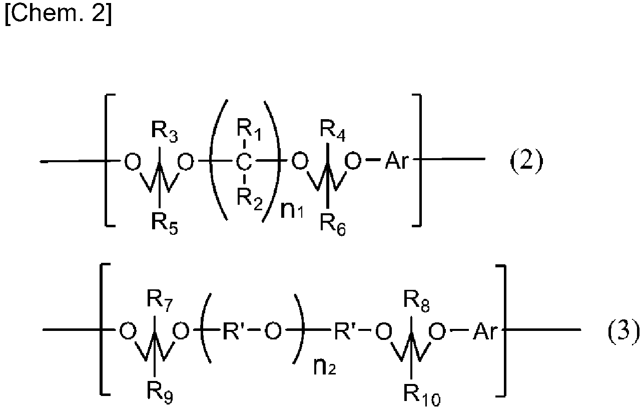
   where in Formulae (2) and (3), Ar is the same as described above,
   R₁ and R₂ are each independently a hydrogen atom, a methyl group, or an ethyl group,
   R' is a divalent hydrocarbon group having from 2 to 12 carbon atoms,
   R₃, R₄, R₇, and R₈ are each independently a hydroxyl group, a glycidyl ether group, or a 2-methylglycidyl ether group,
   R₅, R₆, R₉, and R₁₀ are each independently a hydrogen atom or a methyl group, n1 is an integer of from 4 to 16,
   n2 is an average value of repeating units and is from 2 to 30;
   R₁₁ and R₁₂ are each independently a glycidyl ether group or a 2-methylglycidyl ether group,
   R₁₃ and R₁₄ are each independently a hydroxyl group, a glycidyl ether group, or a 2-methylglycidyl ether group,
   R₁₅ and R₁₆ are a hydrogen atom or a methyl group,
   m1, m2, p1, p2, and q are average values of repetition,
   m1 and m2 are each independently from 0 to 25 and satisfy m1 + m2 ≥ 1,
   p1 and p2 are each independently from 0 to 5, and
   q is from 0.5 to 5, provided that a bond between X represented by General Formula (2) and Y represented by General Formula (3) is optionally random or block, and a total number of structural units X or Y present in one molecule is m1 or m2, respectively: 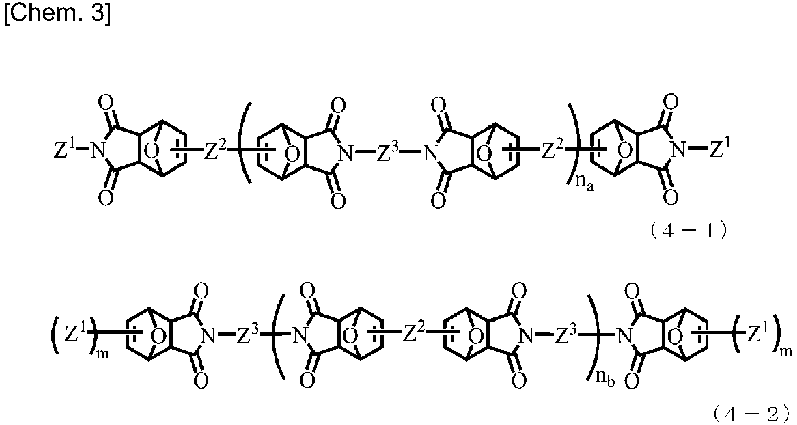
   where in Formulae (4-1) and (4-2), a furan-derived structure optionally includes a halogen atom, an alkoxy group, an aralkyloxy group, an aryloxy group, a nitro group, an amide group, an alkyloxycarbonyl group, an aryloxycarbonyl group, a cyano group, an alkyl group, a cycloalkyl group, an aralkyl group, or an aryl group as a substituent, nₐ and n_{b} are each independently from 0 to 10 as an average value of repetition numbers, m is an integer of from 1 to 4, Z¹ is any of structures represented by Formula (5) shown below, Z² is any of structures represented by Formulae (6A) and (6B) shown below, Z³ is any of structures represented by Formulae (7-1) to (7-3) shown below, and a plurality of structures in one molecule are optionally the same or different: 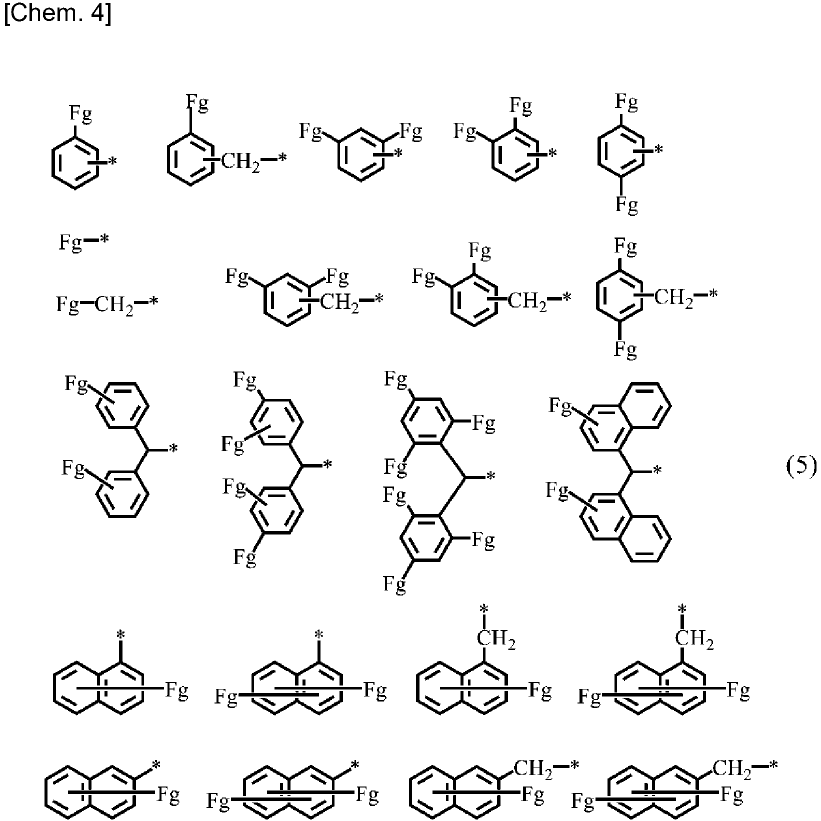
   where in Formula (5), an aromatic ring is optionally substituted or unsubstituted, and * represents a binding point, Fg is a curable functional group, and -Fg on a naphthalene ring indicates that it is optionally bound to any position: 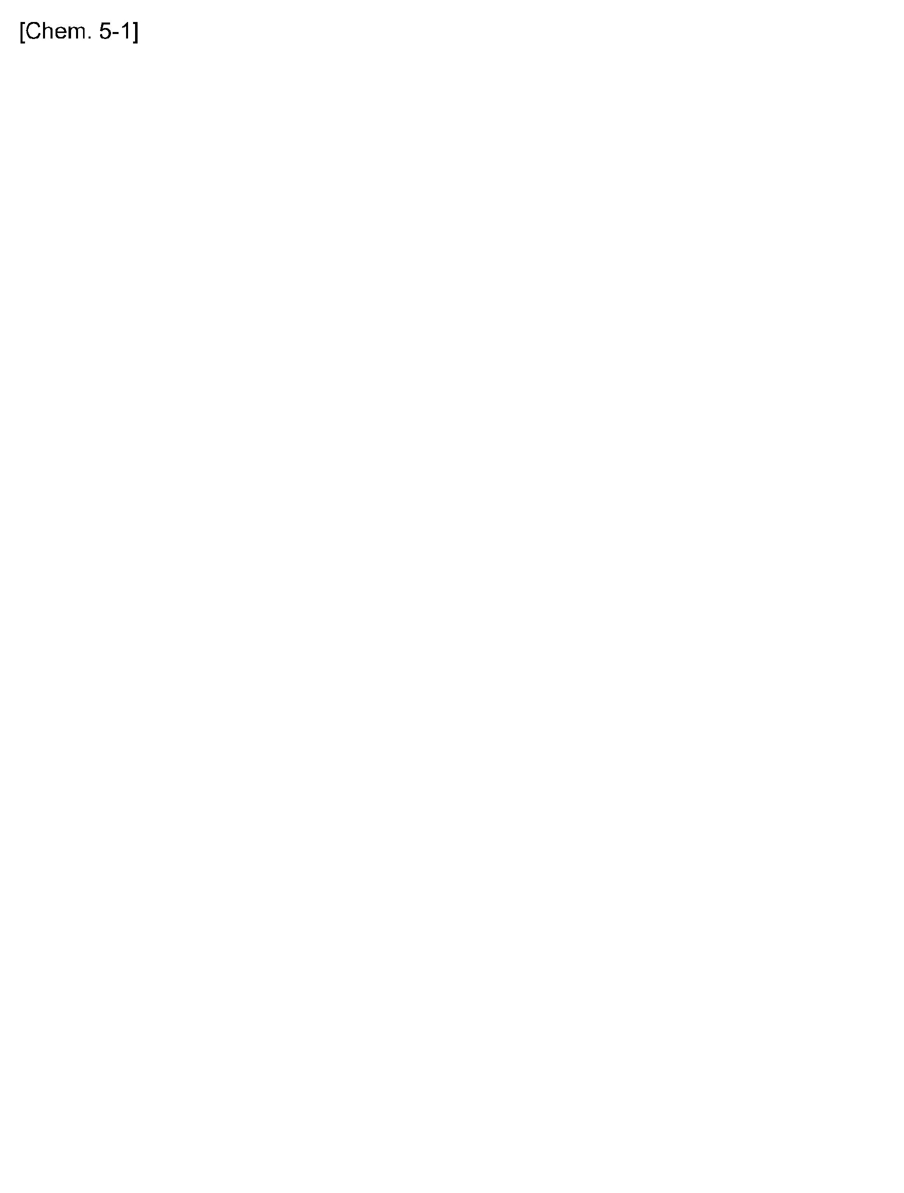 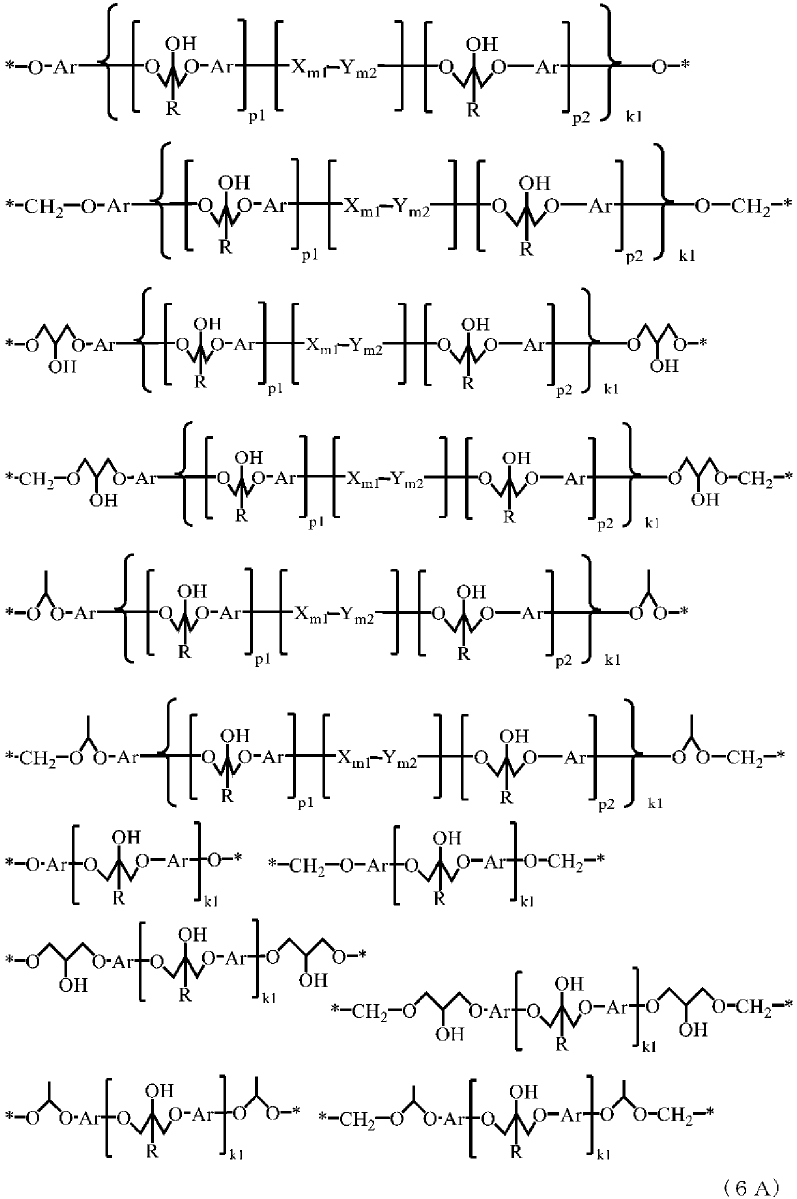 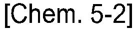 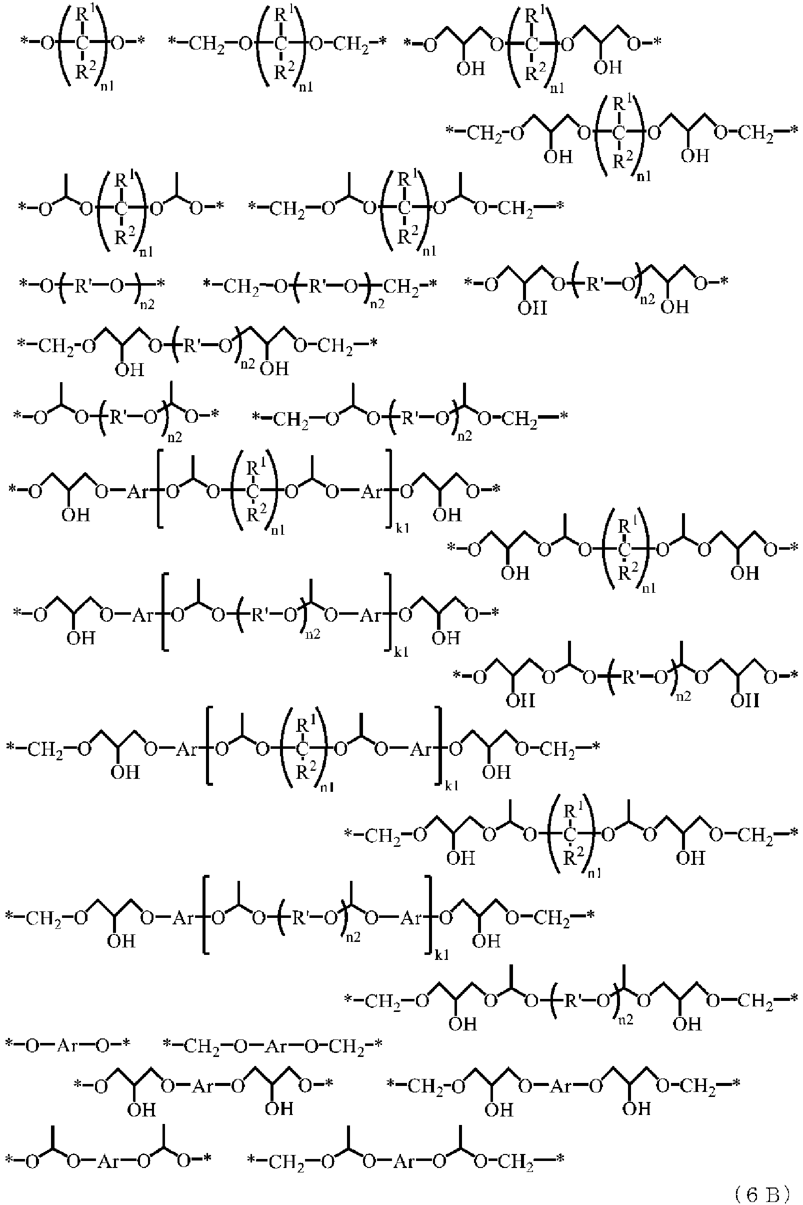
   where in Formulae (6A) and (6B), Ar each independently represents an unsubstituted or substituted aromatic ring-containing structure,
   R¹ and R² are each independently a hydrogen atom, a methyl group, or an ethyl group,
   R is a hydrogen atom or a methyl group,
   R' is a divalent hydrocarbon group having from 2 to 12 carbon atoms,
   n1 is an integer of from 4 to 16, and n2 is an average value of repeating units and is from 2 to 30;
   k1 is an average of repetition numbers and ranges from 0.5 to 5;
   p1 and p2 are each independently from 0 to 5,
   X is a structural unit represented by Formula (6-1) shown below, and Y is a structural unit represented by Formula (6 -2) shown below; 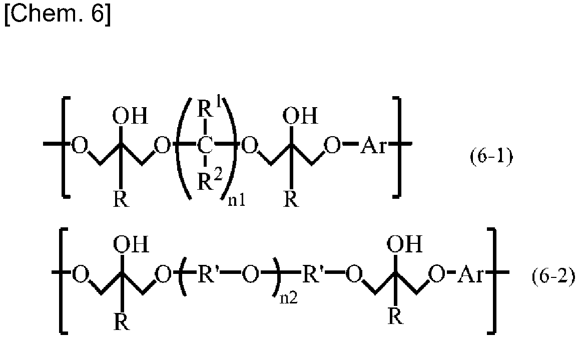
   where in Formulae (6-1) and (6-2), Ar, R, R¹, R², R', n1, and n2 are the same as described above;
   m1 and m2 are average values of repetition, each independently from 0 to 25, and satisfy m1 + m2 ≥ 1,
   provided that a bond between the structural unit X represented by Formula (6-1) and the structural unit Y represented by Formula (6-2) is optionally random or block, and a total number of structural units X or Y present in one molecule is m1 or m2, respectively: 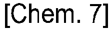 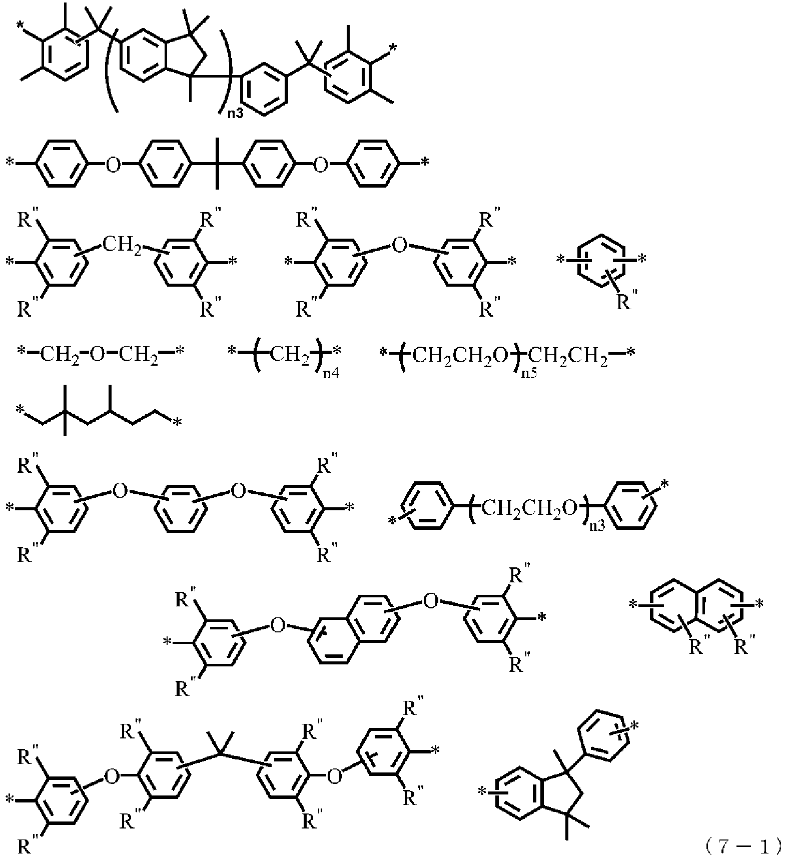 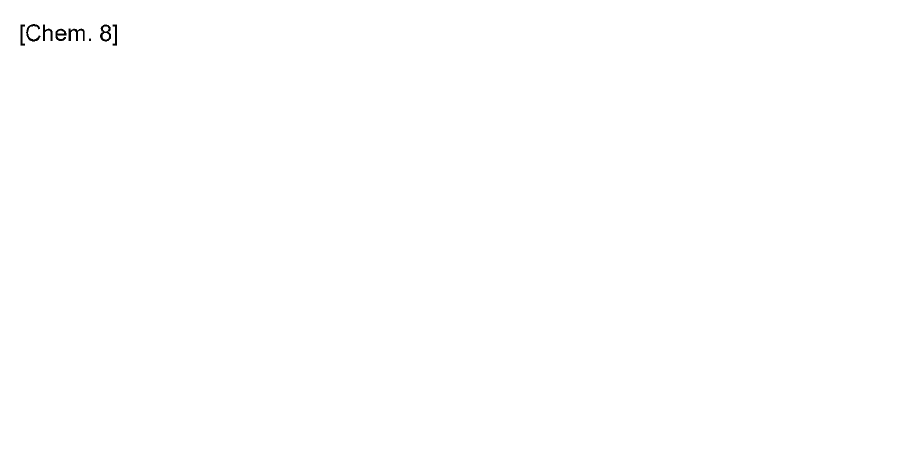 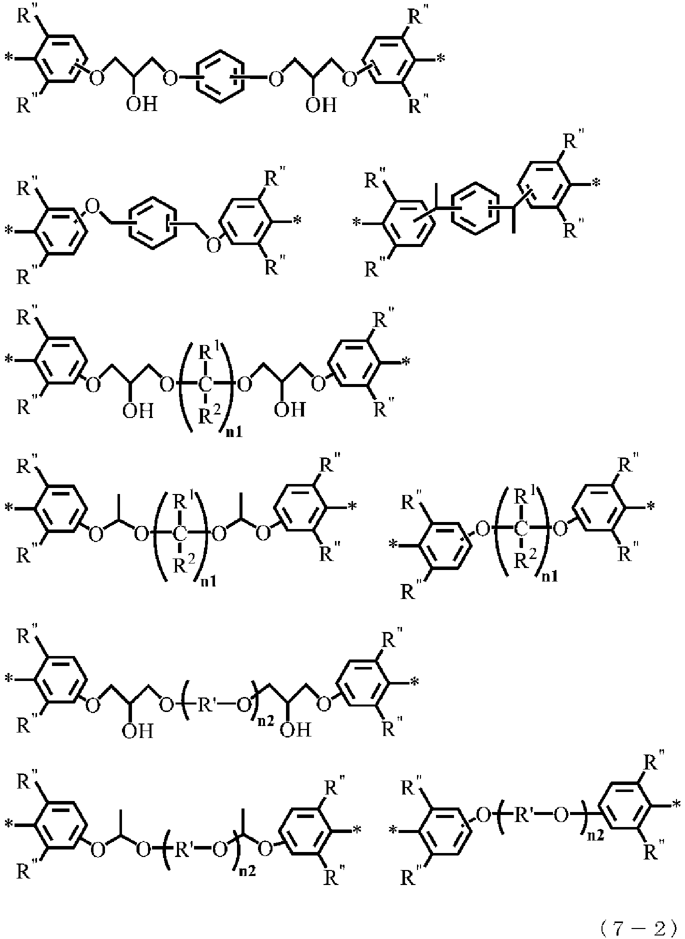 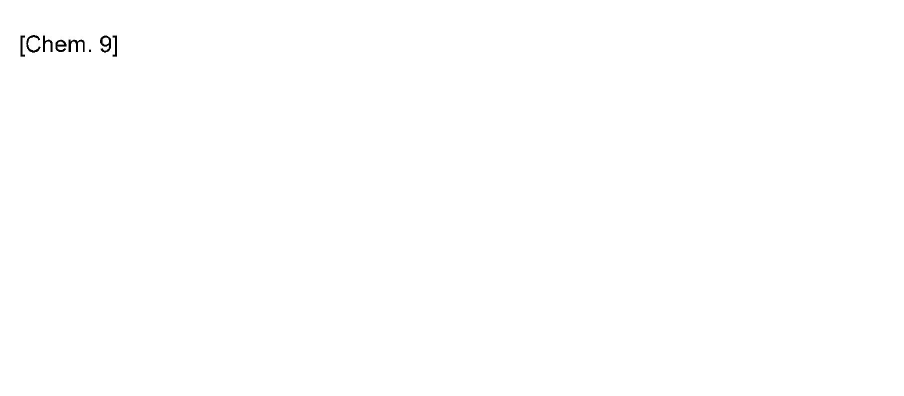 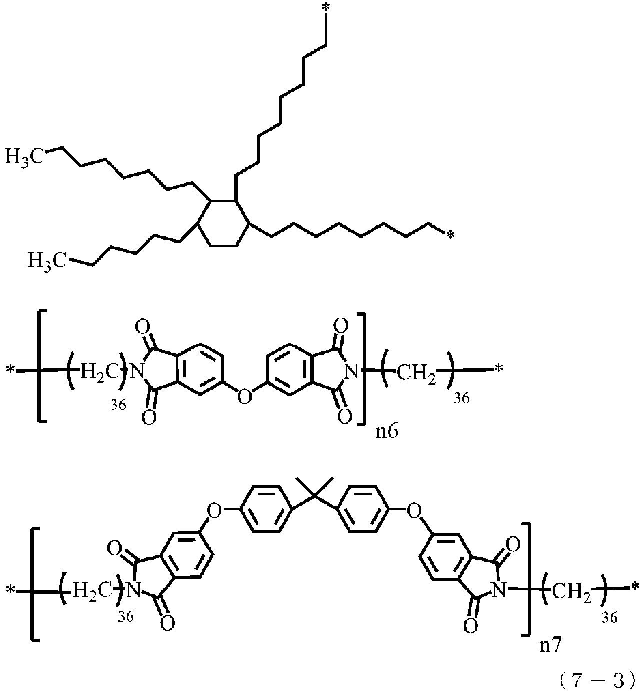
   where in Formulae (7-1) to (7-3), n3 and n5 are average values of repetition numbers and are each from 0.5 to 10, n4 is an integer of from 1 to 16, and R" is each independently a hydrogen atom, a methyl group, or an ethyl group.
[2] The curable resin composition according to [1], wherein the curable functional group-containing compound (C) is a hydroxyl group-containing compound or an amine group-containing compound.
[3] The curable resin composition according to [1] or [2], wherein a concentration of a reversible binding in the curable functional group-containing compound (C) is 0.10 mmol/g or more relative to a total mass of curable components in the curable resin composition.
[4] The curable resin composition according to any of [1] to [3], further containing an epoxy resin curing agent other than the curable functional group-containing compound (C).
[5] The curable resin composition according to any of [1] to [4], wherein a mass ratio (A):(B) between the epoxy resin (A) and the epoxy resin (B) is from 90:10 to 10:90.
[6] The curable resin composition according to any of [1] to [5], wherein the thermally expandable particles (D) are at least one type selected from the group consisting of thermally expandable microcapsules and expanded graphite.
[7] The curable resin composition according to any of [1] to [6], wherein a proportion of the thermally expandable particles (D) to be used is in a range of from 3 to 40 parts by mass per 100 parts by mass of a total of the epoxy resin (A) and the epoxy resin (B).
[8] A cured article produced by curing the curable resin composition described in any of [1] to [6].
[9] A laminated product including a base material and a layer containing the cured article described in [8].
[10] A heat-resistant member containing the cured article described in [8].
[11] A dismantlable adhesive material containing the curable resin composition described in any of [1] to [6].
[12] A dismantling method using the dismantlable adhesive material described in [11], the method including:
   a bonding step of attaching the dismantlable adhesive material to a surface of an adherend and bonding the dismantlable adhesive material to the adherend;
   a curing step of curing the dismantlable adhesive material to produce a cured article,
   a heat treatment step of performing a heat treatment on the cured article to thermally dissociate a reversible binding derived from the curable functional group-containing compound (C) and contained in either General Formula (4-1) or (4-2) and expand the thermally expandable particles (D); and
   a dismantling step of dismantling the adherend and the cured article.
[13] The dismantling method according to [12], further including, after the heat treatment step and before the dismantling step, a cooling step of cooling the cured article after the heat treatment to room temperature.

### ADVANTAGEOUS EFFECTS OF INVENTION

The present invention can provide a curable resin composition excellent in adhesiveness, flexibility, and dismantling properties of a cured article.

### DESCRIPTION OF EMBODIMENTS

Next, embodiments for carrying out the present invention will be described in detail. It should be understood that the present invention is not limited to the following embodiments, and that design changes, improvements, and the like are appropriately made based on ordinary knowledge of those skilled in the art without departing from the spirit of the present invention.

### Curable Resin Composition

A curable resin composition as one embodiment (present embodiment) of the present invention is a curable resin composition containing: an epoxy resin (A) represented by General Formula (1) shown above and having an epoxy equivalent of from 500 to 10000 g/eq; an epoxy resin (B) having an epoxy equivalent of from 100 to 300 g/eq; a curable functional group-containing compound (C) represented by either General Formula (4-1) or (4-2) shown above; and thermally expandable particles (D).

In the curable resin composition of the present embodiment, the curable functional group-containing compound (C) is preferably a hydroxyl group-containing compound or an amine group-containing compound. As necessary, the curable resin composition of the present embodiment may contain an additional epoxy resin other than the epoxy resin (A), the epoxy resin (B), or the curable functional group-containing compound (C) according to the present embodiment. As necessary, the curable resin composition of the present embodiment may contain an epoxy resin curing agent that does not belong to the curable functional group-containing compound (C), a curing accelerator, another thermosetting resin or thermoplastic resin, a non-halogen-based flame retardant, a filler that does not belong to the thermally expandable particles (D) according to the present embodiment, a dispersion medium, or the like. Hereinafter, each component will be described in detail.

### Epoxy Resin (A)

The epoxy resin (A) contained in the curable resin composition of the present embodiment is an epoxy resin represented by General Formula (1) shown below and having an epoxy equivalent of from 500 to 10000 g/eq. 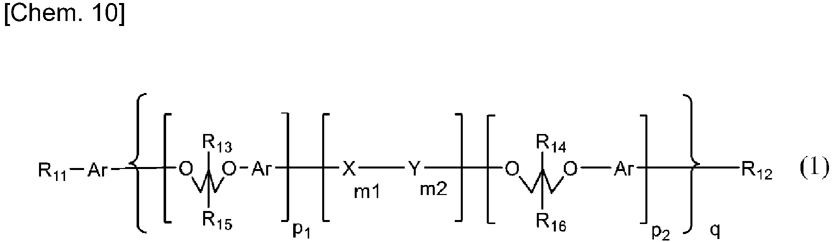
where in Formula (1), Ar each independently represents a structure having an unsubstituted or substituted aromatic ring,
X is a structural unit represented by General Formula (2) shown below, and Y is a structural unit represented by General Formula (3) shown below: 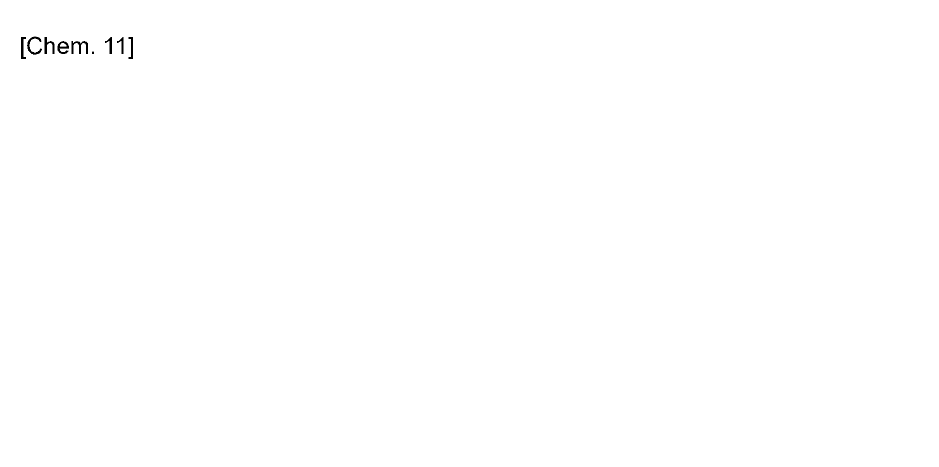 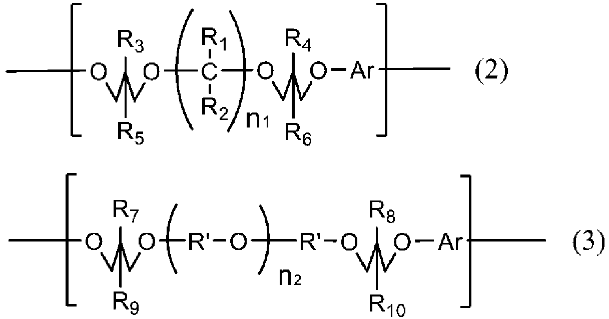
where in Formulae (2) and (3), Ar is the same as described above,
R₁ and R₂ are each independently a hydrogen atom, a methyl group, or an ethyl group,
R' is a divalent hydrocarbon group having from 2 to 12 carbon atoms,
R₃, R₄, R₇, and R₈ are each independently a hydroxyl group, a glycidyl ether group, or a 2-methylglycidyl ether group,
R₅, R₆, R₉, and R₁₀ are each independently a hydrogen atom or a methyl group, n1 is an integer of from 4 to 16,
n2 is an average value of repeating units and is from 2 to 30;
R₁₁ and R₁₂ are each independently a glycidyl ether group or a 2-methylglycidyl ether group,
R₁₃ and R₁₄ are each independently a hydroxyl group, a glycidyl ether group, or a 2-methylglycidyl ether group,
R₁₅ and R₁₆ are a hydrogen atom or a methyl group,
m1, m2, p1, p2, and q are average values of repetition,
m1 and m2 are each independently from 0 to 25 and satisfy m1 + m2 ≥ 1,
p1 and p2 are each independently from 0 to 5, and
q is from 0.5 to 5, provided that a bond between X represented by General Formula (2) and Y represented by General Formula (3) may be random or block, and a total number of structural units X or Y present in one molecule is m1 or m2, respectively.

The curable resin composition contains the structural unit X represented by General Formula (2) and/or the structural unit Y represented by General Formula (3) in the above-described structure, and the presence of an alkylene chain or a polyether chain in each structural unit allows the cured article to exhibit high flexibility. In particular, the flexibility with the alkylene chain can follow the thermal expansion of the base material when the alkylene chain is used as an adhesive, and the polyether chain can contribute to improvement of application properties and processability as a curable resin composition, from the viewpoint of having an effect of lowering the viscosity of the epoxy resin (A) itself.

In the epoxy resin (A), each of the structural units X and Y may be independently contained, or both of the structural units X and Y may be contained in one molecule. In these cases, X and Y may be a block bond or a random bond, and indicate that the total number of structural units X and Y contained in one molecule is m1 and m2, respectively.

Ar in General Formula (1) representing the epoxy resin (A), Ar in General Formula (2) representing the structural unit X, and Ar in General Formula (3) representing the structural unit Y each have an unsubstituted or substituted aromatic ring. The aromatic ring is not particularly limited, and examples thereof include a benzene ring, a naphthalene ring, an anthracene ring, a phenanthrene ring, and a fluorene ring.

Among these, Ar is preferably any of the structures represented by Structural Formulae (ar) shown below. 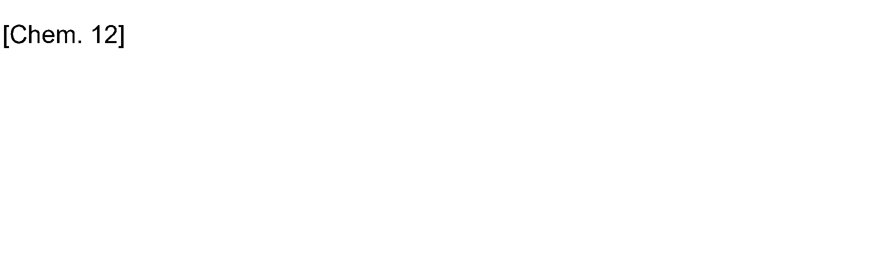 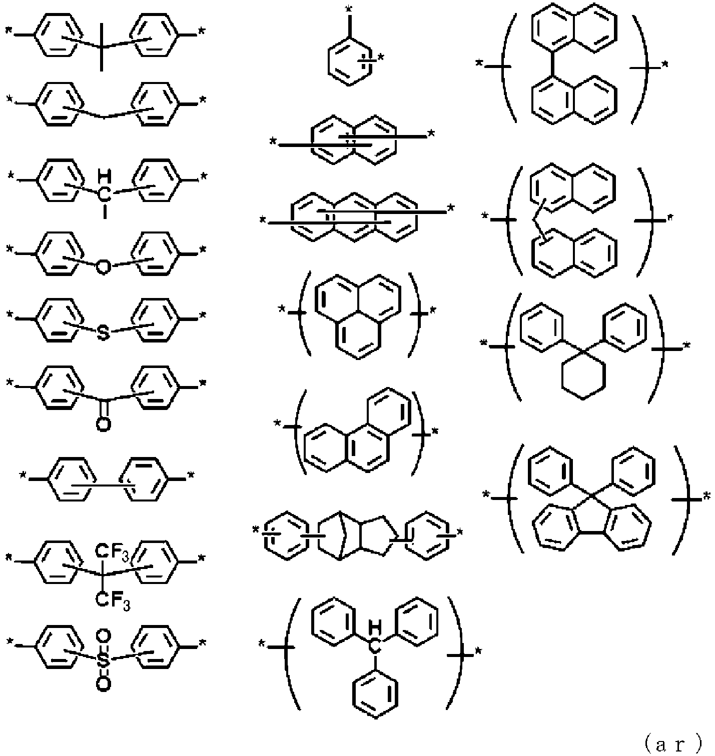 In Formula (ar), an aromatic ring may be substituted or unsubstituted, and * represents a binding point.

In addition, the structures represented by the following formulae are also exemplified as Ar. 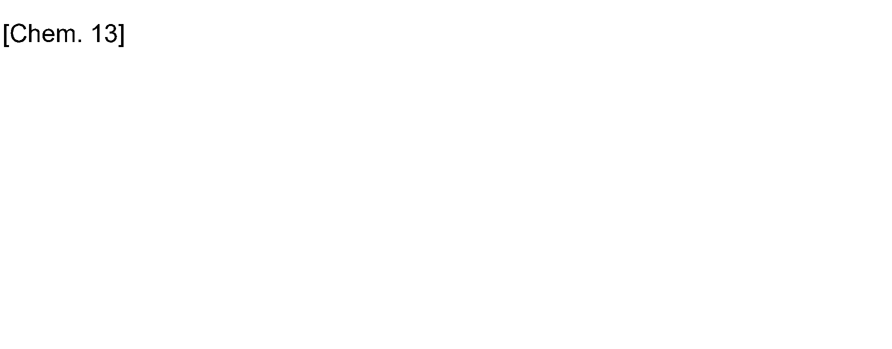 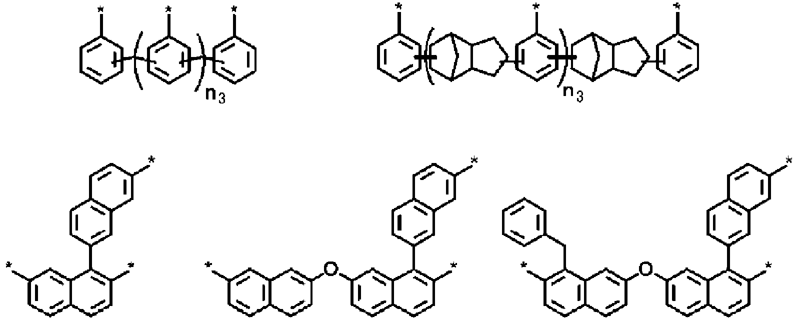 In the formulae, an aromatic ring may be substituted or unsubstituted, n3 = from 1 to 4 is satisfied, and * represents a binding point.

The aromatic rings of Ar may be substituted or unsubstituted, and when Ar has a substituent, preferable examples of the substituent include an alkyl group, a halogen atom, a glycidyl ether group, and a 2-methylglycidyl ether group. The aromatic rings are preferably unsubstituted, or the substituent is preferably an alkyl group, a glycidyl ether group, or a 2-methylglycidyl ether group. The number of substituents per aromatic ring is preferably 2 or less, more preferably 1 or less, and particularly preferably, the aromatic ring is unsubstituted.

The structure of Ar is particularly preferably as follows. * represents a binding point.

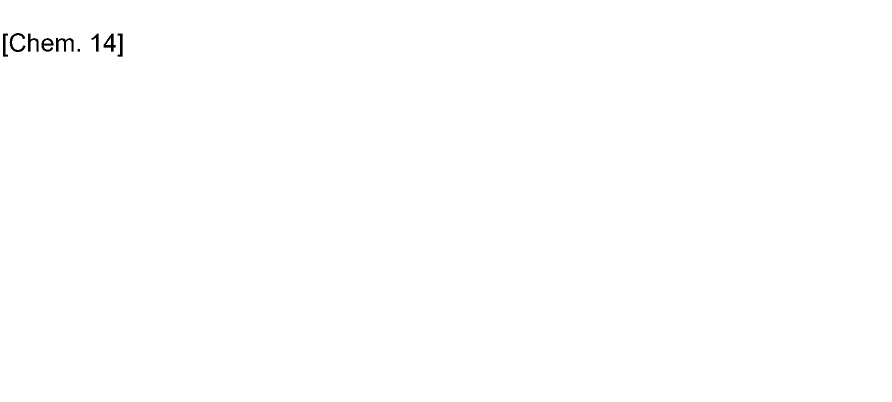

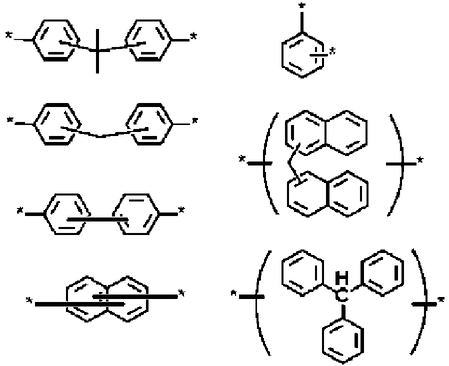

Examples of a particularly preferable structure as Ar having a substituent include the following structures. * represents a binding point. 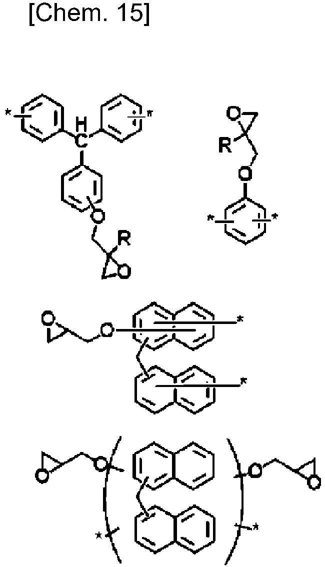 R is a hydrogen atom or a methyl group.

In the structural unit X represented by General Formula (2), the repeating unit n1 is an integer of from 4 to 16. When n1 is 4 or more, the adhesive strength improves, and the deformation mode of the cured article becomes elastic deformation. When n1 is 16 or less, a decrease in crosslinking density can be suppressed. n1 is preferably from 4 to 15, more preferably from 6 to 12.

In the structural unit X represented by General Formula (2), R¹ and R² are each independently a hydrogen atom, a methyl group, or an ethyl group, R³ and R⁴ are each independently a hydroxyl group, a glycidyl ether group, or a 2-methylglycidyl ether group, and R⁵ and R⁶ are each independently a hydrogen atom or a methyl group.

Among these, R³ and R⁴ are preferably a hydroxyl group, and R⁵ and R⁶ are preferably a hydrogen atom.

In the structural unit Y represented by General Formula (3), n2 is an average value of repeating units and is from 2 to 30. When n2 is within this range, a favorable balance between the viscosity of the epoxy resin (A) and the crosslinking density of the resulting cured article is obtained, which is preferable. It is preferably from 2 to 25, more preferably from 4 to 20.

In the structural unit Y represented by General Formula (3), R' is a divalent hydrocarbon group having from 2 to 12 carbon atoms. When the number of carbon atoms in the hydrocarbon group is within this range, the adhesive strength improves, and the deformation mode of the cured article becomes elastic deformation. Preferably, R' is a divalent hydrocarbon group having from 2 to 6 carbon atoms.

The divalent hydrocarbon group is not particularly limited, and examples thereof include a linear or branched alkylene group, an alkenylene group, an alkynylene group, a cycloalkylene group, an arylene group, and an aralkylene group (a divalent group having an alkylene group and an arylene group).

Examples of the alkylene group include a methylene group, an ethylene group, a propylene group, a butylene group, a pentylene group, a hexylene group, a trimethylene group, a tetramethylene group, a pentamethylene group, and a hexamethylene group. Examples of the alkenylene group include a vinylene group, a 1-methylvinylene group, a propenylene group, a butenylene group, and a pentenylene group. Examples of the alkynylene group include an ethynylene group, a propynylene group, a butynylene group, a pentynylene group, and a hexynylene group. Examples of the cycloalkylene group include a cyclopropylene group, a cyclobutylene group, a cyclopentylene group, and a cyclohexylene group. Examples of the arylene group include a phenylene group, a tolylene group, a xylylene group, and a naphthylene group.

Among these, an ethylene group, a propylene group, and a tetramethylene group are preferable from the viewpoint of balance between availability of raw materials, viscosity of the resulting epoxy resin (A), and flexibility as a cured article.

In the structural unit Y represented by General Formula (3), R⁷ and R⁸ are each independently a hydroxyl group, a glycidyl ether group, or a 2-methylglycidyl ether group, and R⁹ and R¹⁰ are each independently a hydrogen atom or a methyl group. R⁷ and R⁸ are preferably a hydroxyl group, and R⁹ and R¹⁰ are preferably a hydrogen atom.

As described above, the epoxy resin (A) used in the present embodiment is represented by General Formula (1). m1 and m2 in General Formula (1) are average values of repetition of the structural unit X and the structural unit Y, respectively, and are each independently from 0 to 25, and satisfy m1 + m2 ≥ 1.

In General Formula (1), R¹¹ and R¹² are each independently a glycidyl ether group or a 2-methylglycidyl ether group, R¹³ and R¹⁴ are each independently a hydroxyl group, a glycidyl ether group, or a 2-methylglycidyl ether group, R¹⁵ and R¹⁶ are a hydrogen atom or a methyl group, p1, p2, and q are average values of repetition, p1 and p2 are each independently from 0 to 5, and q is from 0.5 to 5. Among these, R¹¹ and R¹² are preferably a glycidyl ether group, R¹³ and R¹⁴ are preferably a hydroxyl group, and R¹⁵ and R¹⁶ are preferably a hydrogen atom. In addition, p1 and p2 are preferably from 0 to 2, and q is preferably from 0.5 to 2.

Further, the epoxy equivalent of the epoxy resin (A) used in the present embodiment is from 500 to 10000 g/eq. When the epoxy equivalent is within this range, the resulting cured article has an excellent balance between flexibility and crosslinking density. From the viewpoint of ease of handling, and from the viewpoint of obtaining further balanced flexibility and crosslinking density, the epoxy equivalent is preferably in the range of from 600 to 8000 g/eq, more preferably in the range of from 800 to 5000 g/eq.

Among the epoxy resins (A) in the present embodiment, resins of the following structural formulae can be exemplified as epoxy resins having both the structural unit X and the structural unit Y in one molecule.

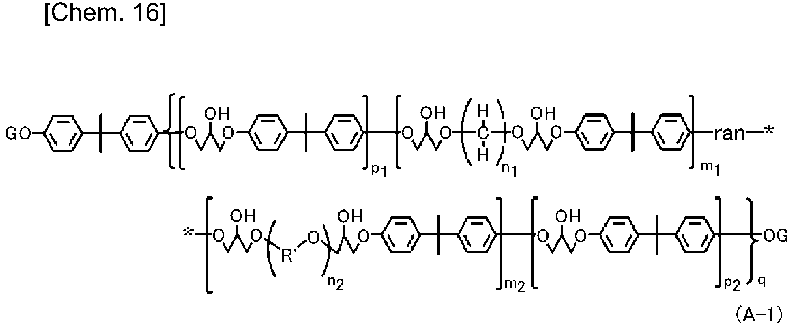

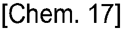

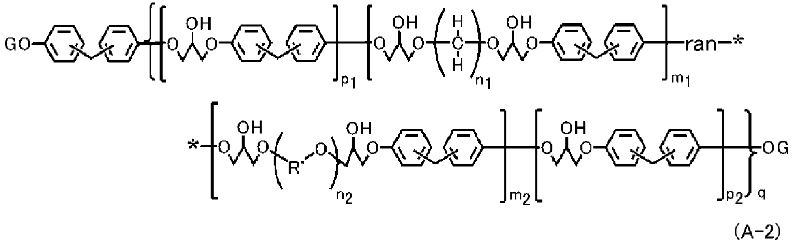

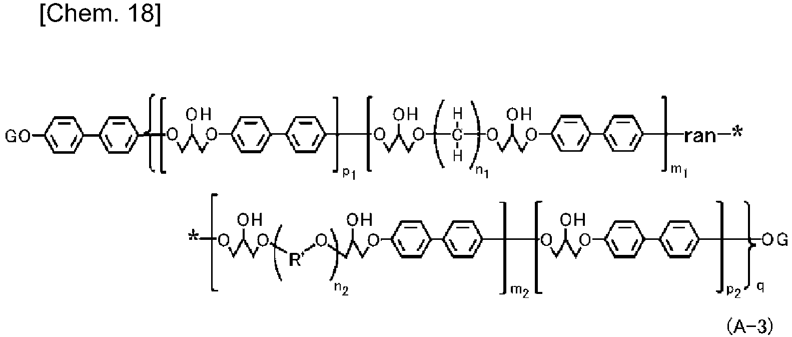

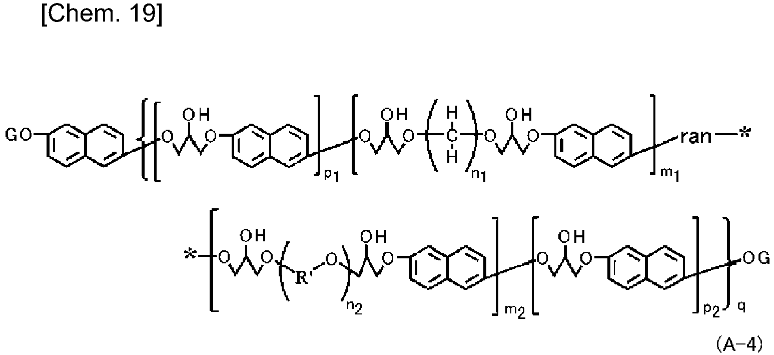

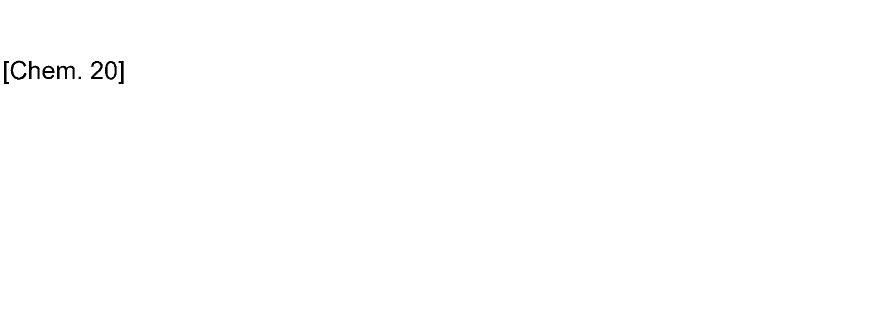

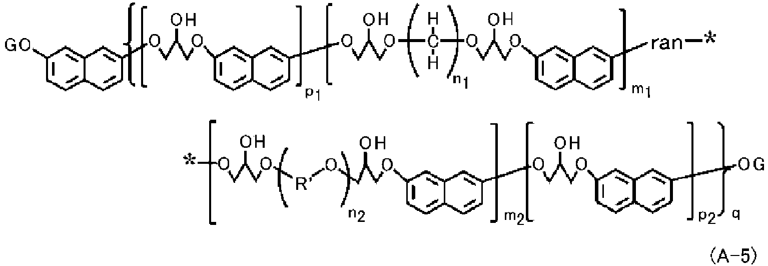

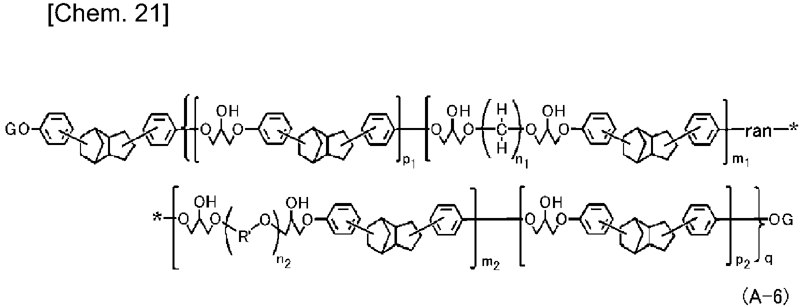

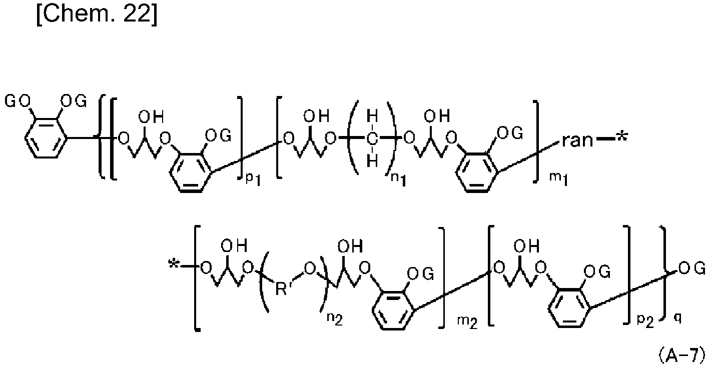

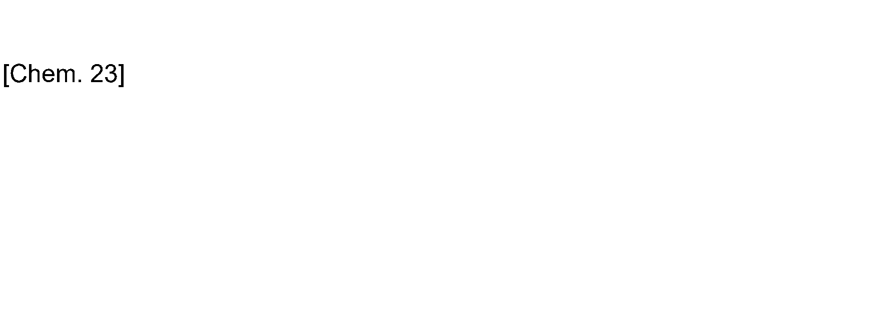

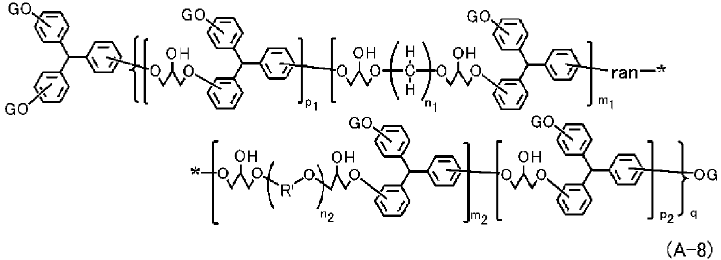

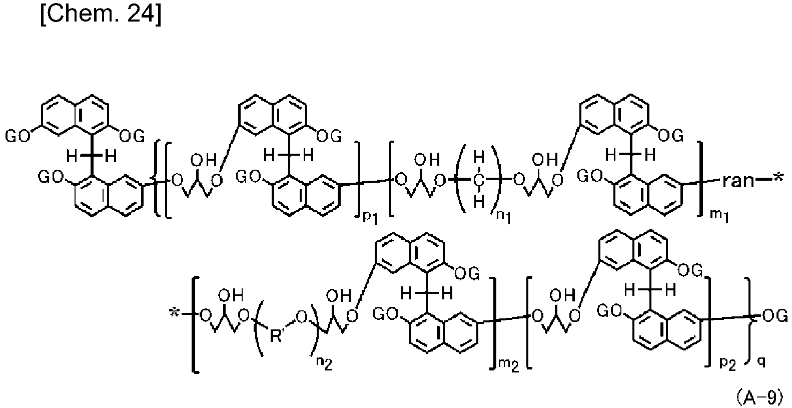

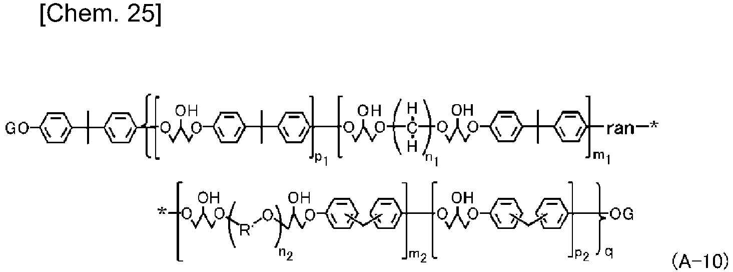

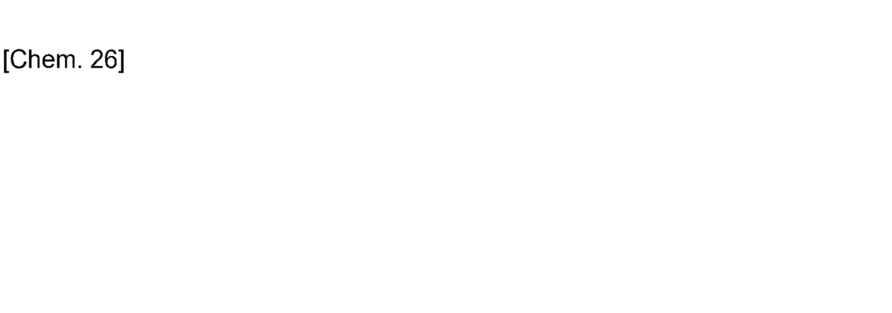

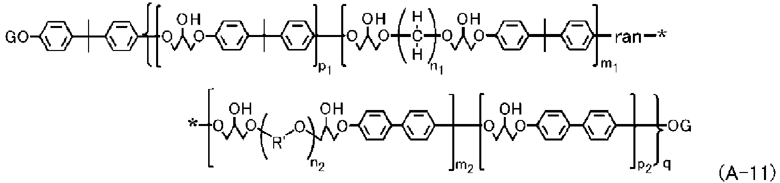

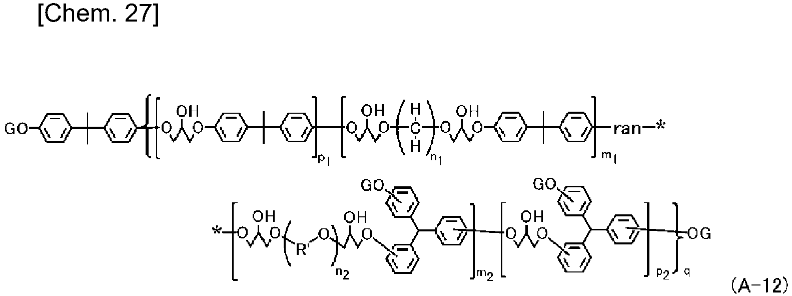

In each of the structural formulae (A-1) to (A-12), ran represents a random bond, G is a glycidyl group, R' represents a divalent hydrocarbon group having from 2 to 12 carbon atoms, n1 is an integer of from 4 to 16, n2 is an average value of repeating units and is from 2 to 30, m1, m2, p1, p2, and q are average values of repetition, m1 and m2 are each independently from 0.5 to 25, p1 and p2 are each independently from 0 to 5, and q is from 0.5 to 5. The repeating units present in the repeating unit may be the same or different.

Among the structural formulae described above, those represented by Structural Formulae (A-1), (A-2), (A-3), (A-5), (A-7), (A-8), and (A-9) are most preferably used from the viewpoint of obtaining further balanced physical properties in the resulting cured article.

Examples of the epoxy resin having the structural unit X in the epoxy resin (A) include resins represented by the following structural formulae.

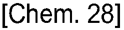

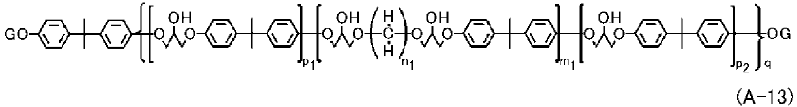

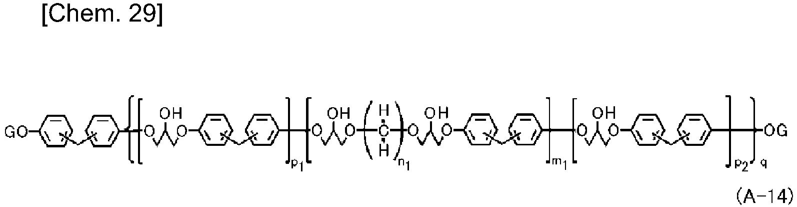

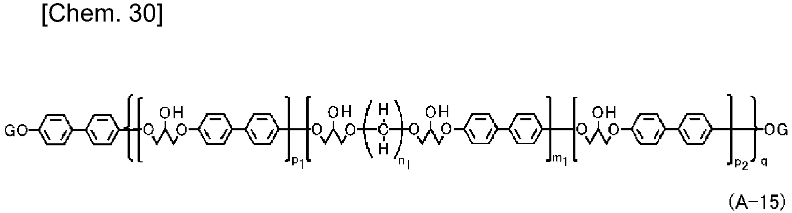

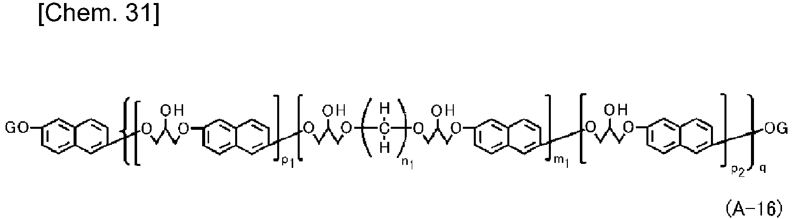

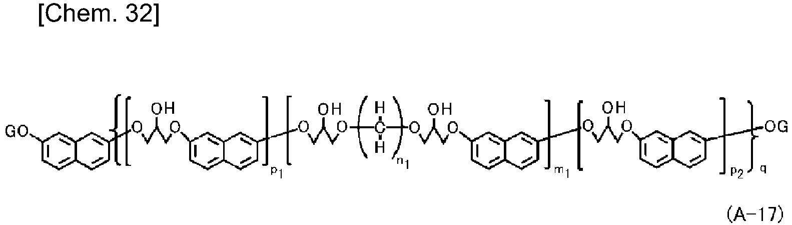

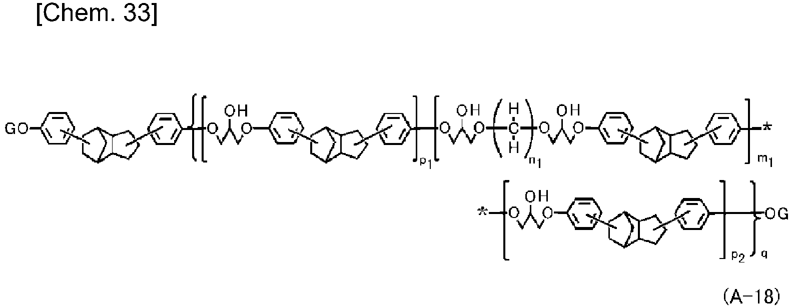

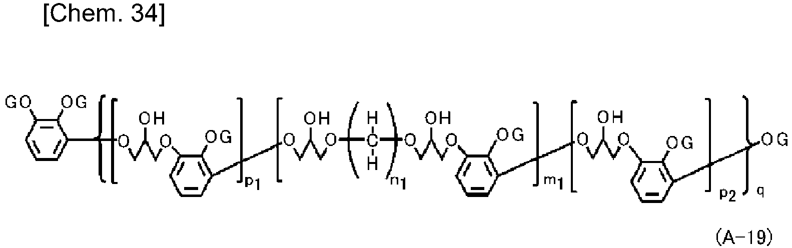

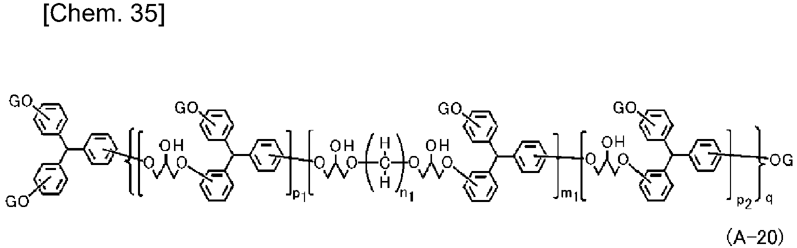

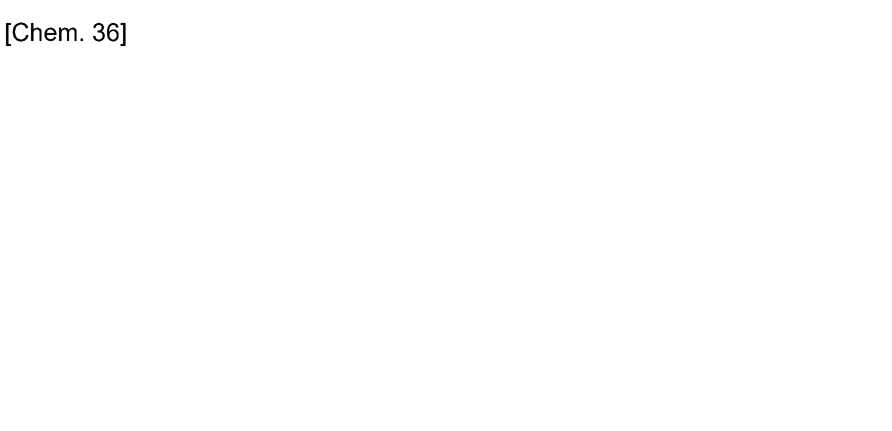

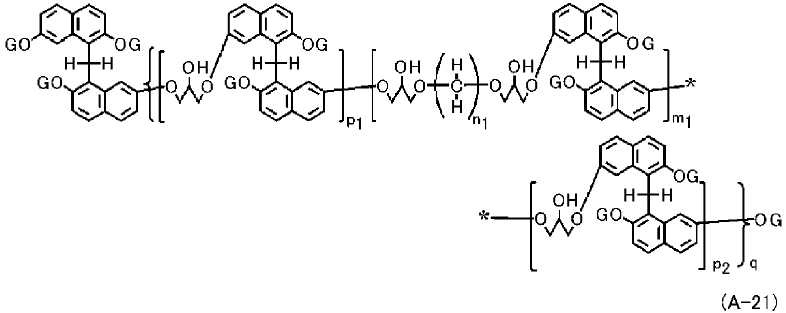

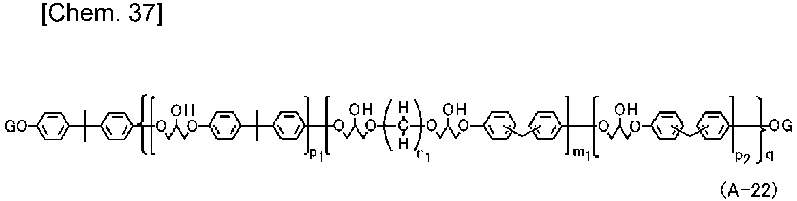

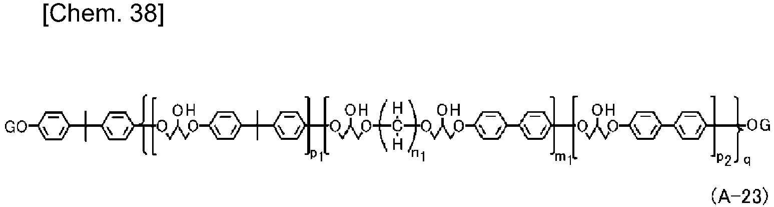

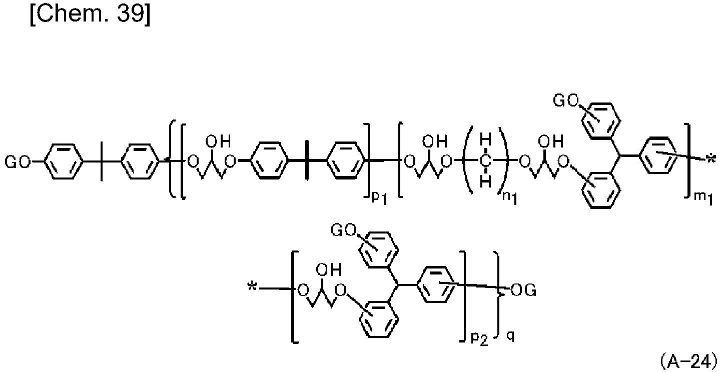

In Structural Formulae (A-13) to (A-24), G is a glycidyl group, n1 is an integer of from 4 to 16, m1, p1, p2, and q are average values of repetition, m1 is from 0.5 to 25, p1 and p2 are each independently from 0 to 5, and q is from 0.5 to 5. The repeating units present in the repeating unit may be the same or different.

Among the structural formulae described above, those represented by Structural Formulae (A-13), (A-14), (A-15), (A-17), (A-19), (A-20), and (A-21) are preferably used from the viewpoint of obtaining further balanced physical properties in the resulting cured article.

Examples of the epoxy resin having the structural unit Y in the epoxy resin (A) include resins represented by the following structural formulae.

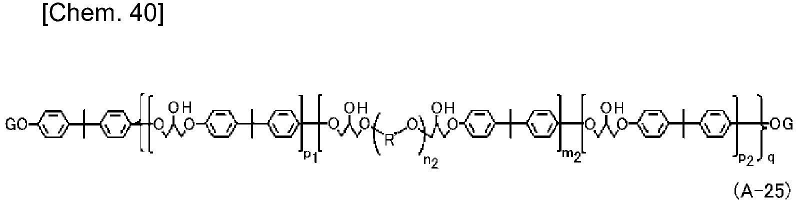

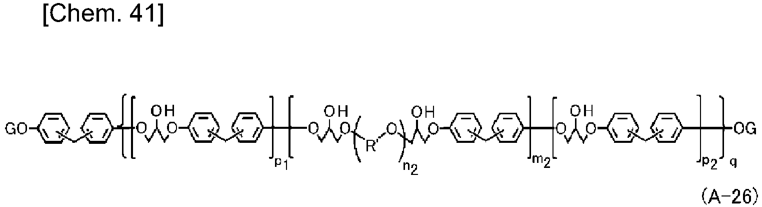

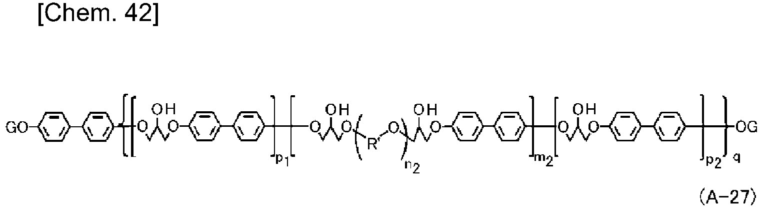

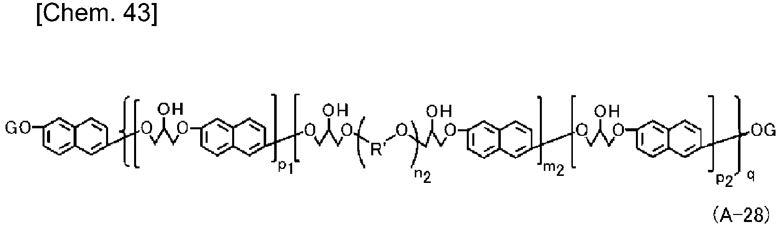

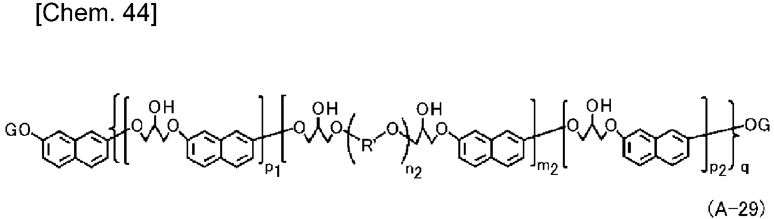

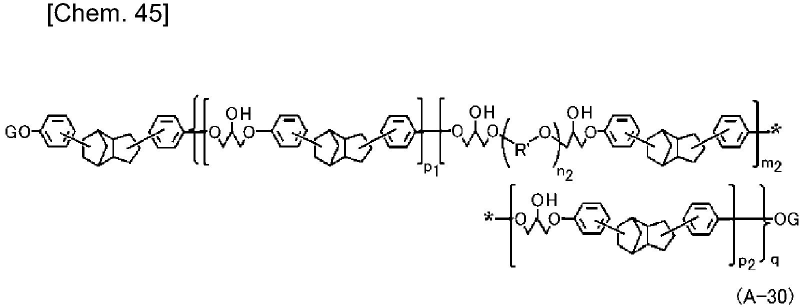

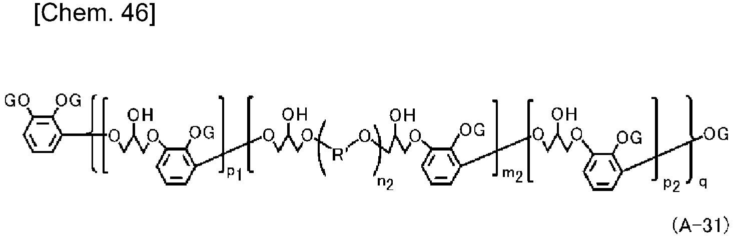

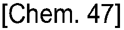

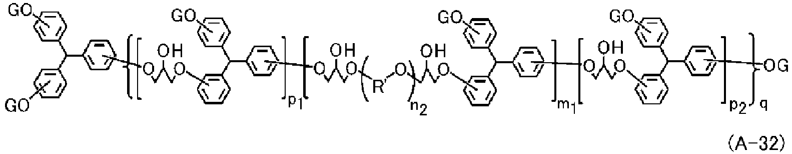

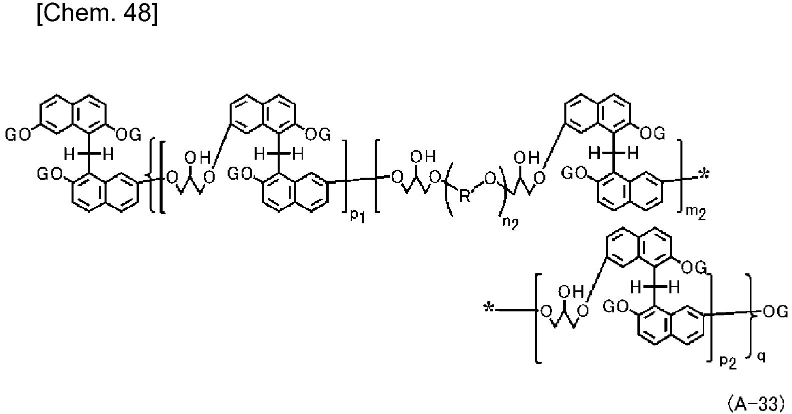

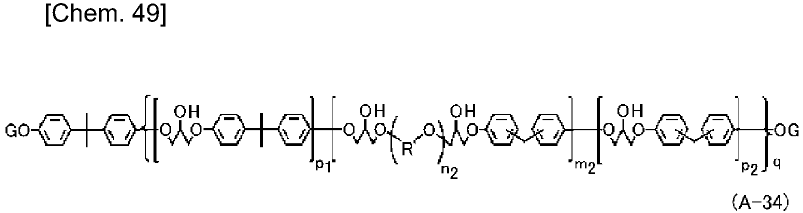

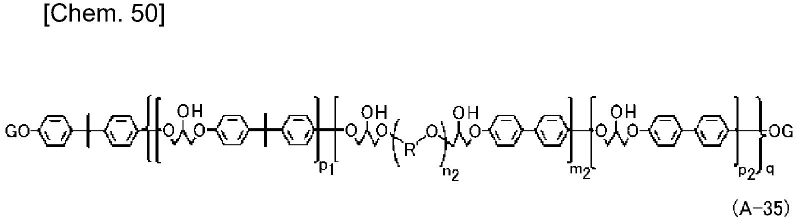

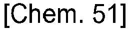

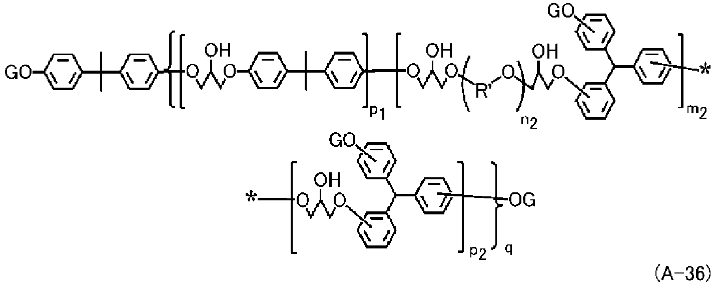

In Structural Formulae (A-25) to (A-36), G is a glycidyl group, R' is a divalent hydrocarbon group having from 2 to 12 carbon atoms, n2 is an average value of repeating units and is from 2 to 30, m2, p1, p2, and q are average values of repetition, m2 is from 0.5 to 25, p1 and p2 are each independently from 0 to 5, and q is from 0.5 to 5. The repeating units present in the repeating unit may be the same or different.

Among the structural formulae described above, those represented by Structural Formulae (A-25), (A-26), (A-27), (A-29), (A-31), (A-32), and (A-33) are most preferably used from the viewpoint of obtaining further balanced physical properties in the resulting cured article.

### Method for Producing Epoxy Resin (A)

The method for producing the epoxy resin (A) according to the present embodiment is not particularly limited, but for example, a method in which a diglycidyl ether (a1) of a dihydroxy compound having an alkylene chain and a polyether chain and an aromatic hydroxy compound (a2) are caused to react in a mole ratio (a1)/(a2) of from 1/1.01 to 1/5.0 to obtain a hydroxy compound [corresponding to a precursor or intermediate of the epoxy resin (A)], and then the hydroxy compound is caused to react with an epihalohydrin (a3) is preferable from the viewpoint that raw materials are easily obtained and the reaction is easy.

The product obtained through the reaction of the diglycidyl ether (a1) of a dihydroxy compound having an alkylene chain and a polyether chain with the aromatic hydroxy compound (a2) to obtain a hydroxy compound may contain an unreacted aromatic hydroxy compound (a2). However, in the synthesis of the epoxy resin (A) used in the present embodiment, the product may be directly subjected to the reaction with the epihalohydrin (a3) as the next step, or the unreacted aromatic hydroxy compound (a2) may be removed. From the viewpoint of the balance between the toughness and the flexibility of the cured article obtained from the curable resin composition of the present embodiment containing the resulting epoxy resin (A), the abundance ratio of the unreacted aromatic hydroxy compound (a2) in the hydroxy compound to be subjected to the next step is preferably in the range of from 0.1 to 30% on a mass basis.
The method for removing the unreacted aromatic hydroxy compound (a2) is not particularly limited, and removal can be performed according to various methods. Examples thereof include a column chromatography separation method utilizing a difference in polarity, a distillation fractionation method utilizing a difference in boiling point, and an alkali water-soluble extraction method utilizing a difference in solubility in alkaline water. Among these, the alkali water-soluble extraction method is preferable from the viewpoint of efficiency and the like, because thermal alteration is not involved, and in this case, as an organic solvent to be used for dissolving a target substance, one that is not mixed with water, such as toluene or methyl isobutyl ketone, can be used. Methyl isobutyl ketone is particularly preferably used from the viewpoint of solubility with the target product.

The diglycidyl ether (a1) of the dihydroxy compound having an alkylene chain and a polyether chain is not particularly limited. Example of the diglycidyl ether having an alkylene chain include 1,4-butanediol diglycidyl ether, 1,6-hexanediol diglycidyl ether, 1,9-nonanediol diglycidyl ether, 1,11-undecanediol diglycidyl ether, 1,12-dodecanediol diglycidyl ether, 1,13-tridecanediol diglycidyl ether, 1,14-tetradecanediol diglycidyl ether, 1,15-pentadecanediol diglycidyl ether, 1,16-hexadecanediol diglycidyl ether, 2-methyl-1,11-undecanediol diglycidyl ether, 3-methyl-1,11-undecanediol diglycidyl ether, and 2,6,10-trimethyl-1,11-undecanediol diglycidyl ether. Examples of the diglycidyl ether having a polyether chain include polyethylene glycol diglycidyl ether, polypropylene glycol diglycidyl ether, polytetramethylene glycol diglycidyl ether, polypentamethylene glycol diglycidyl ether, polyhexamethylene glycol diglycidyl ether, and polyheptamethylene glycol diglycidyl ether. These may contain an organochlorine impurity generated in glycidyl etherification of a hydroxy compound, or may contain an organochlorine such as 1-chloromethyl-2-glycidyl ether (chloromethyl form) represented by the structure shown below. These diglycidyl ethers may be used singly, or two or more of these may be used in combination.

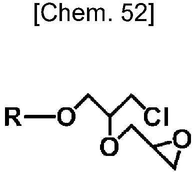

Among these, 1,4-butanediol diglycidyl ether, 1,6-hexanediol diglycidyl ether, 1,9-nonanediol diglycidyl ether, 1,12-dodecanediol diglycidyl ether, polyethylene glycol diglycidyl ether, polypropylene glycol diglycidyl ether, and polytetramethylene glycol diglycidyl ether are preferably used from the viewpoint of excellent balance between flexibility and heat resistance of the resulting cured article.

In addition, by simultaneously reacting the diglycidyl ether having an alkylene chain and the diglycidyl ether having a polyether chain with the aromatic hydroxy compound (a2), a hydroxy compound having both the structural unit X and the structural unit Y can be obtained, and by further reacting this with the epihalohydrin (a3), an epoxy resin (A) having both the structural unit X and the structural unit Y can be obtained.

The aromatic hydroxy compound (a2) is not particularly limited, and examples thereof include dihydroxybenzenes such as hydroquinone, resorcin, and catechol; trihydroxybenzenes such as pyrogallol, 1,2,4-trihydroxybenzene, and 1,3,5-trihydroxybenzene; triphenylmethane-type phenols such as 4,4',4"-trihydroxytriphenylmethane; dihydroxynaphthalenes such as 1,6-dihydroxynaphthalene, 2,7-dihydroxynaphthalene, 1,4-dihydroxynaphthalene, 1,5-dihydroxynaphthalene, 2,3-dihydroxynaphthalene, and 2,6-dihydroxynaphthalene; tetrafunctional phenols such as 1,1'-methylenebis-(2,7-naphthalenediol), 1,1'-binaphthalene-2,2',7,7'-tetraol, and 1,1'-oxybis-(2,7-naphthalenediol) obtained through coupling reaction of dihydroxynaphthalenes; bisphenols such as bis(4-hydroxyphenyl)methane, 2,2-bis(4-hydroxyphenyl)propane, 2,2-bis(3-methyl-4-hydroxyphenyl)propane, 1,1-bis(4-hydroxyphenyl)cyclohexane, 1,1-bis(4-hydroxyphenyl)-1-phenylethane, and bis(4-hydroxyphenyl)sulfone; biphenols such as 2,2'-biphenol, 4,4'-biphenol, (1,1'-biphenyl)-3,4-diol, 3,3'-dimethyl-(1,1-biphenyl)-4,4'-diol, 3-methyl-(1,1'-biphenyl)-4,4'-diol, 3,3',5,5'-tetramethylbiphenyl-2,2'-diol, 3,3',5,5'-tetramethylbiphenyl-4,4'-diol, 5-methyl-(1,1'-biphenyl)-3,4' diol, 3'-methyl-(1,1'-biphenyl)-3,4' diol, and 4'-methyl-(1,1'-biphenyl)-3,4' diol; alicyclic structure-containing phenols such as polyadducts of phenol and dicyclopentadiene and polyadducts of phenol and a terpene-based compound; naphthols such as bis(2-hydroxy-1-naphthyl)methane and bis(2-hydroxy-1-naphthyl) propane; and so-called Xylok-type phenolic resins which are condensation reaction products of phenol and phenylene dimethyl chloride or biphenylene dimethyl chloride. These may be used singly, or two or more of these may be used in combination. Further, a compound having a structure in which a methyl group, a t-butyl group, or a halogen atom is substituted as a substituent in the aromatic nucleus of each of the compounds described above can also be included. The alicyclic structure-containing phenols and the Xylok-type phenolic resin may contain not only a bifunctional component but also a tri- or higher functional component at the same time, but they may be used as they are in the present invention, or only the bifunctional component may be taken out and used after a purification step such as column chromatography.

Among these, bisphenols are preferable from the viewpoint of excellent balance between flexibility and toughness when a cured article is formed, and bis(4-hydroxyphenyl)methane and 2,2-bis(4-hydroxyphenyl)propane are preferable from the viewpoint of particularly remarkable performance of imparting toughness. When curability and heat resistance of the cured article are emphasized, dihydroxynaphthalenes are preferable, and 2,7-dihydroxynaphthalene is particularly preferable from the viewpoint of remarkably imparting quick curability. When the moisture resistance of the cured article is emphasized, it is preferable to use a compound containing an alicyclic structure.

From the viewpoint of reaction efficiency, the reaction ratio between the diglycidyl ether (a1) of the dihydroxy compound having an alkylene chain or a polyether chain and the aromatic hydroxy compound (a2) is preferably such that (a1)/(a2) is from 1/1.01 to 1/5.0 (mole ratio), more preferably such that (a1)/(a2) is from 1/1.02 to 1/3.0 (mole ratio).

The reaction between the diglycidyl ether (a1) of the dihydroxy compound having an alkylene chain or a polyether chain and the aromatic hydroxy compound (a2) is preferably performed in the presence of a catalyst. As the catalyst, various catalysts can be used, and examples thereof include alkali (earth) metal hydroxides such as sodium hydroxide, potassium hydroxide, lithium hydroxide, and calcium hydroxide; alkali metal carbonates such as sodium carbonate and potassium carbonate; phosphorus compounds such as triphenylphosphine; chlorides such as DMP-30, DMAP, tetramethylammonium, tetraethylammonium, tetrabutylammonium, and benzyltributylammonium; bromides; chlorides such as iodide, tetramethylphosphonium, tetraethylphosphonium, tetrabutylphosphonium, and benzyltributylphosphonium; quaternary ammonium salts such as bromide and iodide; tertiary amines such as triethylamine, N,N-dimethylbenzylamine, 1,8-diazabicyclo[5.4.0]undecene, and 1,4-diazabicyclo[2.2.2]octane; and imidazoles such as 2-ethyl-4-methylimidazole and 2-phenylimidazole. Two or more of these catalysts may be used in combination. Among these, sodium hydroxide, potassium hydroxide, triphenylphosphine, and DMP-30 are preferable from the viewpoint that the reaction proceeds rapidly and the effect of reducing the amount of impurities is high. The amount of use of these catalysts is not particularly limited, but it is preferable to use these catalysts from 0.0001 to 0.1 mol with respect to 1 mol of the aromatic hydroxyl group in the aromatic hydroxy compound (a2). The form of these catalysts is not particularly limited either, and these catalysts may be used in the form of an aqueous solution or in the form of a solid.

The reaction between the diglycidyl ether (a1) of the dihydroxy compound having an alkylene chain or a polyether chain and the aromatic hydroxy compound (a2) can be performed in the absence of a solvent or in the presence of an organic solvent. Examples of the organic solvent that can be used include methyl cellosolve, ethyl cellosolve, toluene, xylene, methyl isobutyl ketone, dimethyl sulfoxide, propyl alcohol, and butyl alcohol. The amount of use of the organic solvent is usually from 50 to 300 mass%, preferably from 100 to 250 mass%, with respect to the total mass of the charged raw materials. These organic solvents can be used singly, or plural types of these may be used in combination. To rapidly perform the reaction, the reaction is preferably performed in the absence of a solvent, and on the other hand, dimethyl sulfoxide is preferably used from the viewpoint of being able to reduce impurities in the final product.

The reaction temperature in the case of performing the reaction is usually from 50 to 180°C, and the reaction time is usually from 1 to 30 hours. The reaction temperature is preferably from 100 to 160°C from the viewpoint of being able to reduce impurities in the final product. When the coloring of the resulting compound is large, an antioxidant or a reducing agent may be added to suppress the coloring. The antioxidant is not particularly limited, and examples thereof include hindered phenol compounds such as 2,6-dialkylphenol derivatives, divalent sulfur compounds, and phosphorous acid ester compounds containing trivalent phosphorus atoms. The reducing agent is not particularly limited, and examples thereof include hypophosphorous acid, phosphorous acid, thiosulfuric acid, sulfite, hydrosulfite, and salts thereof.

After completion of the reaction, the reaction mixture can be neutralized or washed with water until the pH value of the reaction mixture reaches from 3 to 7, preferably from 5 to 7. The neutralization treatment and the water washing treatment may be performed according to a known method. For example, when a basic catalyst is used, an acidic substance such as hydrochloric acid, sodium dihydrogen phosphate, p-toluenesulfonic acid, or oxalic acid can be used as the neutralizing agent. After the neutralization or water washing treatment, the solvent is distilled off under reduced pressure heating as necessary, and the product is concentrated to obtain a hydroxy compound.

When the glycidyl ether having an alkylene chain and the glycidyl ether having a polyether chain are used in combination, a hydroxy compound having both the structural unit X and the structural unit Y can be obtained, and examples of a preferred structure at this time include compounds represented by the following structural formulae.

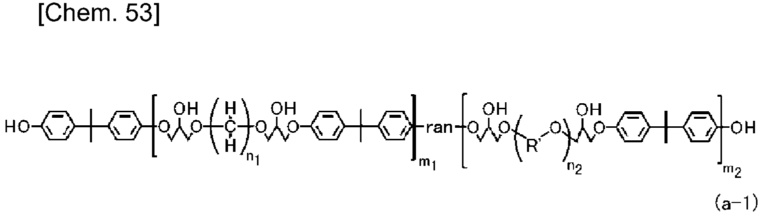

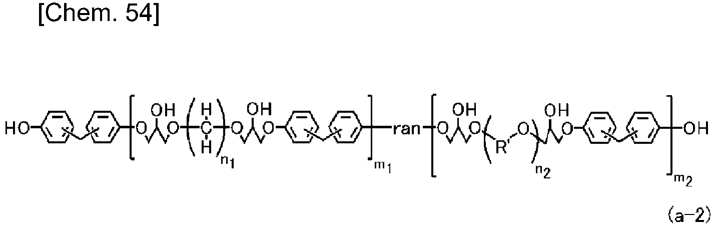

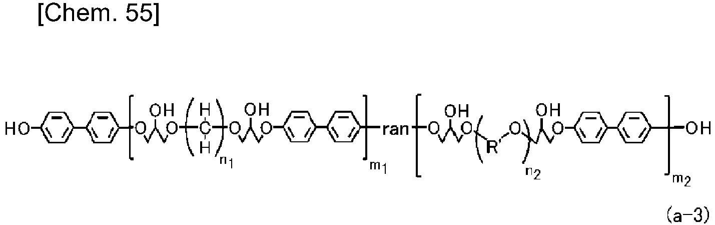

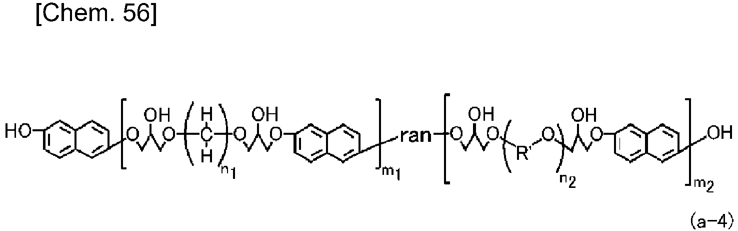

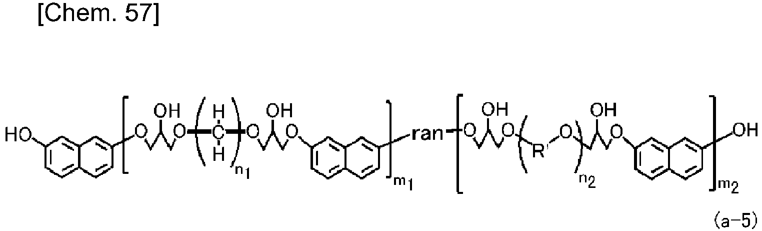

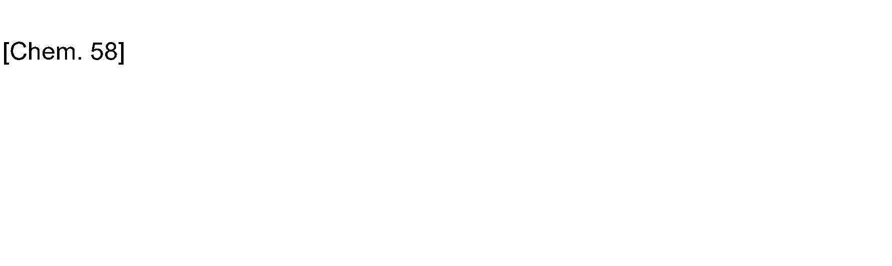

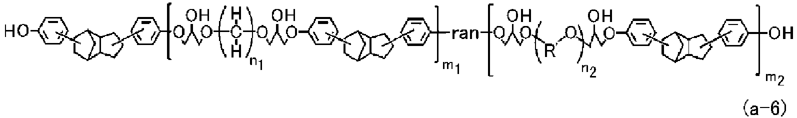

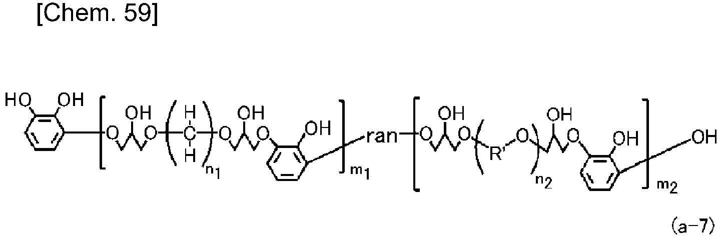

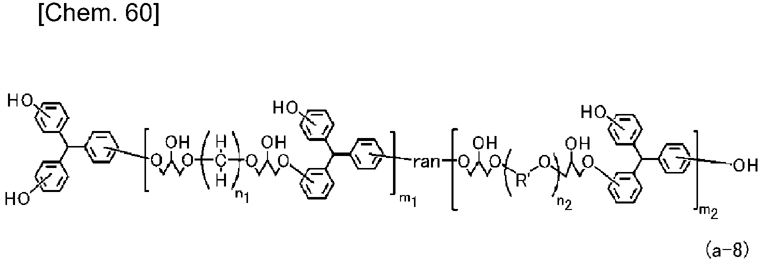

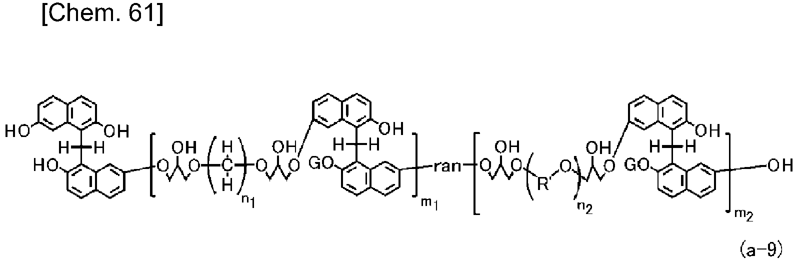

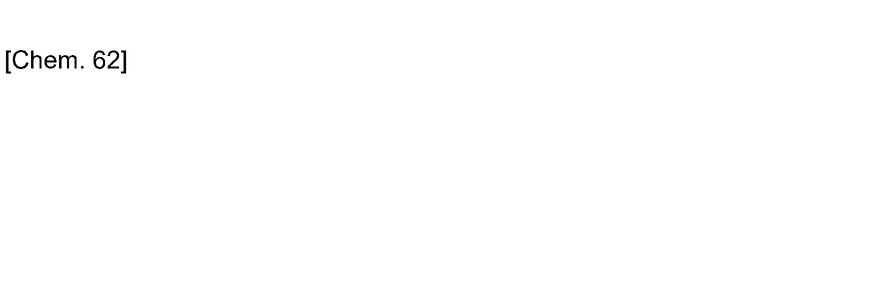

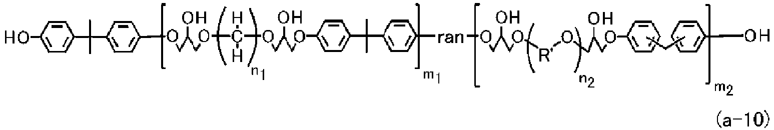

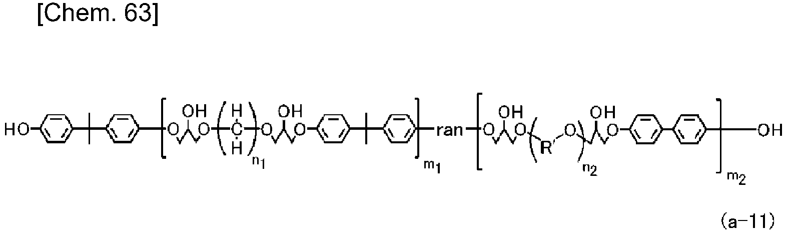

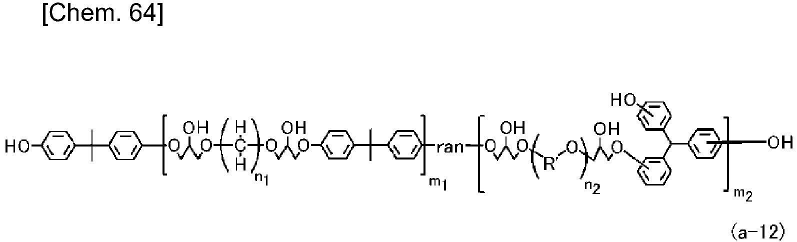

In each of the structural formulae described above, ran represents a random bond, R' is a divalent hydrocarbon group having from 2 to 12 carbon atoms, n1 is an integer of from 4 to 16, n2 is an average value of repeating units and is from 2 to 30, and m1 and m2 are average values of repetition and each independently from 0.5 to 25. The repeating units present in the repeating unit may be the same or different.

By using the glycidyl ether having an alkylene chain as a raw material, a hydroxy compound having the structural unit X can be obtained. Examples of a preferred structure in this case can include compounds represented by the following structural formulae.

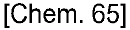

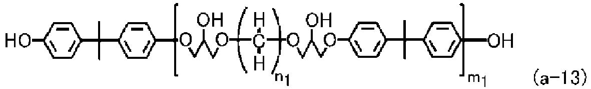

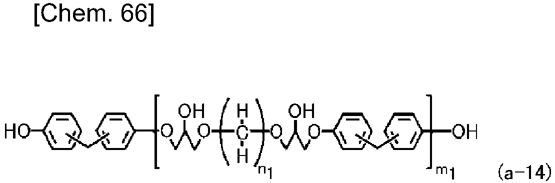

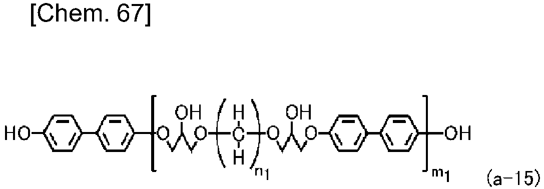

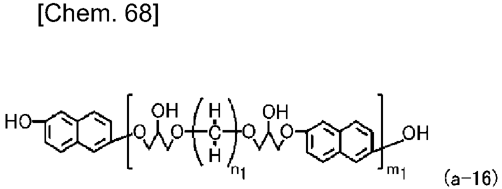

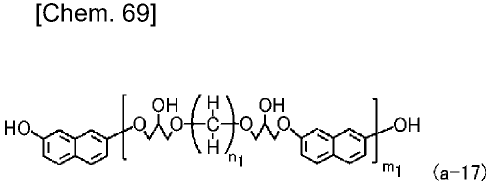

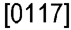

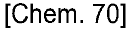

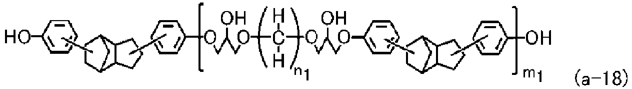

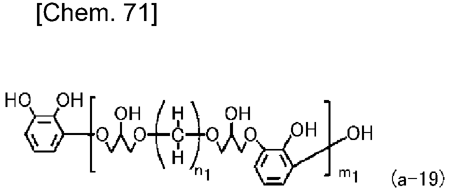

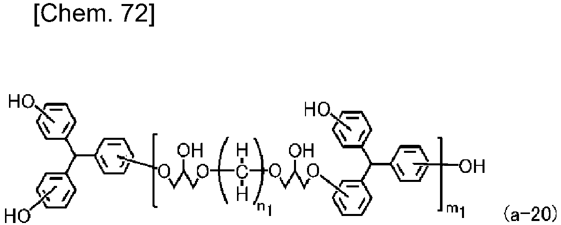

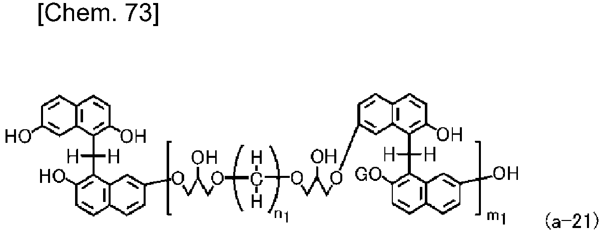

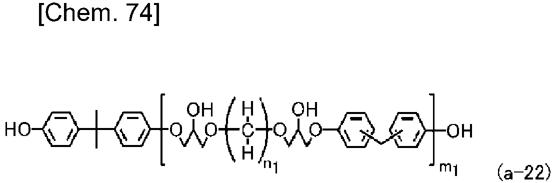

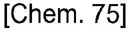

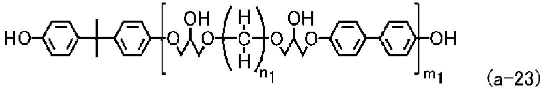

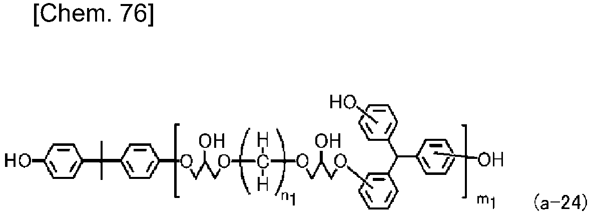

In each of the structural formulae described above, n1 is an integer of from 4 to 16, and m1 is an average value of repetition and is from 0.5 to 25.

By using the glycidyl ether having a polyether chain as a raw material, a hydroxy compound having the structural unit Y can be obtained. Examples of a preferred structure in this case can include compounds represented by the following structural formulae.

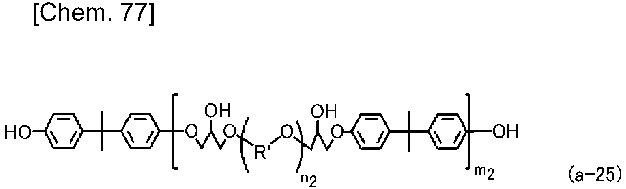

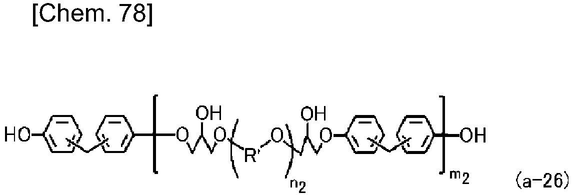

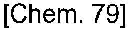

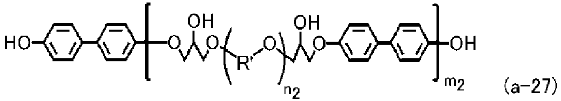

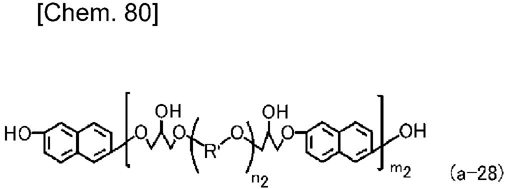

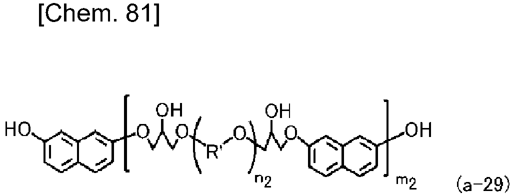

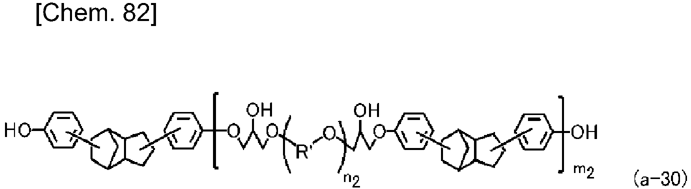

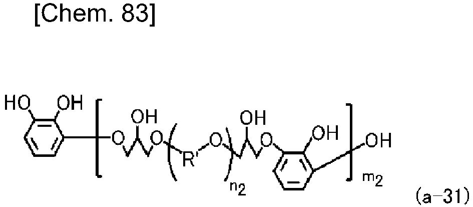

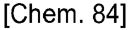

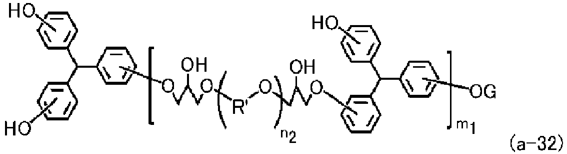

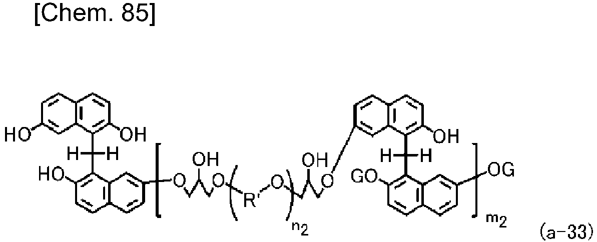

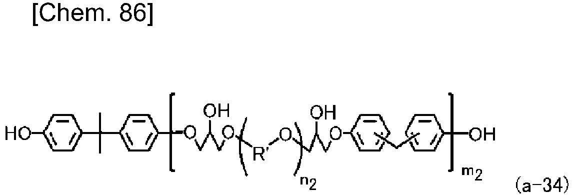

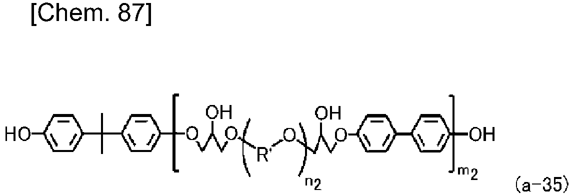

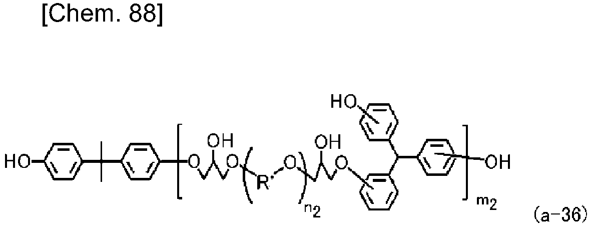

In each of the structural formulae described above, R' is a divalent hydrocarbon group having from 2 to 12 carbon atoms, n2 is an average value of repeating units and is from 2 to 30, and m2 is an average value of repetition and is from 0.5 to 25. The repeating units present in the repeating unit may be the same or different.

In the method for producing the epoxy resin (A), the method for the glycidyl etherification reaction of the precursor (intermediate) hydroxy compound obtained as described above is not particularly limited, and examples thereof include a method of reacting a phenolic hydroxyl group with an epihalohydrin, and a method of olefinating a phenolic hydroxyl group and oxidizing the carbon-carbon double bond of the olefin with an oxidizing agent. Among these, a method using the epihalohydrin (a3) is preferable from the viewpoint that raw materials are easily obtained and the reaction is easy.

Examples of the method using the epihalohydrin (a3) include a method in which the epihalohydrin (a3) in an amount of from 0.3 to 100 mol is added to 1 mol of the aromatic hydroxyl group of the hydroxy compound obtained as described above, and the mixture is reacted at a temperature of from 20 to 120°C for 0.5 to 10 hours while a basic catalyst in an amount of from 0.9 to 2.0 mol is added at once or gradually to 1 mol of the aromatic hydroxyl group of the hydroxy compound. Regarding the addition amount of the epihalohydrin (a3), the larger the excess amount of the epihalohydrin (a3) is, the closer the resulting epoxy resin is to the theoretical structure, and generation of a secondary hydroxyl group generated by a reaction between an unreacted aromatic hydroxyl group and an epoxy group can be suppressed. In particular, the addition amount is preferably in the range of from 2.5 to 100 equivalents from such a viewpoint. This basic catalyst may be used as a solid or an aqueous solution thereof. When an aqueous solution is used, the basic catalyst may be continuously added, and water and the epihalohydrin (a3) may be continuously distilled off from the reaction mixture under reduced pressure or under normal pressure, and further separated to remove water, and the epihalohydrin (a3) may be continuously returned to the reaction mixture.

In industrial production, new epihalohydrin (a3) is used as all of the charged epihalohydrin (a3) in the first batch of epoxy resin production, but it is preferable to use the epihalohydrin (a3) recovered from the crude reaction product in combination with new epihalohydrin (a3) corresponding to the amount consumed and the amount to be lost in the reaction in the next and subsequent batches. In this case, the epihalohydrin (a3) to be used is not particularly limited, and examples thereof include epichlorohydrin and epibromohydrin. Among these, epichlorohydrin is preferable because it is easily available.

The basic catalyst is not particularly limited either, and examples thereof include an alkaline earth metal hydroxide, an alkali metal carbonate, and an alkali metal hydroxide. In particular, an alkali metal hydroxide is preferable from the viewpoint of excellent catalytic activity in an epoxy resin synthesis reaction, and examples thereof include sodium hydroxide and potassium hydroxide. In use, these alkali metal hydroxides may be used in the form of an aqueous solution of about from 10 to 55 mass%, or may be used in the form of a solid.

The reaction speed in the synthesis of the epoxy resin can be increased by using an organic solvent in combination. Such an organic solvent is not particularly limited, and examples thereof include ketones such as acetone and methyl ethyl ketone, alcohols such as methanol, ethanol, 1-propyl alcohol, isopropyl alcohol, 1-butanol, secondary butanol, and tertiary butanol, cellosolves such as methyl cellosolve and ethyl cellosolve, ethers such as tetrahydrofuran, 1,4-dioxane, 1,3-dioxane, and diethoxyethane, and aprotic polar solvents such as acetonitrile, dimethyl sulfoxide, and dimethylformamide. These organic solvents may be used singly, or two or more of these may be used in combination as appropriate to adjust the polarity.

The reaction product of the glycidylation reaction is washed with water, and then unreacted epihalohydrin (a3) and an organic solvent to be used in combination are distilled off through distillation under heating and reduced pressure. In addition, to obtain an epoxy resin having less hydrolyzable halogen, the obtained epoxy resin may be dissolved again in an organic solvent such as toluene, methyl isobutyl ketone, or methyl ethyl ketone, and an aqueous solution of an alkali metal hydroxide such as sodium hydroxide or potassium hydroxide may be added to further perform the reaction. At this time, a phase transfer catalyst such as a quaternary ammonium salt or a crown ether may be present for the purpose of improving the reaction speed.

When a phase transfer catalyst is used, the amount of use of the phase transfer catalyst is preferably in the range of from 0.1 to 3.0 mass% with respect to the epoxy resin to be used. After completion of the reaction, the produced salt is removed by filtration, water washing or the like, and a solvent such as toluene or methyl isobutyl ketone is distilled off under heating and reduced pressure, whereby a high-purity epoxy resin can be obtained.

### Epoxy Resin (B)

The structure of the epoxy resin (B) contained in the epoxy resin of the present embodiment is not limited as long as its epoxy equivalent is in the range of from 100 to 300 g/eq. Examples thereof include liquid epoxy resins such as bisphenol A type epoxy resin, bisphenol F type epoxy resin, bisphenol S type epoxy resin, bisphenol AD type epoxy resin, polyhydroxybenzene type epoxy resin, polyhydroxynaphthalene type epoxy resin, biphenyl type epoxy resin, and tetramethylbiphenyl type epoxy resin, brominated epoxy resins such as brominated phenol novolac type epoxy resin, solid bisphenol A type epoxy resin, phenol novolac type epoxy resin, cresol novolac type epoxy resin, triphenylmethane type epoxy resin, tetraphenylethane type epoxy resin, dicyclopentadiene-phenol addition reaction type epoxy resin, phenol aralkyl type epoxy resin, phenylene ether type epoxy resin, naphthylene ether type epoxy resin, naphthol novolac type epoxy resin, naphthol aralkyl type epoxy resin, naphthol-phenol co-condensed novolac type epoxy resin, naphthol-cresol co-condensed novolac type epoxy resin, aromatic hydrocarbon formaldehyde resin-modified phenol resin-type epoxy resin, and biphenyl-modified novolac type epoxy resin. These may be used singly, or two or more of these may be used in combination. It is preferable to use epoxy resins by selecting various types depending on the intended use, physical properties of the cured article, and the like.

Among these, an epoxy resin having an epoxy equivalent of from 100 to 300 g/eq among liquid epoxy resins, such as bisphenol A type epoxy resin, bisphenol F type epoxy resin, bisphenol S type epoxy resin, bisphenol AD type epoxy resin, polyhydroxybenzene type epoxy resin, polyhydroxynaphthalene type epoxy resin, biphenyl type epoxy resin, and tetramethylbiphenyl type epoxy resin is preferably used, and an epoxy resin having an epoxy equivalent of from 100 to 300 g/eq among bisphenol A type epoxy resin, bisphenol F type epoxy resin, bisphenol S type epoxy resin, and bisphenol AD type epoxy resin is particularly preferably used.

In the present embodiment, the proportion of the epoxy resin (A) and the epoxy resin (B) to be used is not particularly limited, but the mass ratio (A) : (B) of the epoxy resin (A) and the epoxy resin (B) is from 90 : 10 to 10 : 90, preferably from 80 : 20 to 20 : 80, particularly preferably from 70 : 30 to 30 : 70, from the viewpoint that phase separation easily occurs in the cured article. The phase separation in the cured article forms a sea-island structure, and both the adhesiveness and the stress relaxation ability of the cured article are achieved. In particular, a high adhesive strength is exhibited in a wide temperature range, and the effect of reducing the molding shrinkage rate before and after the heat curing of the resin composition is exhibited.

### Curable Functional Group-Containing Compound (C)

The curable functional group-containing compound (C) contained in the curable resin composition of the present embodiment is a curable functional group-containing compound (C) represented by either General Formula (4-1) or (4-2) shown below.

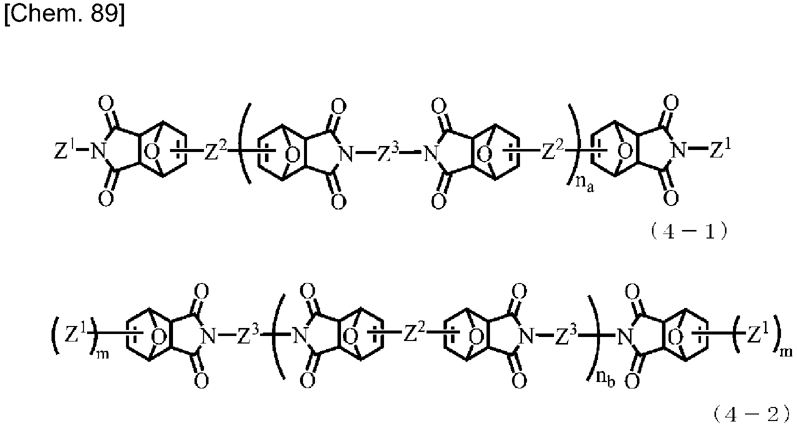

In Formulae (4-1) and (4-2). a furan-derived structure may include a halogen atom, an alkoxy group, an aralkyloxy group, an aryloxy group, a nitro group, an amide group, an alkyloxycarbonyl group, an aryloxycarbonyl group, a cyano group, an alkyl group, a cycloalkyl group, an aralkyl group, or an aryl group as a substituent, nₐ and n_{b} are each independently from 0 to 10 as an average value of repetition numbers, m is an integer of from 1 to 4, Z¹ is any of structures represented by the following Formula (5), Z² is any of structures represented by the following Formulae (6A) and (6B), and Z³ is any of structures represented by the following Formulae (7-1) to (7-3), and a plurality of structures in one molecule may be the same or different.

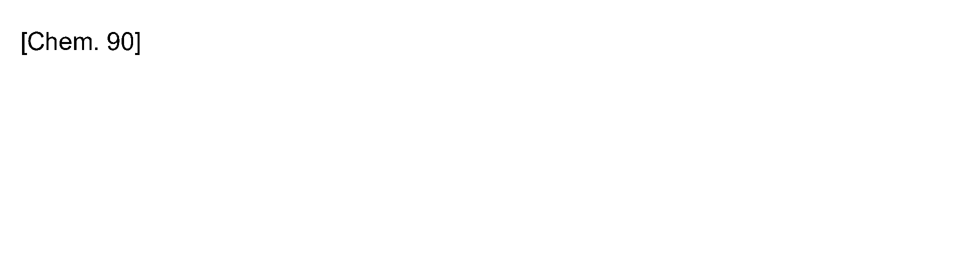

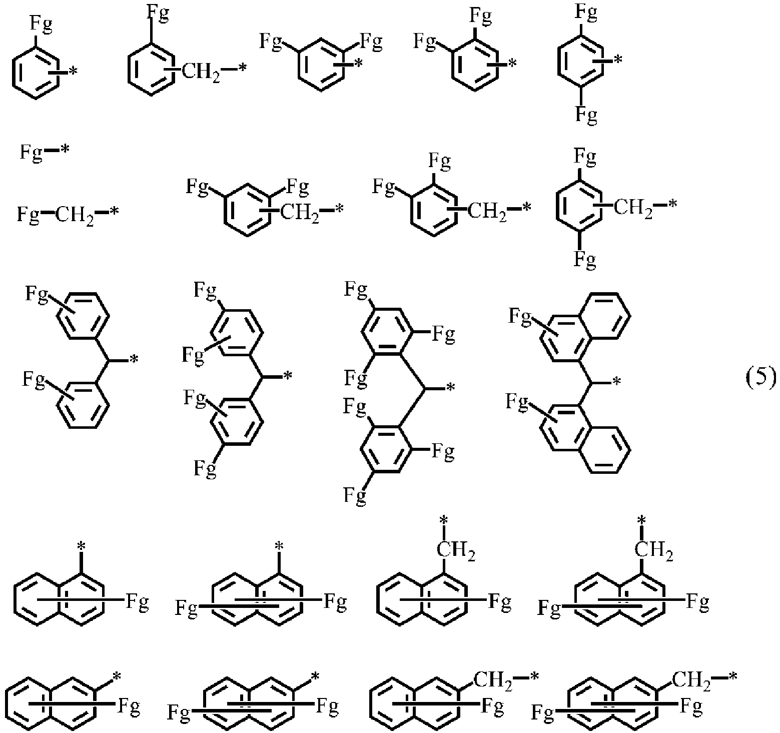

In Formula (5), an aromatic ring may be substituted or unsubstituted, and * represents a binding point, Fg is a curable functional group, and -Fg on a naphthalene ring indicates that it may be bound to any position.

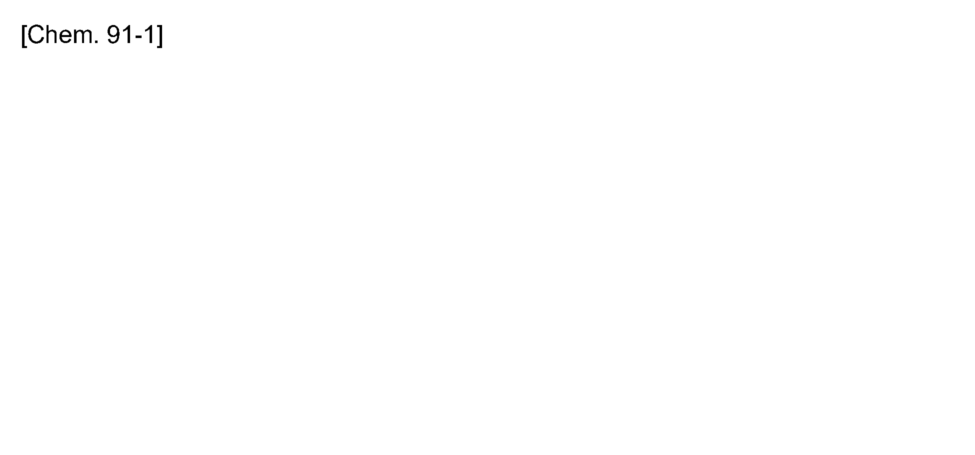

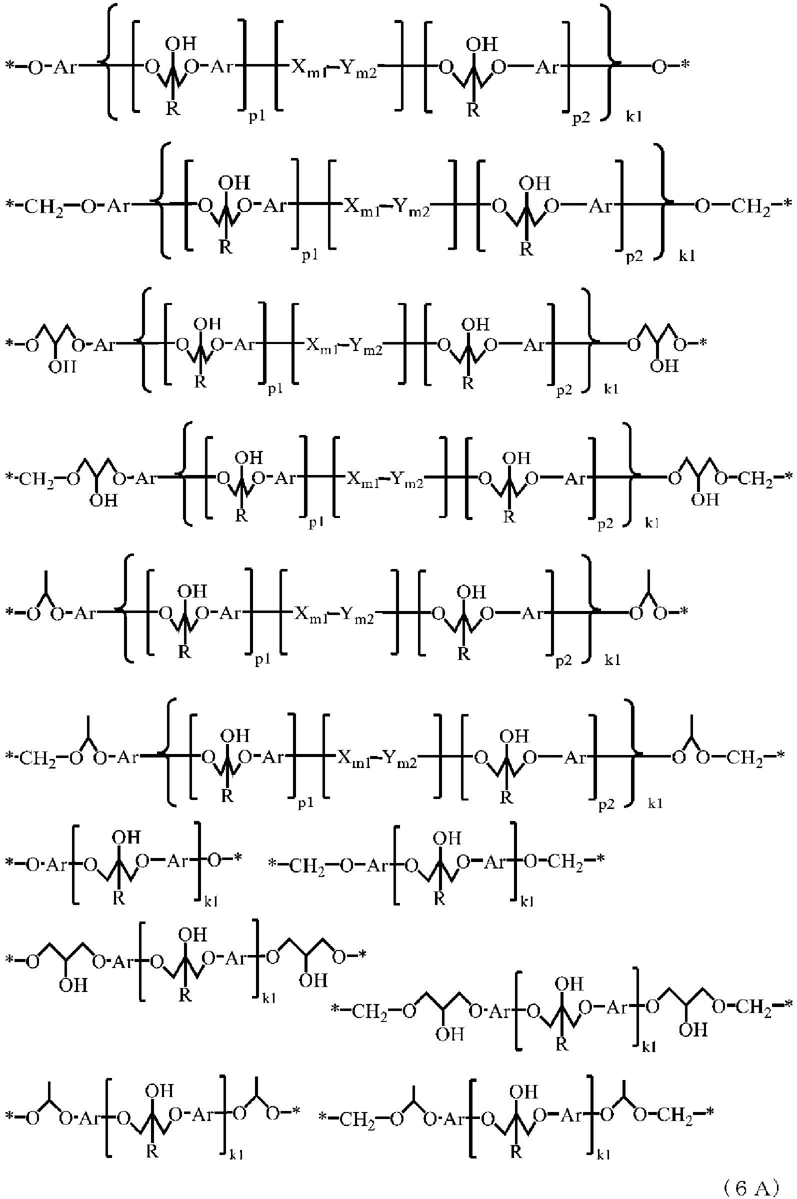

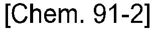

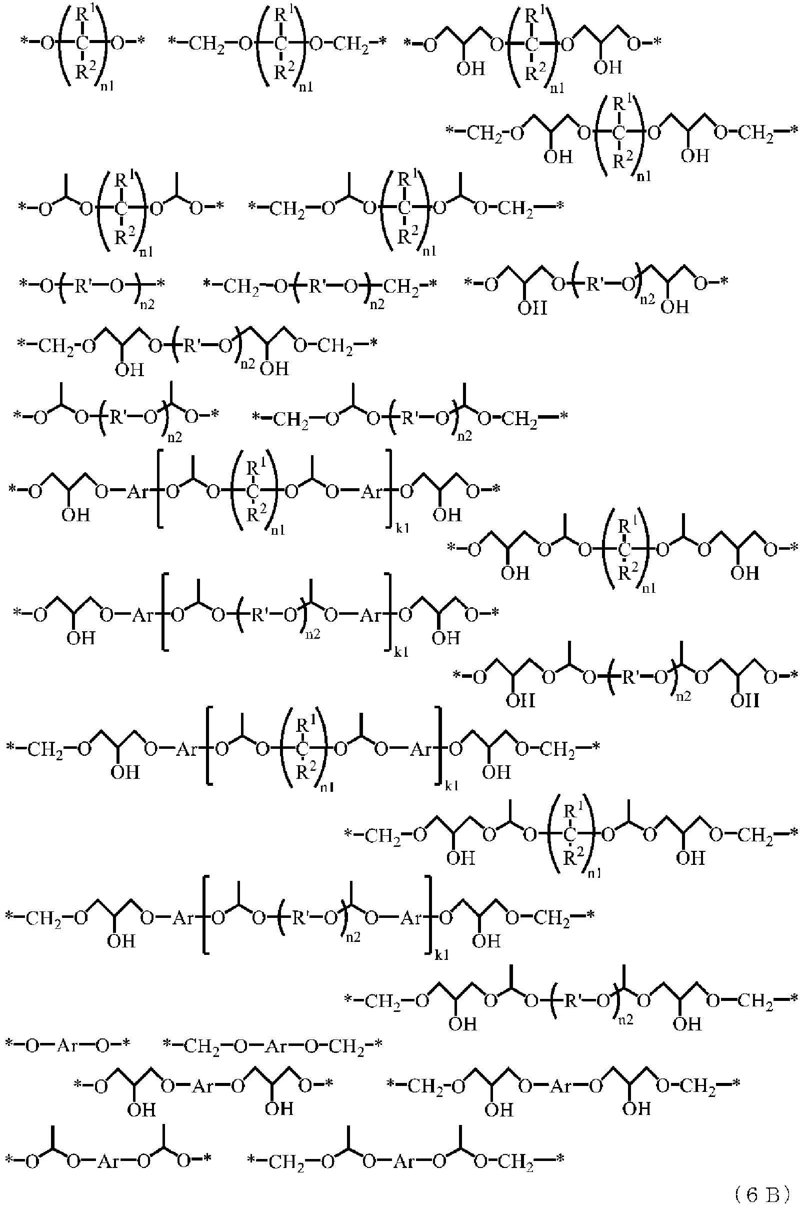

In Formulae (6A) and (6B), Ar each independently represents an unsubstituted or substituted aromatic ring-containing structure,
R¹ and R² are each independently a hydrogen atom, a methyl group, or an ethyl group,
R is a hydrogen atom or a methyl group,
R' is a divalent hydrocarbon group having from 2 to 12 carbon atoms,
n1 is an integer of from 4 to 16, and n2 is an average value of repeating units and is from 2 to 30;
k1 is an average of repetition numbers and ranges from 0.5 to 5;
p1 and p2 are each independently from 0 to 5,
X is a structural unit represented by Formula (6-1) shown below, and Y is a structural unit represented by Formula (6-2) shown below; 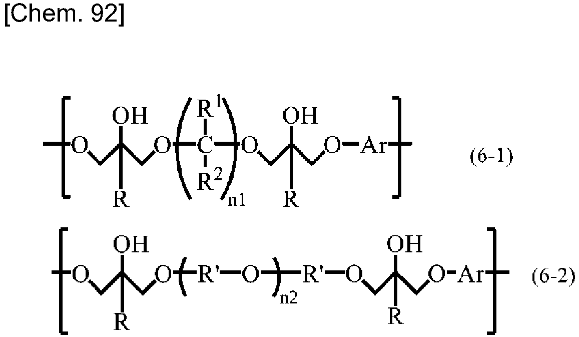
where in Formulae (6-1) and (6-2), Ar, R, R¹, R², R', n1, and n2 are the same as described above;
m1 and m2 are average values of repetition, each independently from 0 to 25, and satisfy m1 + m2 ≥ 1,
provided that a bond between the structural unit X represented by Formula (6-1) and the structural unit Y represented by Formula (6-2) may be random or block, and a total number of structural units X or Y present in one molecule is m1 or m2, respectively. 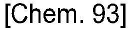 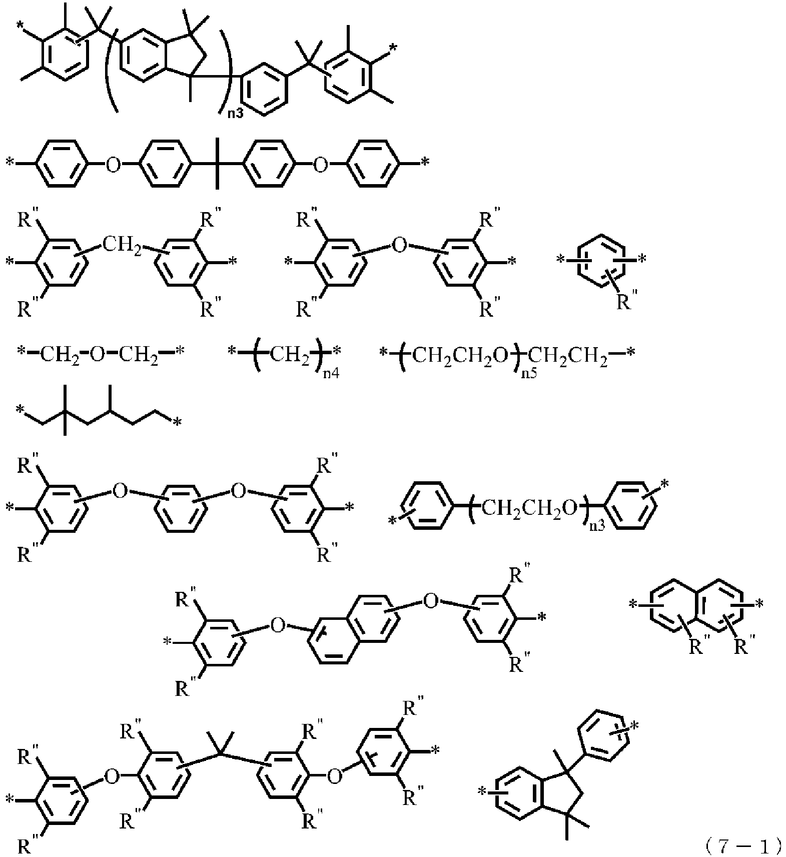 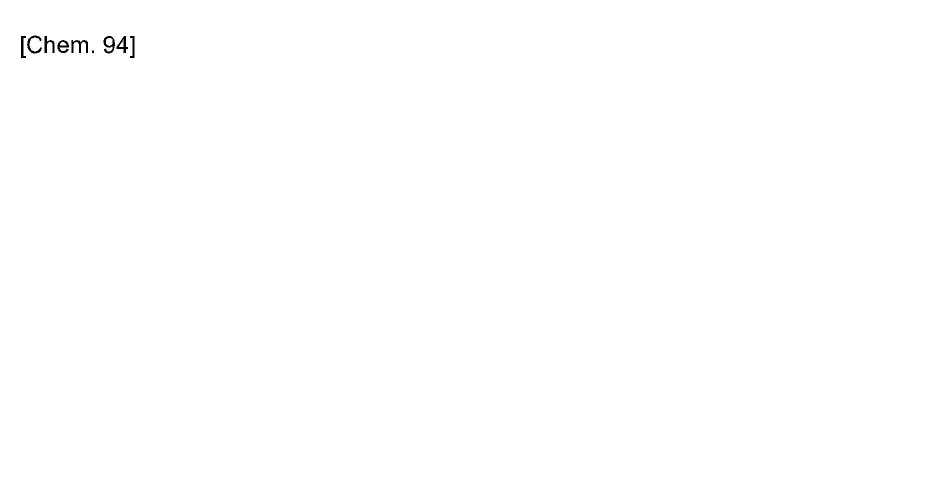 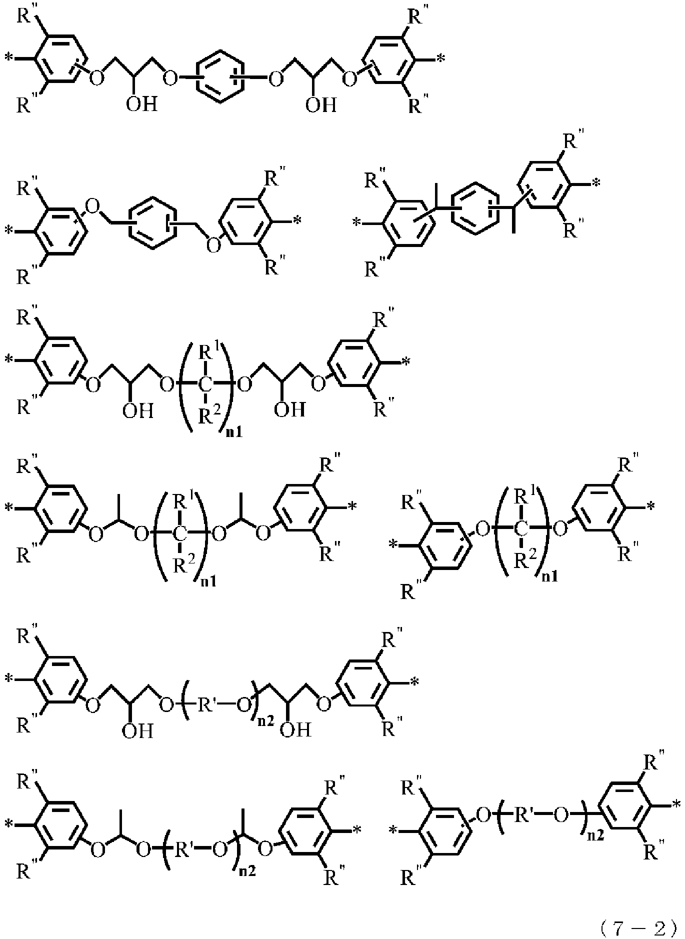 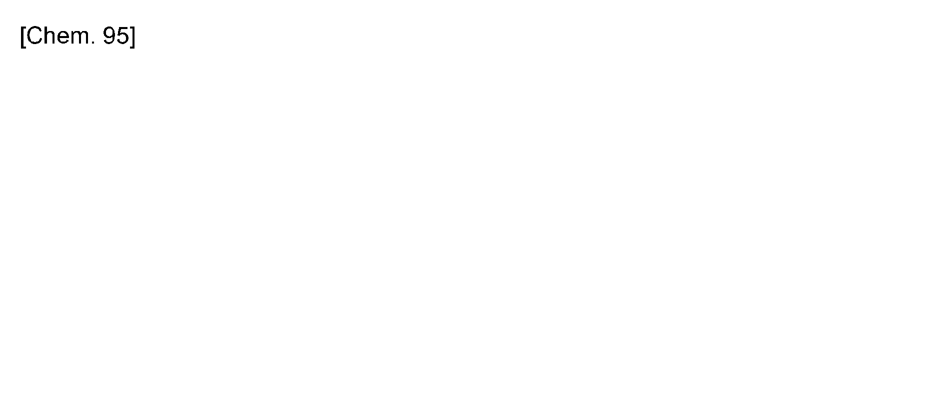 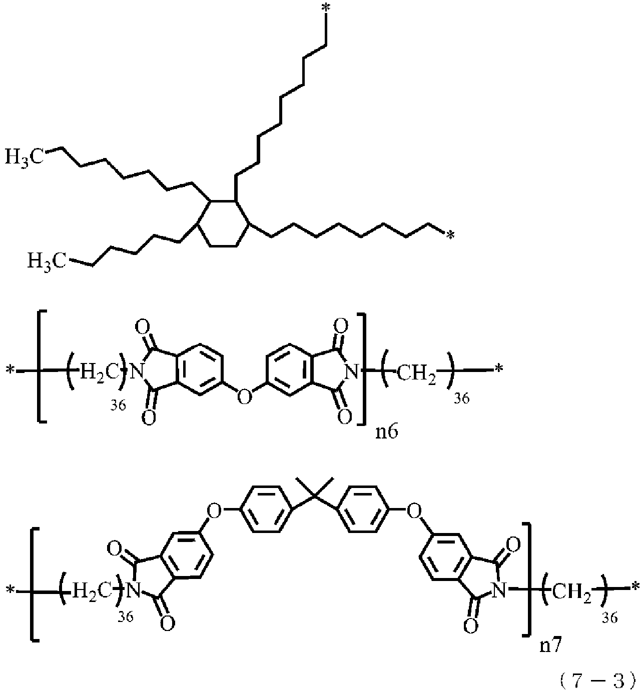
In Formulae (7-1) to (7-3), n3 and n5 are average values of repetition numbers and are each from 0.5 to 10, n4 is an integer of from 1 to 16, and R" is each independently a hydrogen atom, a methyl group, or an ethyl group.

The curable functional group-containing compound (C) contained in the curable resin composition of the present embodiment is characterized by being bound by a reversible binding through a Diels-Alder reaction between a furan structure and a maleimide structure.

By having such a configuration, the curable functional group-containing compound (C) is incorporated into the crosslinked structure through a curing reaction based on the curable functional group. On the other hand, even after being formed into a cured article, the cured article has reversibility and thus has high molecular mobility. For this reason, when the cured article is exposed to a high temperature or subjected to an impact to generate cracks or to be pulverized, the cured article is easily cut at the reversibly bound portion and exhibits easily dismantlable properties. On the other hand, in the reversible binding, the bond is reversibly reformed in a low temperature region including room temperature, and thus, the curable functional group-containing compound is excellent in adhesiveness.

To introduce the addition type structure through the furan-type Diels-Alder reaction into the compound, furan having a reactive functional group on the ring and maleimide having a reactive functional group are used. A specific reversible binding partial structure can be represented by the chemical formula shown below. A reversible binding can be introduced into the compound through binding to another structural unit based on the R moiety in the following formula in the maleimide-derived structure or various reactive functional groups on the ring of the furan-derived structure.

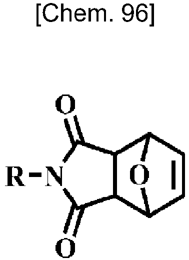

In the Diels-Alder reaction, a conjugated diene and a parent diene undergo an addition reaction to form a 6-membered ring. Since the Diels-Alder reaction is an equilibrium reaction, a Retro-Diels-Alder reaction occurs at a predetermined temperature to cause dissociation (decrosslinking). When mechanical energy such as scratches and external force is applied to the resulting cured article, the C-C bond of the Diels-Alder reaction unit is preferentially cleaved because the binding energy of the C-C bond of the Diels-Alder reaction unit is lower than that of a normal covalent bond. This allows the cured article to exhibit easily dismantlable properties. In addition, the equilibrium of the C-C bond of the Diels-Alder reaction unit moves in the binding direction in a temperature range lower than the dissociation temperature, and thus, an adduct (Diels-Alder reaction unit) is formed again.

In the reversible binding through the Diels-Alder reaction, the reversible binding through the Diels-Alder reaction of a furan structure and a maleimide structure undergoes a Retro-Diels-Alder reaction around 120°C to cause dissociation (decrosslinking). Thus, the heating temperature required for the cured article to exhibit easily dismantlable properties can be lowered, and the cured article has excellent easily dismantlable properties for applications where high temperature heating is not suitable.

The average molecular weight (Mw) of the curable functional group-containing compound (C) is not particularly limited, but is preferably 500 or more and preferably 50000 or less from the viewpoint of achieving the balance among mechanical strength, flexibility, and ease of dismantling in the form of a cured article. When a plurality of reversible bindings are present other than between A and B, for example, in the structural unit B, the molecular weight per reversible binding is more preferably in the range of from 300 to 10000, from the viewpoint of ease of dismantling, remoldability, and the like of the cured article.

The curable functional group-containing compound (C) represented by either General Formula (4-1) or (4-2) has a reversible binding formed by a furan structure and a maleimide structure in the molecule and at a terminal. The terminal maleimide structure in General Formula (4-1) and the terminal furan structure in General Formula (4-2) have one or more Z¹ that is any structure represented by General Formula (5), and this curable functional group contributes to a curing reaction in the curable resin composition described later. m is the number of Z1 in the furan-derived structure and is an integer of from 1 to 4. From the viewpoint of easy availability of an industrial raw material, easy controllability of a curing reaction, and the like, the number is preferably in the range of from 1 to 2, more preferably 1.

Z¹ in Formulae (4-1) and (4-2) has a curable functional group Fg represented by General Formula (5). Examples of the curable functional group Fg include a hydroxyl group, an amino group, a carboxyl group, an acid anhydride group, an amide group, an imide group, a thiol group, and an ester group. A hydroxyl group, an amino group, a carboxyl group, or a thiol group is preferable, and a hydroxyl group or an amino group is more preferable. That is, in General Formula (5), the curable functional group Fg is preferably a hydroxyl group (-OH) or an amine group (-NH₂).
Z¹ in Formulae (4-1) and (4-2) is preferably a compound represented by the following structural formula from the viewpoint of availability of raw materials and reactivity.

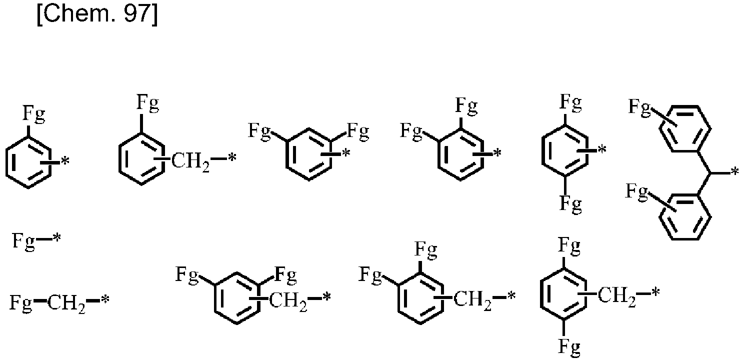

When the curable functional group of the curable functional group-containing compound (C) according to the present embodiment is a hydroxyl group, examples of the curable functional group-containing compound (C) of the present invention include, but are not limited to, those represented by the following. 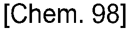 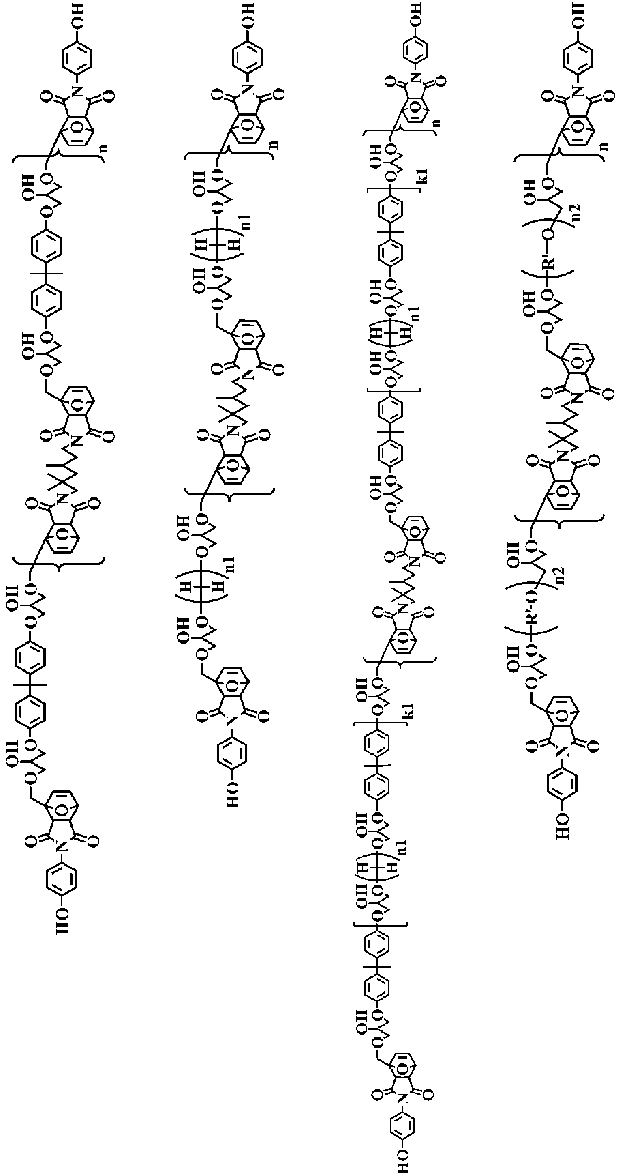 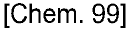 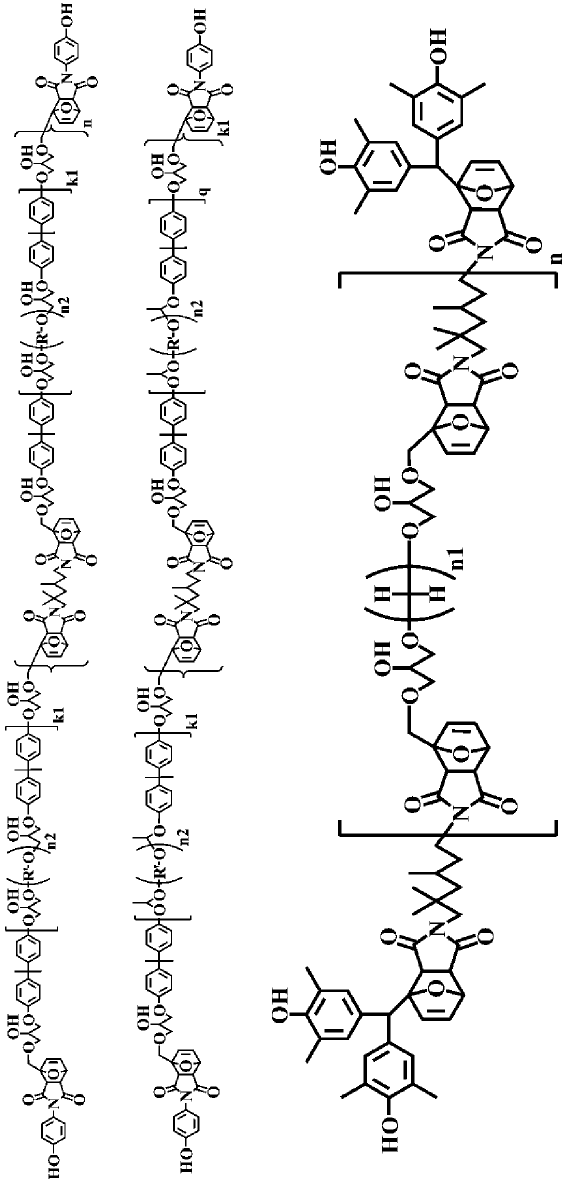 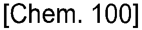 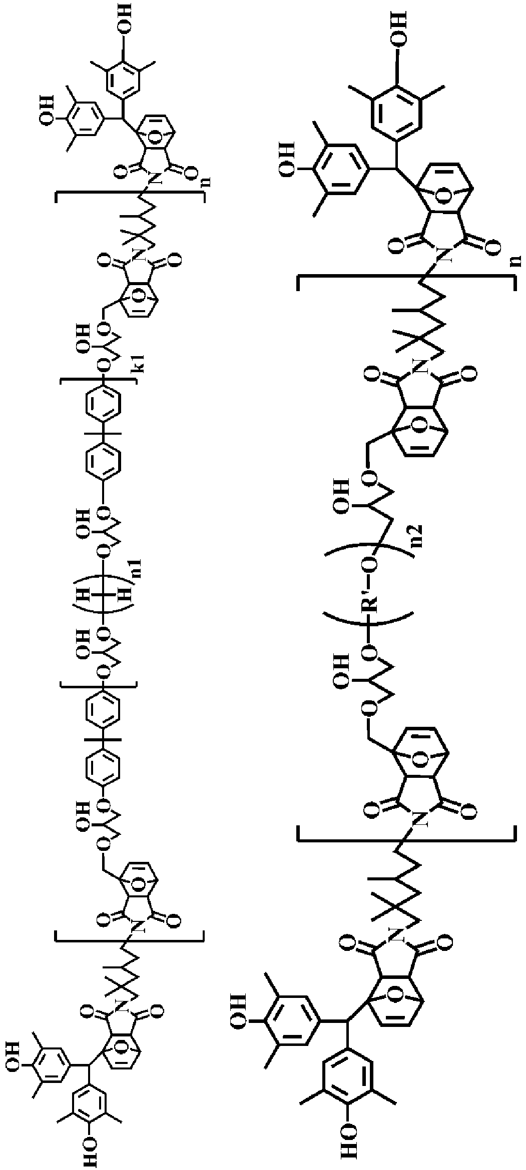 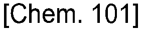 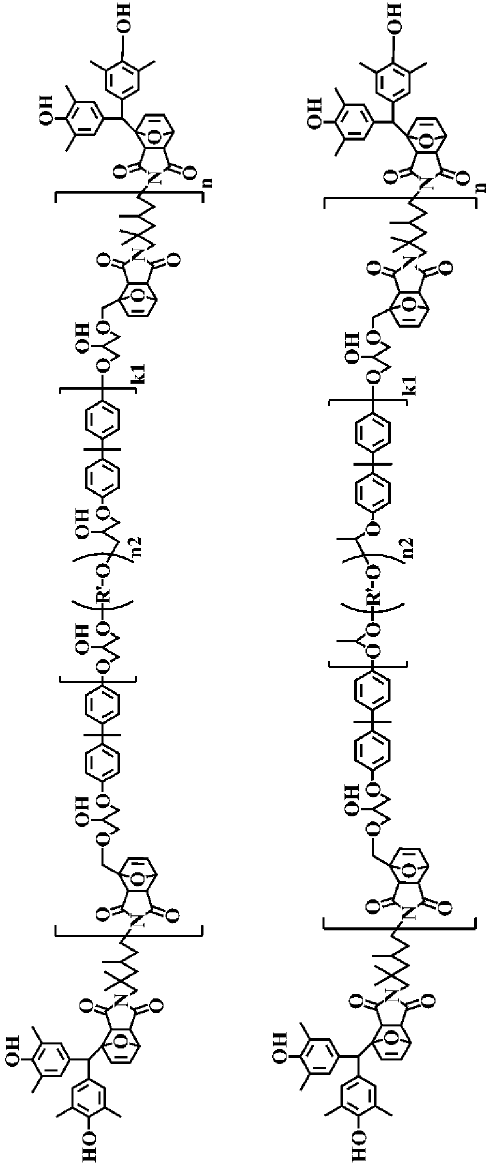 In the formulae, R' is a divalent hydrocarbon group having from 2 to 12 carbon atoms, n is an average number of repeating units of from 0 to 10, n1 is an integer of from 4 to 16, n2 is an average value of repeating units and is from 2 to 30, and k1 is from 0.5 to 5.

When the curable functional group of the curable functional group-containing compound (C) according to the present embodiment is an amino group, examples of the curable functional group-containing compound (C) of the present invention include, but are not limited to, those represented by the following. 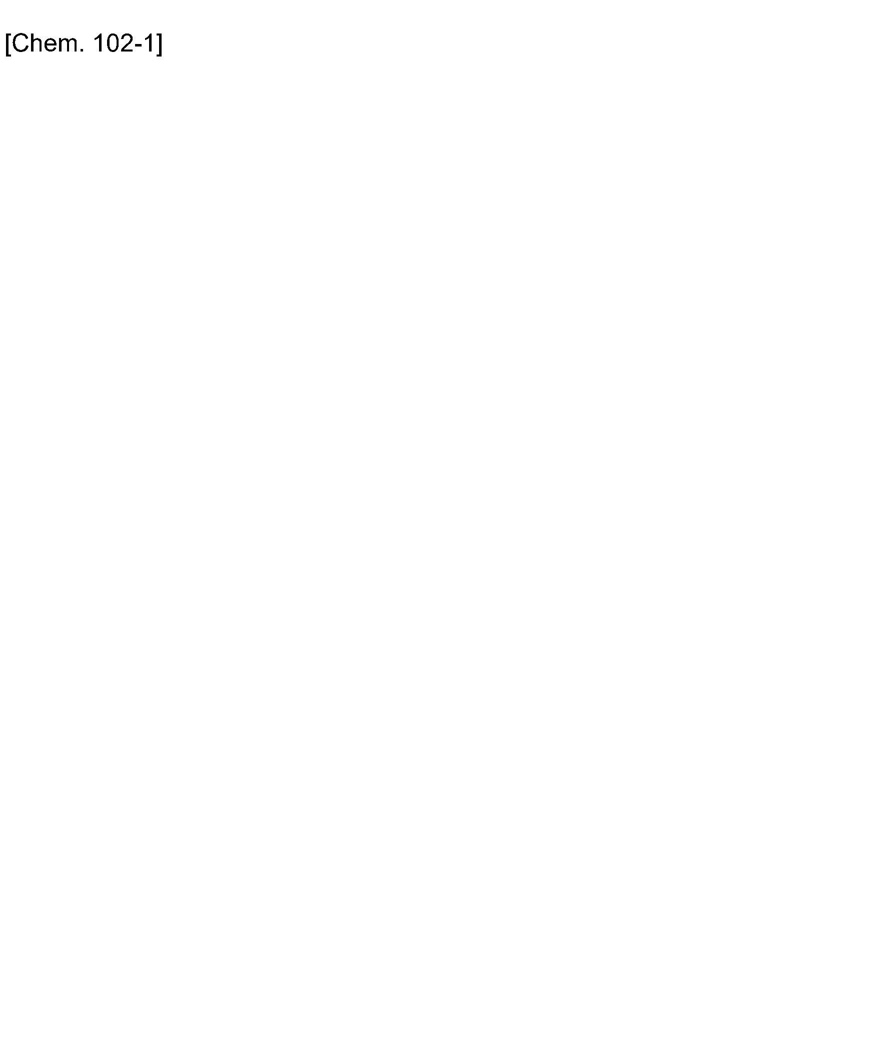 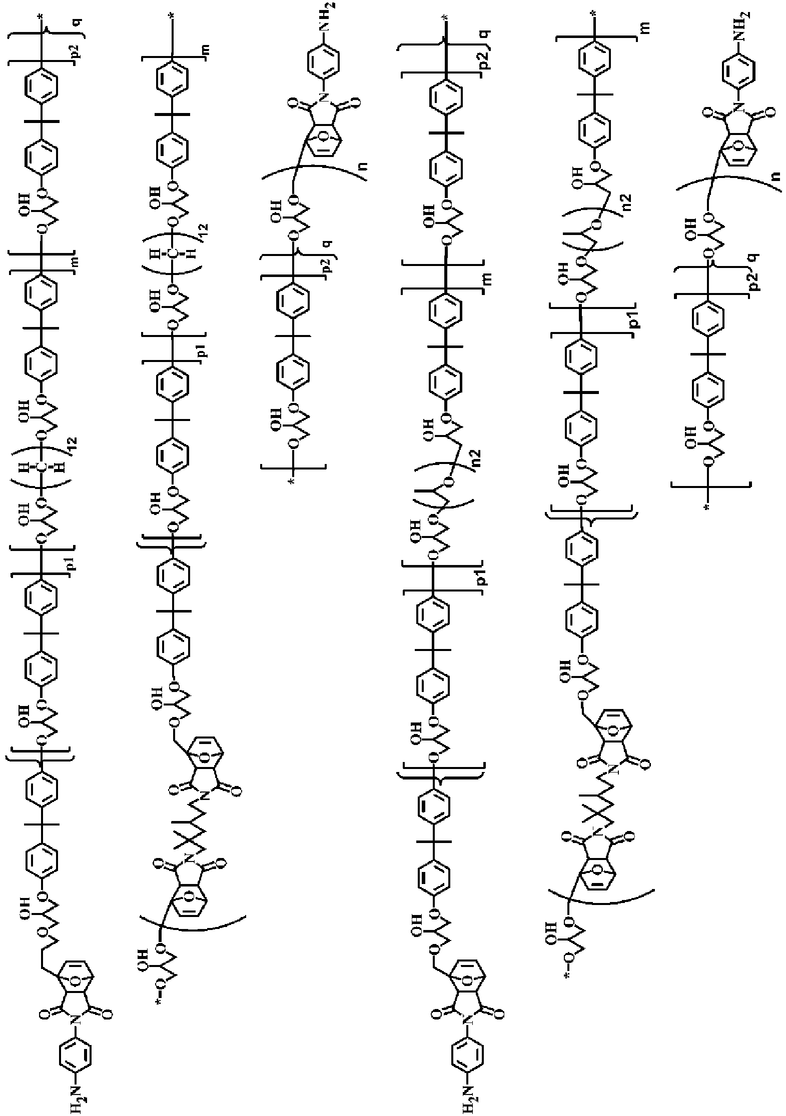 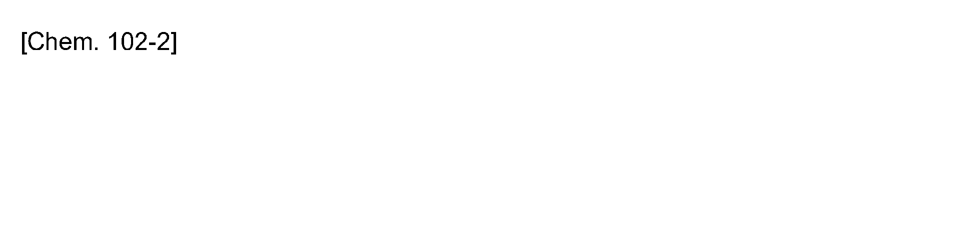 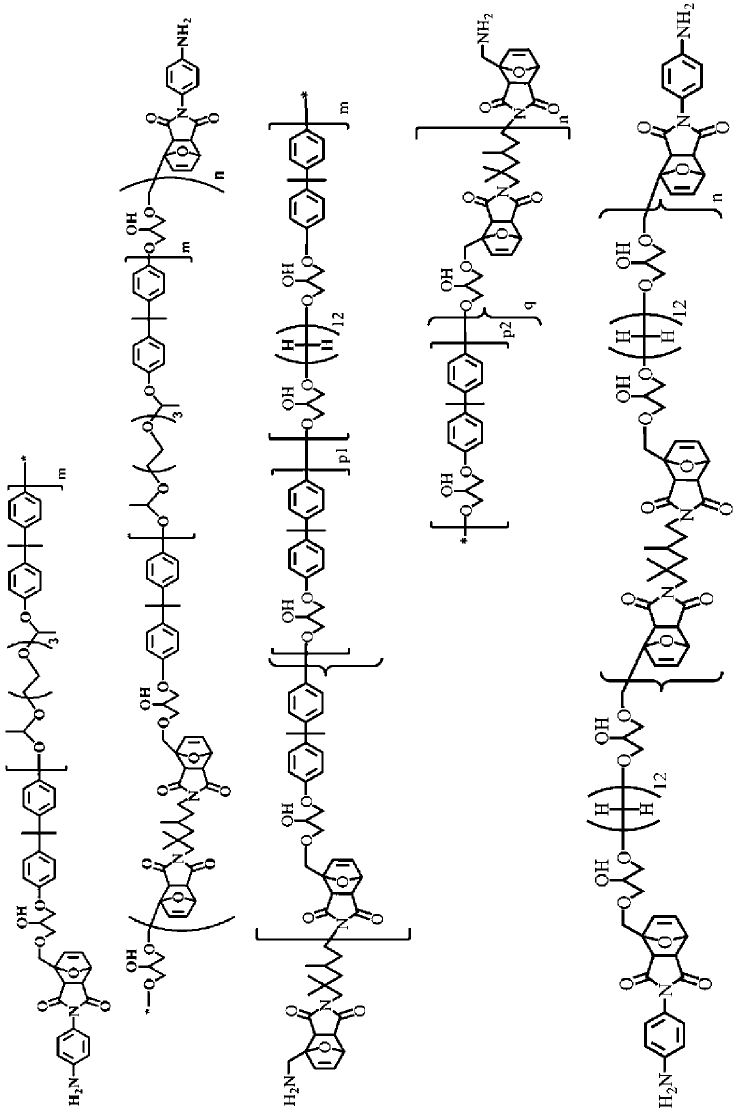 In the formulae, m, n, p1, p2, and q are average values of repetition, m is each independently from 0 to 25, n is from 0 to 10, p1 and p2 are each independently from 0 to 5, and q is from 0.5 to 5.

The method for producing the curable functional group-containing compound (C) of the present embodiment is not particularly limited, and the curable functional group-containing compound (C) may be produced stepwise using a known reaction depending on the intended structure, or can be obtained by appropriately combining commercially available raw materials. Hereinafter, a typical synthesis method will be described.

The General Formulae (4-1) and (4-2) each have, as reversible bindings, two Diels-Alder reaction units in the molecule, which are addition reaction parts formed by a Diels-Alder reaction composed of a furan structure and a maleimide structure. The General Formulae (4-1) and (4-2) can be obtained by using, a maleimide compound having the structure of Z1 for General Formula (4-1), and a furan compound having the structure of Z1 for General Formula (4-2).

It is widely known that a so-called Diels-Alder reaction in which a conjugated diene such as a furan structure and a parent diene such as a maleimide structure undergo an addition reaction to form a 6-membered ring is an equilibrium reaction, and a retro-Diels-Alder reaction that is a reverse reaction in which an addition reaction part is dissociated and returns to the original conjugated diene and the parent diene proceeds at a temperature higher than the temperature at which the addition reaction proceeds.

Examples of the maleimide compound having the structure of Z¹ include any of compounds listed in the following formulae. Among these, phenylmaleimide having a curable functional group (Fg) is preferable in terms of curability, and monofunctional phenylmaleimide is particularly preferable from the viewpoint of the balance between reactivity, physical properties of a cured article, and ease of dismantling. Among the monofunctional phenylmaleimides, phenylmaleimide having a functional group at the para position is particularly preferable from the viewpoint of heat resistance.

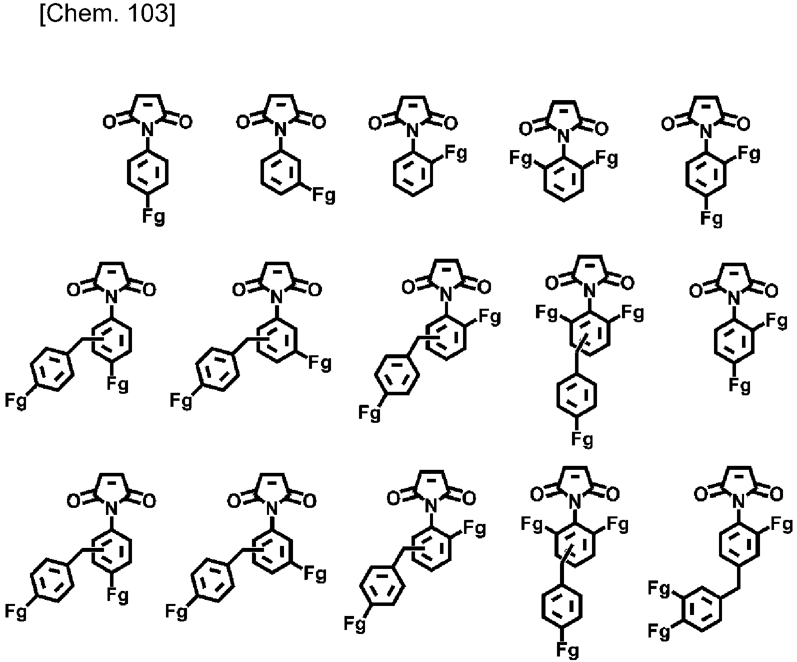

Examples of the furan compound having the structure of Z¹ include any of the compounds listed in the following formulae.

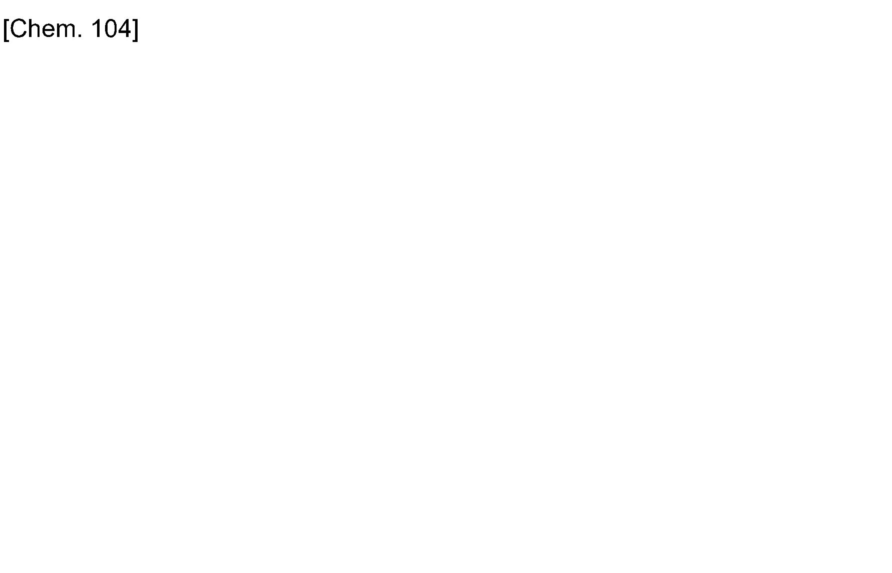

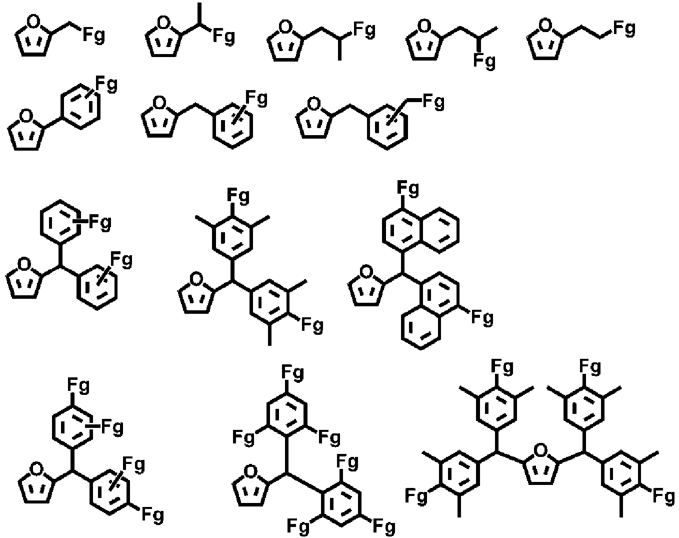

Among the formulae described above, the compounds shown below are particularly preferable from the viewpoint of excellent reactivity, physical properties of the cured article, and adhesiveness, flexibility, and dismantling properties of the resulting cured article.

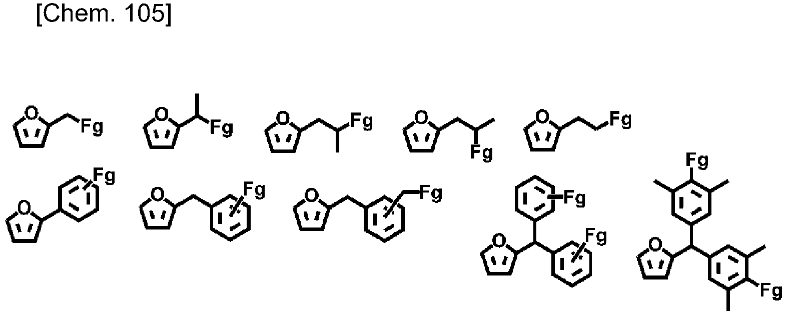

The structure of the maleimide compound and the furan compound includes those having, independently of each other, a hydrogen atom, a halogen atom, an alkoxy group, an aralkyloxy group, an aryloxy group, a nitro group, an amide group, an alkyloxycarbonyl group, an aryloxycarbonyl group, a cyano group, an alkyl group, a cycloalkyl group, an aralkyl group, or an aryl group as a substituent. In the structures of the compounds listed as the formulae described above, the alkoxy group, the aralkyloxy group, the aryloxy group, the carboxy group, the alkyloxycarbonyl group, the aryloxycarbonyl group, the alkyl group, the cycloalkyl group, the aralkyl group, and the aryl group include those in which various substituents are further bound to the carbon atom of the groups.

The Diels-Alder reaction may be performed by a known method. For example, the conjugated diene compound and the parent diene compound can be obtained by mixing the conjugated diene compound and the parent diene compound in an equimolar amount, in some cases, one component in excess, heating and melting the mixture or dissolving the mixture in a solvent, stirring the mixture at a temperature of room temperature to 110°C for 1 to 24 hours, and then distilling the mixture by filtration or solvent distillation without purification as it is, or can be obtained by an isolation and purification method typically used, such as recrystallization, reprecipitation, and chromatography. The meaning of "the conjugated diene compound and the parent diene compound in an equimolar amount" means that the conjugated diene structure of the conjugated diene compound and the ethylene structure of the parent diene compound are in an equimolar amount. For example, in the case of the glycidyl ether group-containing compound (C) represented by General Formula (4), when the furan compound as the conjugated diene compound has one conjugated diene structure in one molecule and the maleimide compound (bismaleimide) as the parent diene compound has two maleimide structures (ethylene structures) in one molecule, "the conjugated diene compound and the parent diene compound in an equimolar amount" means that the furan compound and the maleimide compound (bismaleimide) have a mole ratio of 2 : 1.

The synthesis of sites other than the reversible binding can be performed by a known method. For example, diglycidyl ether or aliphatic divinyl ether of an aliphatic dihydroxy compound is caused to react with an aromatic hydroxy compound to obtain a compound having a hydroxy group at a terminal, and then caused to react with furfuryl glycidyl ether or the like to introduce a furan structure at a terminal, and further, according to the above, a Diels-Alder reaction is performed with a maleimide compound having a curable functional group, whereby a compound represented by General Formula (4-1) can be obtained.

Alternatively, after a compound having a hydroxy group at a terminal is obtained, the compound is epoxidized to form a glycidyl ether group at a terminal, and then caused to react with furfuryl alcohol or the like to introduce a furan structure at a terminal, and further a Diels-Alder reaction is performed with a maleimide compound having a curable functional group according to the above, whereby a compound represented by General Formula (1) can be obtained.

Alternatively, an aromatic dihydroxy compound is caused to react with a dihalogenated alkyl compound or a dihalogenated aralkyl compound to obtain a compound having a halogenated alkyl group at a terminal, and then caused to react with furfuryl alcohol or the like to introduce a furan structure at a terminal, and further a maleimide compound having a curable functional group is subjected to a Diels-Alder reaction according to the above, whereby a compound represented by General Formula (1) can be obtained.

The diglycidyl ether of the aliphatic dihydroxy compound is not particularly limited, and examples thereof include 1,11-undecanediol diglycidyl ether, 1,12-dodecanediol diglycidyl ether, 1,13-tridecanediol, 1,14-tetradecanediol diglycidyl ether, 1,15-pentadecanediol diglycidyl ether, 1,16-hexadecanediol diglycidyl ether, 2-methyl-1,11-undecanediol diglycidyl ether, 3-methyl-1,11-undecanediol diglycidyl ether, and 2,6,10-trimethyl-1,11-undecanediol diglycidyl ether. These diglycidyl ethers may be used singly, or two or more of these may be used in combination.

Among these, from the viewpoint of excellent balance between flexibility and heat resistance of the resulting cured article, a compound having a structure in which glycidyl groups are linked to both terminals of an alkylene chain having from 12 to 14 carbon atoms via ether groups is preferable, and 1,12-dodecanediol diglycidyl ether, 1,13-tridecanediol, and 1,14-tetradecanediol diglycidyl ether are most preferably used.

The aliphatic divinyl ether is not particularly limited, and examples thereof include divinyl ethers of linear alkylene groups such as polyethylene glycol divinyl ether, polypropylene glycol divinyl ether, polytetramethylene glycol divinyl ether, 1,3-butylene glycol divinyl ether, 1,4-butanediol divinyl ether, 1,6-hexanediol divinyl ether, 1,9-nonanediol divinyl ether, and 1,10-decanediol divinyl ether, divinyl ethers of branched alkylene groups such as neopentyl glycol divinyl ether, divinyl ethers containing a cycloalkane structure such as 1,4-cyclohexanediol divinyl ether, 1,4-cyclohexanedimethanol divinyl ether, tricyclodecanediol divinyl ether, tricyclodecanediol divinyl ether, tricyclodecanedimethanol divinyl ether, pentacyclopentadecanedimethanol divinyl ether, and pentacyclopentadecanediol divinyl ether, bisphenol A divinyl ether, bisphenol F divinyl ether, and hydroquinone divinyl ether. These divinyl ethers may be used singly, or two or more of these may be used in combination.

Among these, a polyether structure or a linear alkylene chain divinyl ether having from 4 to 10 carbon atoms is preferable from the viewpoint of excellent balance between flexibility and toughness of the resulting cured article, and polyethylene glycol divinyl ether, polypropylene glycol divinyl ether, polytetramethylene glycol divinyl ether, 1,4-butanediol divinyl ether, 1,6-hexanediol divinyl ether, 1,9-nonanediol divinyl ether, or 1,10-decanediol divinyl ether is most preferably used.

The aromatic hydroxy compound is not particularly limited, and examples thereof include dihydroxybenzenes such as hydroquinone, resorcin, and catechol; trihydroxybenzenes such as pyrogallol, 1,2,4-trihydroxybenzene, and 1,3,5-trihydroxybenzene; triphenylmethane-type phenols such as 4,4',4"-trihydroxytriphenylmethane; dihydroxynaphthalenes such as 1,6-dihydroxynaphthalene, 2,7-dihydroxynaphthalene, 1,4-dihydroxynaphthalene, 1,5-dihydroxynaphthalene, 2,3-dihydroxynaphthalene, and 2,6-dihydroxynaphthalene; tetrafunctional phenols such as 1,1'-methylenebis-(2,7-naphthalenediol), 1,1'-binaphthalene-2,2',7,7'-tetraol, and 1,1'-oxybis-(2,7-naphthalenediol) obtained through coupling reaction of dihydroxynaphthalenes; bisphenols such as bis(4-hydroxyphenyl)methane, 2,2-bis(4-hydroxyphenyl)propane, 2,2-bis(3-methyl-4-hydroxyphenyl)propane, 1,1-bis(4-hydroxyphenyl)cyclohexane, 1,1-bis(4-hydroxyphenyl)-1-phenylethane, and bis(4-hydroxyphenyl)sulfone; biphenols such as 2,2'-biphenol, 4,4'-biphenol, (1,1'-biphenyl)-3,4-diol, 3,3'-dimethyl-(1,1-biphenyl)-4,4'-diol, 3-methyl-(1,1'-biphenyl)-4,4'-diol, 3,3',5,5'-tetramethylbiphenyl-2,2'-diol, 3,3',5,5'-tetramethylbiphenyl-4,4'-diol, 5-methyl-(1,1'-biphenyl)-3,4' diol, 3'-methyl-(1,1'-biphenyl)-3,4' diol, and 4'-methyl-(1,1'-biphenyl)-3,4' diol; alicyclic structure-containing phenols such as polyadducts of phenol and dicyclopentadiene and polyadducts of phenol and a terpene-based compound; naphthols such as bis(2-hydroxy-1-naphthyl)methane and bis(2-hydroxy-1-naphthyl) propane; and so-called Xylok-type phenolic resins which are condensation reaction products of phenol and phenylene dimethyl chloride or biphenylene dimethyl chloride. These may be used singly, or two or more of these may be used in combination. Further, examples include a bifunctional phenol compound having a structure in which a methyl group, a t-butyl group, or a halogen atom is substituted as a substituent in an aromatic nucleus of each of the above-described compounds. The alicyclic structure-containing phenols and the Xylok-type phenolic resin may contain not only a bifunctional component but also a tri- or higher functional component at the same time, but they may be used as they are, or only the bifunctional component may be taken out and used after a purification step such as column chromatography.

Among these, bisphenols are preferable from the viewpoint of excellent balance between flexibility and toughness when a cured article is formed, and bis(4-hydroxyphenyl)methane and 2,2-bis(4-hydroxyphenyl)propane are preferable from the viewpoint of particularly remarkable performance of imparting toughness. When the moisture resistance of the cured article is emphasized, it is preferable to use a phenol containing an alicyclic structure.

Regarding the reaction ratio between the diglycidyl ether of the aliphatic dihydroxy compound and the aromatic hydroxy compound, the former/the latter is preferably reacted in the range of from 1/1.01 to 1/5.0 (mole ratio), and (a1)/(a2) is preferably from 1/1.02 to 1/3.0 (mole ratio) from the viewpoint of having both flexibility and heat resistance of the resulting cured article in a well-balanced manner.

The reaction between the diglycidyl ether of the aliphatic dihydroxy compound and the aromatic hydroxy compound is preferably performed in the presence of a catalyst. As the catalyst, various catalysts can be used, and examples thereof include alkali (earth) metal hydroxides such as sodium hydroxide, potassium hydroxide, lithium hydroxide, and calcium hydroxide; alkali metal carbonates such as sodium carbonate and potassium carbonate; phosphorus compounds such as triphenylphosphine; chlorides such as DMP-30, DMAP, tetramethylammonium, tetraethylammonium, tetrabutylammonium, and benzyltributylammonium; bromides; chlorides such as iodide, tetramethylphosphonium, tetraethylphosphonium, tetrabutylphosphonium, and benzyltributylphosphonium; quaternary ammonium salts such as bromide and iodide; tertiary amines such as triethylamine, N,N-dimethylbenzylamine, 1,8-diazabicyclo[5.4.0]undecene, and 1,4-diazabicyclo[2.2.2]octane; and imidazoles such as 2-ethyl-4-methylimidazole and 2-phenylimidazole. Two or more of these catalysts may be used in combination. Among these, sodium hydroxide, potassium hydroxide, triphenylphosphine, and DMP-30 are preferable from the viewpoint that the reaction proceeds rapidly and the effect of reducing the amount of impurities is high. The amount of use of these catalysts is not particularly limited, but it is preferable to use these catalysts in an amount of from 0.0001 to 0.01 mol with respect to 1 mol of the hydroxyl group of the aromatic hydroxy compound. The form of these catalysts is not particularly limited either, and these catalysts may be used in the form of an aqueous solution or in the form of a solid.

The reaction between the diglycidyl ether of the aliphatic dihydroxy compound and the aromatic hydroxy compound can be performed in the absence of a solvent or in the presence of an organic solvent. Examples of the organic solvent that can be used include methyl cellosolve, ethyl cellosolve, toluene, xylene, methyl isobutyl ketone, dimethyl sulfoxide, propyl alcohol, and butyl alcohol. The amount of use of the organic solvent is usually from 50 to 300 mass%, preferably from 100 to 250 mass%, with respect to the total mass of the charged raw materials. These organic solvents can be used singly, or plural types of these may be used in combination. To rapidly perform the reaction, the reaction is preferably performed in the absence of a solvent, and on the other hand, dimethyl sulfoxide is preferably used from the viewpoint of being able to reduce impurities in the final product.

The reaction temperature in the case of performing the reaction is usually from 50 to 180°C, and the reaction time is usually from 1 to 10 hours. The reaction temperature is preferably from 100 to 160°C from the viewpoint of being able to reduce impurities in the final product. When the coloring of the resulting compound is large, an antioxidant or a reducing agent may be added to suppress the coloring. The antioxidant is not particularly limited, and examples thereof include hindered phenol compounds such as 2,6-dialkylphenol derivatives, divalent sulfur compounds, and phosphorous acid ester compounds containing trivalent phosphorus atoms. The reducing agent is not particularly limited, and examples thereof include hypophosphorous acid, phosphorous acid, thiosulfuric acid, sulfite, hydrosulfite, and salts thereof.

After completion of the reaction, the reaction mixture can be neutralized or washed with water until the pH value of the reaction mixture reaches from 3 to 7, preferably from 5 to 7. The neutralization treatment and the water washing treatment may be performed according to a known method. For example, when a basic catalyst is used, an acidic substance such as hydrochloric acid, sodium hydrogen phosphate, p-toluenesulfonic acid, or oxalic acid can be used as the neutralizing agent. After the neutralization or water washing treatment, the solvent is distilled off under reduced pressure heating as necessary, and the product is concentrated to obtain a compound.

Regarding the reaction ratio between the aliphatic divinyl ether and the aromatic hydroxy compound, the former/the latter is preferably reacted in the range of from 1/1.01 to 1/5.0 (mole ratio), and (a1)/(a2) is preferably from 1/1.02 to 1/3.0 (mole ratio) from the viewpoint of having both flexibility and heat resistance of the resulting cured article in a well-balanced manner.

The reaction between the diglycidyl ether of the aliphatic dihydroxy compound and the aromatic hydroxy compound sufficiently proceeds without using a catalyst, but a catalyst can be appropriately used from the viewpoint of selecting a raw material and increasing the reaction speed. Examples of the catalyst that can be used here include inorganic acids such as sulfuric acid, hydrochloric acid, nitric acid, and phosphoric acid; organic acids such as toluenesulfonic acid, methanesulfonic acid, xylenesulfonic acid, trifluoromethanesulfonic acid, oxalic acid, formic acid, trichloroacetic acid, and trifluoroacetic acid; and Lewis acids such as aluminum chloride, iron chloride, tin chloride, gallium chloride, titanium chloride, aluminum bromide, gallium bromide, boron trifluoride ether complex, and boron trifluoride phenol complex. The amount of use of the catalyst is usually in the range of from 10 ppm to 1 wt.% with respect to the mass of the divinyl ether compound. In this case, it is preferable to select the type and amount of use of the catalyst so as not to cause a nuclear addition reaction of the vinyl group to the aromatic ring.

The reaction between the aliphatic divinyl ether and the aromatic hydroxy compound can be performed in the absence of a solvent or in the presence of an organic solvent. Examples of the organic solvent include aromatic organic solvents such as benzene, toluene, and xylene; ketone-based organic solvents such as acetone, methyl ethyl ketone, methyl isobutyl ketone, and cyclohexanone; and alcohol-based organic solvents such as methanol, ethanol, isopropyl alcohol, and normal butanol. The amount of use of the organic solvent is usually from 50 to 300 mass%, preferably from 100 to 250 mass%, with respect to the total mass of the charged raw materials. These organic solvents can be used singly, or plural types of these may be used in combination.

The reaction temperature in the case of performing the reaction is usually from 50 to 150°C, and the reaction time is usually from 0.5 to 10 hours. In this case, to prevent self-polymerization of the vinyl ether group, the reaction under an oxygen atmosphere is more preferable.

After completion of the reaction, when an organic solvent is used, the organic solvent is removed by heating under reduced pressure, and when a catalyst is used, the catalyst is deactivated by a deactivator or the like as necessary and removed by washing with water or a filtration operation, whereby a compound can be obtained.

The compound having a hydroxyl group at a terminal thus obtained is caused to react with furfuryl glycidyl ether or the like. In this case, sodium hydroxide, potassium hydroxide, potassium carbonate, or the like can be used as a catalyst, and toluene, acetone, methyl ethyl ketone (MEK), methyl isobutyl ketone, acetonitrile, dimethylformamide, or the like may be used as a solvent. The reaction temperature is from room temperature to 200°C, and the reaction time is from 1 to 24 hours. Thereafter, the catalyst is removed by filtration or the like, and a target compound can be obtained by extraction, solvent removal, or the like. The Diels-Alder reaction on this compound is as described above.

The aliphatic hydroxy compound is not particularly limited, and examples thereof include 1,4-butanediol, 1,5-pentanediol, 1,6-hexanediol, 1,7-heptanediol, 1,8-octanediol, 1,9-nonanediol, 1,10-decanediol, 1,11-undecanediol, 1,12-dodecanediol, 1,13-tridecanediol, 1,14-tetradecanediol, 1,15-pentadecanediol, 1,16-hexadecanediol, 2-methyl-1,11-undecanediol, 3-methyl-1,11-undecanediol, 2,6,10-trimethyl-1,11-undecanediol, polyethylene glycol, polypropylene glycol, polytetramethylene glycol, polypentamethylene glycol diglycidyl ether, polyhexamethylene glycol diglycidyl ether, and polyheptamethylene glycol diglycidyl ether. These may be used singly, or two or more of these may be used in combination.

Among these, a dihydroxy compound having a polyether structure or a linear alkylene chain having from 12 to 14 carbon atoms is preferably used from the viewpoint of excellent balance between flexibility and heat resistance of the resulting cured article, and polyethylene glycol, polypropylene glycol, polytetramethylene glycol, 1,12-dodecanediol, 1,13-tridecanediol, or 1,14-tetradecanediol is most preferably used.

The dihalogenated alkyl compound is not particularly limited, and examples thereof include 1,4-dichlorobutane, 1,5-dichloropentane, 1,6-dichlorohexane, 1,7-dichloroheptane, 1,8-dichlorooctane, 1,9-dichlorononane, 1,10-dichlorodecane, 1,11-dichloroundecane, 1,12-dichlorododecane, 1,4-dibromobutane, 1,5-dibromopentane, 1,6-dibromohexane, 1,7-dibromoheptane, 1,8-dibromooctane, 1,9-dibromononane, 1,10-dibromodecane, 1,11-dibromoundecane, and 1,12-dibromododecane. These may be used singly, or two or more of these may be used in combination.

The dihalogenated aralkyl compound is not particularly limited, and examples thereof include dichloroxylene, dichloromethylbiphenyl, dibromoxylene, and dibromomethylbiphenyl. These may be used singly, or two or more of these may be used in combination.

Regarding the reaction ratio between the aromatic dihydroxy compound and the dihalogenated alkyl compound or the dihalogenated aralkyl compound, the former/the latter is preferably reacted in the range of from 1/1.01 to 1/5.0 (mole ratio), and (a1)/(a2) is preferably from 1/1.02 to 1/3.0 (mole ratio) from the viewpoint of having both flexibility and heat resistance in the resulting cured article in a well-balanced manner.

The reaction between the aromatic dihydroxy compound and the dihalogenated alkyl compound or the dihalogenated aralkyl compound is preferably performed in the presence of a catalyst. As the catalyst, various catalysts can be used, and examples thereof include alkali (earth) metal hydroxides such as sodium hydroxide, potassium hydroxide, lithium hydroxide, and calcium hydroxide, and alkali metal carbonates such as sodium carbonate and potassium carbonate. Two or more of these catalysts may be used in combination. Among these, sodium hydroxide, potassium hydroxide, and potassium carbonate are preferable from the viewpoint that the reaction proceeds rapidly and the effect of reducing the amount of impurities is high. The amount of use of these catalysts is not particularly limited, but it is preferable to use these catalysts in an amount of from 0.0001 to 10 mol with respect to 1 mol of the hydroxyl group of the aromatic hydroxy compound. The form of these catalysts is not particularly limited either, and these catalysts may be used in the form of an aqueous solution or in the form of a solid.

The reaction between the aromatic dihydroxy compound and the dihalogenated alkyl compound or the dihalogenated aralkyl compound can be performed in the absence of a solvent or in the presence of an organic solvent. Examples of the organic solvent that can be used include toluene, acetone, methyl ethyl ketone (MEK), methyl isobutyl ketone, acetonitrile, and dimethylformamide. The amount of use of the organic solvent is usually from 50 to 300 mass%, preferably from 100 to 1000 mass%, with respect to the total mass of the charged raw materials. These organic solvents can be used singly, or plural types of these may be used in combination.

The reaction temperature in the case of performing the reaction is usually from room temperature to 150°C, and the reaction time is usually from 1 to 24 hours. The reaction temperature is preferably from room temperature to 100°C from the viewpoint of being able to reduce impurities in the final product.

Furfuryl alcohol or the like is caused to react with the compound having a halogenated alkyl group at a terminal thus obtained. In this case, sodium hydroxide, potassium hydroxide, potassium carbonate, or the like can be used as a catalyst, and toluene, acetone, methyl ethyl ketone (MEK), methyl isobutyl ketone, acetonitrile, dimethylformamide, or the like may be used as a solvent. The reaction temperature is from room temperature to 200°C, and the reaction time is from 1 to 24 hours. Thereafter, the catalyst is removed by filtration or the like, and a target compound can be obtained by extraction, solvent removal, or the like. The Diels-Alder reaction on this compound is as described above.

### Thermally Expandable Particles (D)

The thermally expandable particles (D) contained in the curable resin composition of the present embodiment may be made of an inorganic material or an organic material. Examples of the inorganic material include thermally expandable graphite provided in JP 2000-44219 A or the like. Examples of the thermally expandable particles made of an organic material include a thermally expandable microcapsule obtained by using a thermoplastic polymer as an outer shell and microencapsulating a volatile expander that becomes gaseous at a temperature equal to or lower than the softening point of the thermoplastic polymer.

Among these, it is preferable to use a thermally expandable microcapsule made of an organic material from the viewpoint of having excellent uniform dispersibility and electrical insulation properties when a curable resin composition is formed.
Among these, it is preferable to use thermally expandable graphite from the viewpoint of heat resistance durability and conductivity of the expandable particles.

### Thermally Expandable Microcapsule

A method for producing the thermally expandable microcapsule has been provided in JP 42-26524 B in the past, but from the viewpoint of thermally curing the epoxy resin in the present embodiment, the thermally expandable microcapsule preferably has heat resistance. The method for producing heat-resistant thermally expandable microcapsules is provided in, for example, WO 99/46320, WO 99/43758, JP 2002-226620 A, and the like.

That is, from the viewpoint that it is preferable that the particles are particles that keep their shapes as they are without thermal expansion during thermal curing of the epoxy resin and thermally expand at a high temperature by thermal energy after use, it is preferable that the thermally expandable microcapsules are thermally expandable microcapsules in which a polymer obtained by polymerizing a nitrile-based monomer and a monomer having a carboxy group as essential components is used as an outer shell polymer.

Further, to impart heat resistance, it is also preferable to use a monomer having an amide group or a monomer having a cyclic structure in a side chain in combination.

As a method for obtaining the thermally expandable microcapsules having heat resistance, for example, the outer shell polymer is adjusted by appropriately blending a polymerization initiator with the above-described components. As the polymerization initiator, a known polymerization initiator such as a peroxide or an azo compound can be used. Examples thereof include azobisisobutyronitrile, benzoyl peroxide, lauryl peroxide, diisopropyl peroxydicarbonate, t-butyl peroxide, and 2,2'-azobis(2,4-dimethylvaleronitrile). Preferably, an oil-soluble polymerization initiator soluble in the polymerizable monomer to be used is used. The glass transition temperature (Tg) of the polymer constituting the outer shell of the thermally expandable microcapsules is desirably 120°C or higher. The Tg of the polymer can be calculated from the Tg of each homopolymer of the configured monomer. The Tg of the polymer can also be measured by differential scanning calorimetry (DSC) or the like.

The foaming agent contained in the microcapsule is a substance that becomes gaseous at a temperature equal to or lower than the softening point of the outer shell polymer, and a known substance is used. Examples thereof include low boiling point liquids such as propane, propylene, butene, normal butane, isobutane, isopentane, neopentane, normal pentane, normal hexane, isohexane, heptane, octane, nonane, decane, petroleum ether, halides of methane, and tetraalkylsilane, and compounds such as AIBN, which is thermally decomposed by heating to become gaseous. The foaming agent is selected as needed depending on the temperature range in which the capsule is desired to be foamed. These foaming agents are used singly, or two or more of these may be used in combination.

Fluorine-based compounds such as HCF, HCFC, HFC, and HFE; commonly called chlorofluorocarbons, fluorocarbons, fluoroethers, and the like are also exemplified, but it is better to avoid using these in the current social situation because of concerns about ozone layer destruction and global warming. In actual production, a known method for producing a thermally expandable microcapsule is generally used. That is, as the dispersion stabilizer in an aqueous system, inorganic fine particles such as silica, magnesium hydroxide, calcium phosphate, and aluminum hydroxide are used. In addition, a condensation product of diethanolamine and an aliphatic dicarboxylic acid, polyvinylpyrrolidone, methyl cellulose, polyethylene oxide, polyvinyl alcohol, various emulsifiers, and the like are used as the dispersion stabilizing aid.

The thermally expandable microcapsules have an average particle diameter of from 1 to 500 µm, preferably from 3 to 100 µm, more preferably from 5 to 50 µm. As a method for measuring the average particle diameter of the thermally expandable microcapsules, for example, the volume-average particle diameter can be measured using a particle size distribution diameter measuring instrument (LA-950, manufactured by HORIBA, Ltd.).

### Thermally Expandable Graphite

A method for producing the thermally expandable graphite is provided in JP 2000-44219 A or the like. It is preferable to have heat resistance from the viewpoint of thermally curing the epoxy resin in the present embodiment. A method for producing heat-resistant thermally expandable graphite is provided in, for example, JP 2012-193053 A.

The thermally expandable graphite can be usually obtained by treating graphite such as natural graphite, pyrolytic graphite, or kish graphite with a mixture of concentrated sulfuric acid and a strong oxidizing agent (hereinafter, this treatment is referred to as acid treatment) to form an interlayer compound between graphite layers, then washing with water, filtering, and drying. As the acid treatment method, a method based on concentrated sulfuric acid, such as concentrated sulfuric acid and nitric acid, concentrated sulfuric acid and potassium permanganate, concentrated sulfuric acid and perchloric acid, or concentrated sulfuric acid and hydrogen peroxide, is generally used. A method using only fuming nitric acid is also known.

The thermally expandable graphite is selected depending on the range of the major axis of the particle. Thus, the commercially available expandable graphite is expressed by the particle size instead of the major axis. Specifically, the commercially available expandable graphite is classified with a sieve, and from the mesh size of the sieve, the characteristics of the expandable graphite product are displayed with the contents including the mesh size and the percentage of the particles with particle sizes that have passed the mesh.

A preferable particle size product of the thermally expandable graphite used as the thermally expandable particles (D) according to the present embodiment is from 20 to 300 mesh, more preferably from 30 to 200 mesh.

The thermally expandable particles (D) have an average particle diameter of from 1 to 500 µm, preferably from 3 to 100 µm, more preferably from 5 to 50 µm.

As the thermally expandable particles (D), the thermally expandable particles (D) may be mixed with the epoxy resin (A) and the epoxy resin (B) as they are, or may be mixed with the epoxy resin (A) and the epoxy resin (B) using a master batch in which the thermally expandable particles (D) are dispersed in various resins at a high concentration.

As such thermally expandable particles (D), commercially available thermally expandable particles can also be used. Examples of the commercially available product include Matsumoto Microsphere (product name: F-20D, F-30D, F-40D, FN-100D, FN-100MD, FN-100SD, FN-100SSD, FN-180D, FN-180SD, FN-180SSD, F-190D, F-260D) manufactured by Matsumoto Yushi-Seiyaku Co., Ltd., KUREHA Microsphere (product name: H850D, H880D, S2340D, S2640D) manufactured by KUREHA CORPORATION, Expanded Graphite (product name: EXP-50S120K, EXP-50S150) manufactured by Fuji Graphite Works Co., Ltd., Expanded Graphite (product name: 953240L, 9550250) manufactured by Ito Graphite Co., Ltd, and Thermally Expandable Graphite (product name: 50LTE-U, MZ-260, CA-60, SS-3, SS-3LA) manufactured by AIR WATER INC. Particles that do not thermally expand at the curing temperature of the curable resin composition but thermally expand at the heating temperature at the time of dismantling are preferably selected.

The proportion of the thermally expandable particles (D) used is preferably in the range of from 3 to 40 parts by mass, more preferably in the range of from 5 to 30 parts by mass, still more preferably in the range of from 6 to 20 parts by mass, particularly preferably in the range of from 7 to 15 parts by mass, with respect to 100 parts by mass of the total of the epoxy resin (A) and the epoxy resin (B), from the viewpoint of exhibiting the effect of sufficiently expanding at the time of dismantling after use to lower the adhesiveness without impairing the adhesiveness at the time of curing the curable resin composition of the present embodiment and the flexibility of the cured article.

### Curing Agent

The curable resin composition of the present embodiment may further contain an epoxy resin curing agent that does not belong to the curable functional group-containing compound (C).

Examples of the curing agent that can be used here include various known epoxy resin curing agents such as amine compounds that do not belong to the curable functional group-containing compound (C), acid anhydrides, amide compounds, hydroxyl group-containing compounds that do not belong to the curable functional group-containing compound (C), carboxylic acid-based compounds, and thiol compounds.

Examples of the amine compound include aliphatic amine compounds such as trimethylenediamine, ethylenediamine, N,N,N',N'-tetramethylethylenediamine, pentamethyldiethylenetriamine, triethylenediamine, dipropylenediamine, N,N,N',N'-tetramethylpropylenediamine, tetramethylenediamine, pentanediamine, hexamethylenediamine, trimethylhexamethylenediamine, N,N,N',N'-tetramethylhexamethylenediamine, N,N-dimethylcyclohexylamine, diethylenetriamine, triethylenetetramine, tetraethylenepentamine, dimethylaminopropylamine, diethylaminopropylamine, dibutylaminopropylamine, 1,4-diazabicyclo(2,2,2)octane (triethylenediamine), polyoxyethylenediamine, polyoxypropylenediamine, bis(2-dimethylaminoethyl)ether, dimethylaminoethoxyethoxyethanol, triethanolamine, dimethylaminohexanol, benzylmethylamine, dimethylbenzylamine, m-xylenediamine, and α-methylbenzylmethylamine;

Alicyclic and heterocyclic amine compounds such as piperidine, piperazine, menthanediamine, isophoronediamine, methylmorpholine, ethylmorpholine, N,N',N"-tris(dimethylaminopropyl)hexahydro-s-triazine, 3,9-bis(3-aminopropyl)-2,4,8,10-tetraoxyspiro(5,5)undecane adduct, N-aminoethylpiperazine, trimethylaminoethylpiperazine, bis(4-aminocyclohexyl)methane, N,N'-dimethylpiperazine, and 1,8-diazabicyclo-[5.4.0]-undecene (DBU);

Aromatic amine compounds such as o-phenylenediamine, m-phenylenediamine, p-phenylenediamine, diaminodiphenylmethane, diaminodiphenylsulfone, pyridine, and picoline; and

Modified amine compounds such as epoxy compound-added polyamine, Michael-added polyamine, Mannich-added polyamine, thiourea-added polyamine, ketone-capped polyamine, dicyandiamide, guanidine, organic acid hydrazide, diaminomaleonitrile, amine imide, boron trifluoride-piperidine complex, and boron trifluoride-monoethylamine complex.

Examples of the acid anhydride include phthalic anhydride, trimellitic anhydride, pyromellitic anhydride, maleic anhydride, polypropylene glycol maleic anhydride, tetrahydrophthalic anhydride, methyltetrahydrophthalic anhydride, methylnadic anhydride, hexahydrophthalic anhydride, and methylhexahydrophthalic anhydride.

Examples of the hydroxyl group-containing compound include bisphenols such as bis(4-hydroxyphenyl)methane, 2,2-bis(4-hydroxyphenyl)propane, 2,2-bis(3-methyl-4-hydroxyphenyl)propane, 1,1-bis(4-hydroxyphenyl)cyclohexane, 1,1-bis(4-hydroxyphenyl)-1-phenylethane, and bis(4-hydroxyphenyl)sulfone; and polyhydric phenol compounds such as phenol novolak resin, cresol novolak resin, aromatic hydrocarbon formaldehyde resin-modified phenol resin, dicyclopentadienephenol addition type resin, phenol aralkyl resin (Xylok resin), naphthol aralkyl resin, trimethylolmethane resin, tetraphenylethane resin, naphthol novolak resin, naphthol-phenol co-condensation novolak resin, naphthol-cresol co-condensation novolak resin, biphenyl-modified phenol resin (polyhydric phenol compounds having phenol nuclei linked by a bismethylene group), biphenyl-modified naphthol resin (polyhydric naphthol compounds having phenol nuclei linked by a bismethylene group), aminotriazine-modified phenol resin (polyhydric phenol compounds having phenol nuclei linked by melamine, benzoguanamine, and the like), and alkoxy group-containing aromatic ring-modified novolak resin (polyhydric phenol compounds having phenol nucleus and alkoxy group-containing aromatic ring linked with formaldehyde).

Examples of the amide-based compound include dicyandiamide and polyamidoamine. Examples of the polyamidoamine include those obtained by reacting an aliphatic dicarboxylic acid such as succinic acid, glutaric acid, adipic acid, pimelic acid, suberic acid, or azelaic acid, or a carboxylic acid compound such as a fatty acid or dimer acid with an aliphatic polyamine, a polyamine having a polyoxyalkylene chain, or the like.

Examples of the carboxylic acid compound include carboxylic acid polymers such as carboxylic acid-terminated polyester, polyacrylic acid, and maleic acid-modified polypropylene glycol.

The thiol compound preferably contains two or more thiol groups in one molecule. Examples thereof include 3,3'-dithiodipropionic acid, trimethylolpropane tris(thioglycolate), pentaerythritol tetrakis(thioglycolate), ethylene glycol dithioglycolate, 1,4-bis(3-mercaptobutyryloxy)butane, tris[(3-mercaptopropionyloxy)-ethyl]-isocyanurate, trimethylolpropane tris(3-mercaptopropionate), pentaerythritol tetrakis(3-mercaptopropionate), pentaerythritol tetrakis(3-mercaptobutyrate), dipentaerythritol hexakis(3-mercaptopropionate), 1,3,4,6-tetrakis(2-mercaptoethyl)glycoluril, 4-butanedithiol, 1,6-hexanedithiol, and 1,10-decanedithiol.

When these curing agents are used, only one curing agent may be used, or two or more curing agents may be mixed. In applications such as underfill materials and general coating materials, it is preferable to use an amine-based compound, a carboxylic acid-based compound, and/or an acid anhydride-based compound. In the applications to adhesives and flexible wiring boards, amine compounds, in particular, dicyandiamide, are preferable from the viewpoint of workability, curability and long-term stability. In the applications to a semiconductor sealing material, a solid type phenolic compound is preferable from the viewpoint of heat resistance of the cured article. In the applications to batteries, an aliphatic amine or a thiol compound is preferable from the viewpoint of low-temperature curing.

The amount of use of the epoxy resin and the curing agent is not particularly limited, but is preferably an amount such that the active group capable of reacting with an epoxy group, including the hydroxyl group-containing cured article of the present invention, is from 0.4 to 1.5 equivalents with respect to 1 equivalent in total of the epoxy groups in the resin composition, from the viewpoint of favorable mechanical properties and the like of the resulting cured article.

### Additional Epoxy Resin

In the curable resin composition of the present embodiment, an additional epoxy resin that does not belong to the epoxy resin (A) and the epoxy resin (B) according to the present embodiment can be used in combination as long as the effect of the present embodiment is not impaired. In this case, the total amount of the epoxy resin (A) and the epoxy resin (B) in the curable resin composition of the present embodiment is preferably 30 mass% or more, particularly preferably 40 mass% or more in all the epoxy resins.

The additional epoxy resin that can be used in combination is not limited in any way other than those not belonging to the epoxy resin (A) or the epoxy resin (B). Examples thereof include liquid epoxy resins such as bisphenol A type epoxy resin, bisphenol F type epoxy resin, bisphenol S type epoxy resin, bisphenol AD type epoxy resin, polyhydroxybenzene type epoxy resin, polyhydroxynaphthalene type epoxy resin, biphenyl type epoxy resin, and tetramethylbiphenyl type epoxy resin, brominated epoxy resins such as brominated phenol novolac type epoxy resin, solid bisphenol A type epoxy resin, phenol novolac type epoxy resin, cresol novolac type epoxy resin, triphenylmethane type epoxy resin, tetraphenylethane type epoxy resin, dicyclopentadiene-phenol addition reaction type epoxy resin, phenol aralkyl type epoxy resin, phenylene ether type epoxy resin, naphthylene ether type epoxy resin, naphthol novolac type epoxy resin, naphthol aralkyl type epoxy resin, naphthol-phenol co-condensed novolac type epoxy resin, naphthol-cresol co-condensed novolac type epoxy resin, aromatic hydrocarbon formaldehyde resin-modified phenol resin-type epoxy resin, and biphenyl-modified novolac type epoxy resin. These may be used singly, or two or more of these may be used in combination. It is preferable to use the epoxy resin by selecting various types depending on the intended use, physical properties of the cured article, and the like.

The concentration of the reversible binding in the curable resin composition of the present embodiment is preferably 0.10 mmol/g or more with respect to the total mass of the curable components in the curable resin composition. According to such a configuration, the cured article obtained from the curable resin composition is further improved in all of adhesiveness, flexibility, and dismantling properties. The concentration of the reversible binding is more preferably from 0.10 to 3.00 mmol/g, still more preferably from 0.15 to 2.00 mmol/g. When the curable functional group-containing compound (C) of the present embodiment has a plurality of reversible bindings, or when a hydroxyl group-containing compound having the reversible binding is used singly or in combination with another curing agent as a curing agent, the total concentration of the reversible bindings is preferably 0.10 mmol/g or more, more preferably from 0.10 to 3.00 mmol/g, still more preferably from 0.15 to 2.00 mmol/g, with respect to the total mass of the curable components in the curable resin composition. The concentration of the reversible binding can be appropriately selected according to the glass transition temperature or the like defined by the tanδ peak top of a dynamic viscoelasticity measuring instrument (DMA) of the intended cured article. For example, when the glass transition temperature is used as a reference, as long as the glass transition temperature of the cured article is around room temperature, sufficient adhesiveness, flexibility, and dismantling functions are easily exhibited even on a low concentration side in a preferable range. On the other hand, when the glass transition temperature of the intended cured article exceeds 100°C as a guide, the functions are easily exhibited on the high concentration side in a preferable range. However, in a temperature range exceeding the glass transition temperature measured by DMA, molecular mobility is generally high, and sufficient adhesiveness, flexibility, and dismantling functions are easily exhibited even when the concentration of the curable functional group-containing compound (C) is low. Thus, for example, by appropriately adjusting the aging temperature for curing or the heating temperature for dismantling, the effects of exhibiting adhesiveness, flexibility, and dismantling functions can be adjusted. In this manner, the relationship between the glass transition temperature of the cured article and the concentration of the reversible binding is not limited to these relationships.

The ratio between the total of the glycidyl ether groups and the total of the active groups capable of reacting with the glycidyl ether groups in the curable resin composition of the present embodiment is not particularly limited, but is preferably an amount such that the active groups capable of reacting with the glycidyl ether groups are from 0.4 to 1.5 equivalents with respect to 1 equivalent of the total of the glycidyl ether groups in the resin composition from the viewpoint that favorable mechanical properties and the like are obtained in the resulting cured article.

### Curing Accelerator

The curable resin composition of the present embodiment may contain a curing accelerator. As the curing accelerator, various curing accelerators can be used. Examples thereof include a urea compound, a phosphorus compound, a tertiary amine, imidazole, imidazoline, an organic acid metal salt, a Lewis acid, and an amine complex salt. In the case of use as an adhesive, a urea compound, in particular, 3-(3,4-dichlorophenyl)-1,1-dimethylurea (DCMU) is preferable from the viewpoint of excellent workability and low-temperature curability. In the case of use as a semiconductor sealing material, triphenylphosphine is preferable as a phosphorus-based compound, and 1,8-diazabicyclo-[5.4.0]-undecene is preferable as a tertiary amine, from the viewpoint of excellent curability, heat resistance, electrical characteristics, moisture resistance reliability, and the like.

Examples of the phosphorus compound include alkylphosphines such as ethylphosphine and butylphosphine; primary phosphines such as phenylphosphine; dialkylphosphines such as dimethylphosphine and dipropylphosphine; secondary phosphines such as diphenylphosphine and methylethylphosphine; and tertiary phosphines such as trimethylphosphine, triethylphosphine, and triphenylphosphine.

Examples of the imidazole include imidazole, 1-methylimidazole, 2-methylimidazole, 3-methylimidazole, 4-methylimidazole, 5-methylimidazole, 1-ethylimidazole, 2-ethylimidazole, 3-ethylimidazole, 4-ethylimidazole, 5-ethylimidazole, 1-n-propylimidazole, 2-n-propylimidazole, 1-isopropylimidazole, 2-isopropylimidazole, 1-n-butylimidazole, 2-n-butylimidazole, 1-isobutylimidazole, 2-isobutylimidazole, 2-undecyl-1H-imidazole, 2-heptadecyl-1H-imidazole, 1,2-dimethylimidazole, 1,3-dimethylimidazole, 2,4-dimethylimidazole, 2-ethyl-4-methylimidazole, 1-phenylimidazole, 2-phenyl-1H-imidazole, 4-methyl-2-phenyl-1H-imidazole, 2-phenyl-4-methylimidazole, 1-benzyl-2-methylimidazole, 1-benzyl-2-phenylimidazole, 1-cyanoethyl-2-methylimidazole, 1-cyanoethyl-2-ethyl-4-methylimidazole, 1-cyanoethyl-2-undecylimidazole, 1-cyanoethyl-2-phenylimidazole, a 2-phenylimidazole isocyanuric acid adduct, a 2-methylimidazole isocyanuric acid adduct, 2-phenyl-4,5-dihydroxymethylimidazole, 2-phenyl-4-methyl-5-hydroxymethylimidazole, 1-cyanoethyl-2-phenyl-4,5-di(2-cyanoethoxy)methylimidazole, 1-dodecyl-2-methyl-3-benzylimidazolium chloride, and 1-benzyl-2-phenylimidazole hydrochloride.

Examples of the imidazoline compound include 2-methylimidazoline and 2-phenylimidazoline.

Examples of the urea compound include p-chlorophenyl-N,N-dimethylurea, 3-phenyl-1,1-dimethylurea, 3-(3,4-dichlorophenyl)-N,N-dimethylurea, and N-(3-chloro-4-methylphenyl)-N',N'-dimethylurea.

### Additional Thermosetting Resin and Thermoplastic Resin

In the curable resin composition of the present embodiment, an additional thermosetting resin or thermoplastic resin may be used in combination as long as the effect of the present embodiment is not impaired.

Examples of the additional thermosetting resin include cyanate ester resins, resins having a benzoxazine structure, active ester resins, vinylbenzyl compounds, acrylic compounds, and copolymers of styrene and maleic anhydride. When the additional thermosetting resins described above are used in combination, the amount of use thereof is not particularly limited as long as the effect of the present embodiment is not impaired, but it is preferably in the range of from 1 to 50 parts by mass in 100 parts by mass of the curable resin composition.

Examples of the cyanate ester resin include a bisphenol A type cyanate ester resin, a bisphenol F type cyanate ester resin, a bisphenol E type cyanate ester resin, a bisphenol S type cyanate ester resin, a bisphenol sulfide type cyanate ester resin, a phenylene ether type cyanate ester resin, a naphthylene ether type cyanate ester resin, a biphenyl type cyanate ester resin, a tetramethyl biphenyl type cyanate ester resin, a polyhydroxynaphthalene type cyanate ester resin, a phenol novolac type cyanate ester resin, a cresol novolac type cyanate ester resin, a triphenylmethane type cyanate ester resin, a tetraphenylethane type cyanate ester resin, a dicyclopentadiene-phenol addition reaction type cyanate ester resin, a phenol aralkyl type cyanate ester resin, a naphthol novolac type cyanate ester resin, a naphthol aralkyl type cyanate ester resin, a naphthol-phenol co-condensed novolac type cyanate ester resin, a naphthol-cresol co-condensed novolac type cyanate ester resin, an aromatic hydrocarbon formaldehyde resin-modified phenolic resin type cyanate ester resin, a biphenyl-modified novolac type cyanate ester resin, and an anthracene type cyanate ester resin. These may be used singly, or two or more of these may be used in combination.

Among these cyanate ester resins, it is preferable to use a bisphenol A type cyanate ester resin, a bisphenol F type cyanate ester resin, a bisphenol E type cyanate ester resin, a polyhydroxynaphthalene cyanate ester resin, a naphthylene ether cyanate ester resin, or a novolac cyanate ester resin from the viewpoint of obtaining a cured article having, in particular, excellent heat resistance, and it is preferable to use a dicyclopentadiene-phenol addition reaction cyanate ester resin from the viewpoint of obtaining a cured article having excellent dielectric characteristics.

The resin having a benzoxazine structure is not particularly limited, and examples thereof include a reaction product of bisphenol F, formalin, and aniline (F-a type benzoxazine resin), a reaction product of diaminodiphenylmethane, formalin, and phenol (P-d type benzoxazine resin), a reaction product of bisphenol A, formalin, and aniline, a reaction product of dihydroxydiphenyl ether, formalin, and aniline, a reaction product of diaminodiphenyl ether, formalin, and phenol, a reaction product of dicyclopentadiene-phenol addition type resin, formalin, and aniline, a reaction product of phenolphthalein, formalin, and aniline, and a reaction product of diphenyl sulfide, formalin, and aniline. These may be used singly, or two or more of these may be used in combination.

The active ester resin is not particularly limited, but generally, a compound having two or more highly reactive ester groups in one molecule, such as phenol esters, thiophenol esters, N-hydroxyamine esters, and esters of heterocyclic hydroxy compounds, is preferably used. The active ester resin is preferably obtained through a condensation reaction of a carboxylic acid compound and/or a thiocarboxylic acid compound with a hydroxy compound and/or a thiol compound. In particular, from the viewpoint of improving the heat resistance, an active ester resin obtained from a carboxylic acid compound or a halide thereof and a hydroxy compound is preferable, and an active ester resin obtained from a carboxylic acid compound or a halide thereof and a phenol compound and/or a naphthol compound is more preferable. Examples of the carboxylic acid compound include benzoic acid, acetic acid, succinic acid, maleic acid, itaconic acid, phthalic acid, isophthalic acid, terephthalic acid, and pyromellitic acid, and halides thereof. Examples of the phenol compound or the naphthol compound include hydroquinone, resorcin, bisphenol A, bisphenol F, bisphenol S, dihydroxydiphenyl ether, phenolphthalein, methylated bisphenol A, methylated bisphenol F, methylated bisphenol S, phenol, o-cresol, m-cresol, p-cresol, catechol, α-naphthol, β-naphthol, 1,5-dihydroxynaphthalene, 1,6-dihydroxynaphthalene, 2,6-dihydroxynaphthalene, dihydroxybenzophenone, trihydroxybenzophenone, tetrahydroxybenzophenone, phloroglucin, benzenetriol, and dicyclopentadiene-phenol addition type resins.

As the active ester resin, specifically, an active ester-based resin containing a dicyclopentadiene-phenol addition structure, an active ester resin containing a naphthalene structure, an active ester resin that is an acetylated product of phenol novolac, an active ester resin that is a benzoylated product of phenol novolac, and the like are preferable, and among these, an active ester resin containing a dicyclopentadiene-phenol addition structure and an active ester resin containing a naphthalene structure are more preferable from the viewpoint of excellent improvement in peel strength.

Further, various novolak resins, addition polymerization resins of an alicyclic diene compound such as dicyclopentadiene and a phenol compound, modified novolak resins of a hydroxyl group-containing compound and an alkoxy group-containing aromatic compound, a phenol aralkyl resin (Xylok resin), a naphthol aralkyl resin, a trimethylolmethane resin, a tetraphenylolethane resin, a biphenyl-modified phenol resin, a biphenyl-modified naphthol resin, an aminotriazine-modified phenol resin, and various vinyl polymers may be used in combination.

More specific examples of the various novolak resins include polymers obtained by reacting a hydroxyl group-containing compound such as phenol, phenylphenol, resorcinol, biphenyl, bisphenol such as bisphenol A or bisphenol F, naphthol, or dihydroxynaphthalene with an aldehyde compound under an acid catalyst condition.

Examples of the various vinyl polymers include homopolymers of vinyl compounds such as polyhydroxystyrene, polystyrene, polyvinylnaphthalene, polyvinylanthracene, polyvinylcarbazole, polyindene, polyacenaphthylene, polynorbornene, polycyclodecene, polytetracyclododecene, polynortricyclene, and poly(meth)acrylate, and copolymers thereof.

The thermoplastic resin refers to a resin that can be melt-molded by heating. Specific examples thereof include polyethylene resins, polypropylene resins, polystyrene resins, rubber-modified polystyrene resins, acrylonitrile-butadiene-styrene (ABS) resins, acrylonitrile-styrene (AS) resins, polymethyl methacrylate resins, acrylic resins, polyvinyl chloride resins, polyvinylidene chloride resins, polyethylene terephthalate resins, ethylene vinyl alcohol resins, cellulose acetate resins, ionomer resins, polyacrylonitrile resins, polyamide resins, polyacetal resins, polybutylene terephthalate resins, polylactic acid resins, polyphenylene ether resins, modified polyphenylene ether resins, polycarbonate resins, polysulfone resins, polyphenylene sulfide resins, polyetherimide resins, polyethersulfone resins, polyarylate resins, thermoplastic polyimide resins, polyamideimide resins, polyetheretherketone resins, polyketone resins, liquid crystal polyester resins, fluororesins, syndiotactic polystyrene resins, and cyclic polyolefin resins. These thermoplastic resins can be used singly, or two or more of these may be used in combination.

When these additional resins are used, the blending proportion of the curable functional group-containing compound (C) of the present embodiment and the additional resins can be freely set according to the application. From the viewpoint of excellent adhesiveness, flexibility, and dismantling properties when formed into a cured article, the blending ratio of the additional resins is preferably from 0.5 to 100 parts by mass with respect to 100 parts by mass of the curable functional group-containing compound (C) of the present embodiment.

### Non-Halogen-Based Flame Retardant

When the curable resin composition of the present embodiment is used for applications requiring high flame retardancy, a non-halogen-based flame retardant substantially containing no halogen atom may be blended.

Examples of the non-halogen-based flame retardant include a phosphorus-based flame retardant, a nitrogen-based flame retardant, a silicone-based flame retardant, an inorganic flame retardant, and an organometallic salt-based flame retardant. There is no limitation on the use of these flame retardants at all. The non-halogen-based flame retardant may be used singly, a plurality of the same flame retardants may be used, or flame retardants of different systems may be used in combination.

As the phosphorus-based flame retardant, either an inorganic flame retardant or an organic flame retardant can be used. Examples of the inorganic compound include ammonium phosphates such as red phosphorus, monoammonium phosphate, diammonium phosphate, triammonium phosphate, and ammonium polyphosphate, and inorganic nitrogen-containing phosphorus compounds such as phosphoric acid amide.

The red phosphorus is preferably subjected to a surface treatment for the purpose of preventing hydrolysis and the like, and examples of the surface treatment method include (i) a method of performing a coating treatment with an inorganic compound such as magnesium hydroxide, aluminum hydroxide, zinc hydroxide, titanium hydroxide, bismuth oxide, bismuth hydroxide, bismuth nitrate, or a mixture thereof, (ii) a method of performing a coating treatment with a mixture of an inorganic compound such as magnesium hydroxide, aluminum hydroxide, zinc hydroxide, or titanium hydroxide and a thermosetting resin such as a phenol resin, and (iii) a method of performing a double coating treatment with a thermosetting resin such as a phenol resin on a coating of an inorganic compound such as magnesium hydroxide, aluminum hydroxide, zinc hydroxide, or titanium hydroxide.

Examples of the organic phosphorus compound include general-purpose organic phosphorus compounds such as phosphate ester compounds, phosphonic acid compounds, phosphinic acid compounds, phosphine oxide compounds, phosphorane compounds, and organic nitrogen-containing phosphorus compounds; cyclic organic phosphorus compounds such as 9,10-dihydro-9-oxa-10-phosphaphenanthrene-10-oxide, 10-(2,5 dihydroxyphenyl)-10H-9-oxa-10-phosphaphenanthrene-10-oxide, and 10-(2,7-dihydroxynaphthyl)-10H-9-oxa-10-phosphaphenanthrene-10-oxide; and derivatives obtained by reacting the cyclic organic phosphorus compounds with a compound such as an epoxy resin or a phenol resin.

The blending amount of the phosphorus-based flame retardant is appropriately selected depending on the type of the phosphorus-based flame retardant, other components of the resin composition, and the desired degree of flame retardancy. In addition, for example, when red phosphorus is used as a non-halogen-based flame retardant, it is preferably blended in the range of from 0.1 parts by mass to 2.0 parts by mass, and when an organic phosphorus compound is used, it is also preferably blended in the range of from 0.1 parts by mass to 10.0 parts by mass, and it is more preferably blended in the range of from 0.5 parts by mass to 6.0 parts by mass, in 100 parts by mass of a resin composition in which all of a non-halogen-based flame retardant, other fillers, additives, and the like are blended.

When the phosphorus-based flame retardant is used, hydrotalcite, magnesium hydroxide, a boron compound, zirconium oxide, a black dye, calcium carbonate, zeolite, zinc molybdate, activated carbon, or the like may be used in combination with the phosphorus-based flame retardant.

Examples of the nitrogen-based flame retardant include a triazine compound, a cyanuric acid compound, an isocyanuric acid compound, and phenothiazine. A triazine compound, a cyanuric acid compound, and an isocyanuric acid compound are preferable.

Examples of the triazine compound include melamine, acetoguanamine, benzoguanamine, melon, melam, succinoguanamine, ethylenedimelamine, melamine polyphosphate, triguanamine, (1) aminotriazine sulfate compounds such as guanylmelamine sulfate, melem sulfate, and melam sulfate, (2) co-condensates of phenols such as phenol, cresol, xylenol, butylphenol, and nonylphenol with melamines such as melamine, benzoguanamine, acetoguanamine, and formguanamine and formaldehyde, (3) mixtures of the co-condensates of (2) with phenol resins such as phenol-formaldehyde condensates, and (4) products obtained by further modifying (2) and (3) with tung oil, isomerized linseed oil, and the like.

Examples of the cyanuric acid compound include cyanuric acid and melamine cyanurate.

The blending amount of the nitrogen-based flame retardant is appropriately selected depending on the type of the nitrogen-based flame retardant, other components of the resin composition, and the degree of desired flame retardancy. In addition, for example, the nitrogen-based flame retardant is preferably blended in the range of from 0.05 to 10 parts by mass, more preferably blended in the range of from 0.1 to 5 parts by mass, in 100 parts by mass of the resin composition in which all of the non-halogen-based flame retardant, other fillers, additives, and the like are blended.

When the nitrogen-based flame retardant is used, a metal hydroxide, a molybdenum compound, or the like may be used in combination.

The silicone-based flame retardant can be used without particular limitation as long as it is an organic compound containing a silicon atom, and examples thereof include silicone oil, silicone rubber, and silicone resin. The blending amount of the silicone-based flame retardant is appropriately selected depending on the type of the silicone-based flame retardant, other components of the resin composition, and the degree of desired flame retardancy. In addition, for example, the silicone-based flame retardant is preferably blended in the range of from 0.05 to 20 parts by mass in 100 parts by mass of the resin composition in which the non-halogen-based flame retardant, other fillers, additives, and the like are all blended. When the silicone-based flame retardant is used, a molybdenum compound, alumina, or the like may be used in combination.

Examples of the inorganic flame retardant include metal hydroxides, metal oxides, metal carbonate compounds, metal powders, boron compounds, and low-melting-point glass.

Examples of the metal hydroxide include aluminum hydroxide, magnesium hydroxide, dolomite, hydrotalcite, calcium hydroxide, barium hydroxide, and zirconium hydroxide.

Examples of the metal oxide include zinc molybdate, molybdenum trioxide, zinc stannate, tin oxide, aluminum oxide, iron oxide, titanium oxide, manganese oxide, zirconium oxide, zinc oxide, molybdenum oxide, cobalt oxide, bismuth oxide, chromium oxide, nickel oxide, copper oxide, and tungsten oxide.

Examples of the metal carbonate compound include zinc carbonate, magnesium carbonate, calcium carbonate, barium carbonate, basic magnesium carbonate, aluminum carbonate, iron carbonate, cobalt carbonate, and titanium carbonate.

Examples of the metal powder include aluminum, iron, titanium, manganese, zinc, molybdenum, cobalt, bismuth, chromium, nickel, copper, tungsten, and tin.

Examples of the boron compound include zinc borate, zinc metaborate, barium metaborate, boric acid, and borax.

Examples of the low-melting-point glass include glassy compounds such as Shipley (Bokusui Brown Co., Ltd.), hydrated glass SiO2-MgO-H2O, PbO-B2O3, ZnO-P2O5-MgO, P2O5-B2O3-PbO-MgO, P-Sn-O-F, PbO-V2O5-TeO2, Al2O3-H2O, and lead borosilicate.

The blending amount of the inorganic flame retardant is appropriately selected depending on the type of the inorganic flame retardant, other components of the resin composition, and the degree of desired flame retardancy. In addition, for example, the inorganic flame retardant is preferably blended in the range of from 0.05 to 20 parts by mass, more preferably blended in the range of from 0.5 to 15 parts by mass, in 100 parts by mass of the resin composition in which all of the non-halogen-based flame retardant, other fillers, additives, and the like are blended.

Examples of the organometallic salt-based flame retardant include ferrocene, an acetylacetonate metal complex, an organometallic carbonyl compound, an organocobalt salt compound, an organosulfonic acid metal salt, and a compound in which a metal atom and an aromatic compound or heterocyclic compound are ionically bound or coordinate-bound.

The blending amount of the organometallic salt-based flame retardant is appropriately selected depending on the type of the organometallic salt-based flame retardant, other components of the resin composition, and the degree of desired flame retardancy. In addition, for example, the organometallic salt-based flame retardant is preferably blended in the range of from 0.005 to 10 parts by mass in 100 parts by mass of the resin composition in which the non-halogen-based flame retardant, other fillers, additives, and the like are all blended.

### Filler

The curable resin composition of the present embodiment may contain a filler that does not belong to the thermally expandable particles (D) according to the present embodiment. Examples of the filler include inorganic fillers and organic fillers. Examples of the inorganic filler include inorganic fine particles.

Examples of the inorganic fine particles having excellent heat resistance include alumina, magnesia, titania, zirconia, and silica (quartz, fumed silica, precipitated silica, anhydrous silicic acid, fused silica, crystalline silica, ultrafine amorphous silica, and the like); examples of the inorganic fine particles having excellent thermal conduction include boron nitride, aluminum nitride, alumina oxide, titanium oxide, magnesium oxide, zinc oxide, silicon oxide, and diamond; examples of the inorganic fine particles having excellent conductivity include a metal filler and/or a metal-coated filler using a single metal or an alloy (for example, iron, copper, magnesium, aluminum, gold, silver, platinum, zinc, manganese, and stainless steel); examples of the inorganic fine particles having excellent barrier properties include minerals such as mica, clay, kaolin, talc, zeolite, wollastonite, and smectite, potassium titanate, magnesium sulfate, sepiolite, zonolite, aluminum borate, calcium carbonate, titanium oxide, barium sulfate, zinc oxide, and magnesium hydroxide; examples of the inorganic fine particles having a high refractive index include barium titanate, zirconia oxide, and titanium oxide; examples of the inorganic fine particles exhibiting photocatalytic properties include photocatalytic metals such as titanium, cerium, zinc, copper, aluminum, tin, indium, phosphorus, carbon, sulfur, ruthenium, nickel, iron, cobalt, silver, molybdenum, strontium, chromium, barium, and lead, composites of the metals, and oxides thereof; examples of the inorganic fine particles having excellent wear resistance include metals such as silica, alumina, zirconia, and magnesium oxide, and composites and oxides thereof; examples of the inorganic fine particles having excellent conductivity include metals such as silver and copper, tin oxide, and indium oxide; and examples of the inorganic fine particles having excellent insulation properties include silica; examples of the inorganic fine particles excellent in ultraviolet ray shielding include titanium oxide, and zinc oxide. These inorganic fine particles may be appropriately selected depending on the application, and may be used singly, or plural types of these may be used in combination. Since the inorganic fine particles have various properties in addition to the properties described in the examples, the inorganic fine particles may be selected at any time according to the application.

For example, when silica is used as the inorganic fine particles, known silica fine particles such as powdery silica and colloidal silica can be used without particular limitation. Examples of commercially available powdery silica fine particles include AEROSIL 50 and 200 manufactured by Nippon Aerosil Co., Ltd., SILDEX H31, H32, H51, H52, H121, and H122 manufactured by Asahi Glass Co., Ltd., E220A and E220 manufactured by Nippon Silica Industry Co., Ltd., SYLYSIA470 manufactured by Fuji Silysia Chemical Ltd., and SG Flake manufactured by Nippon Sheet Glass Co., Ltd.

Examples of the commercially available colloidal silica include methanol silica sol, IPA-ST, MEK-ST, NBA-ST, XBA-ST, DMAC-ST, ST-UP, ST-OUP, ST-20, ST-40, ST-C, ST-N, ST-O, ST-50, and ST-OL manufactured by Nissan Chemical Corporation.

Surface-modified silica fine particles may be used, and examples thereof include silica fine particles surface-treated with a reactive silane coupling agent having a hydrophobic group and silica fine particles modified with a compound having a (meth)acryloyl group. Examples of commercially available powdery silica modified with a compound having a (meth)acryloyl group include AEROSIL RM50 and R711 manufactured by Nippon Aerosil Co., Ltd., and examples of commercially available colloidal silica modified with a compound having a (meth)acryloyl group include MIBK-SD manufactured by Nissan Chemical Corporation.

The shape of the silica fine particles is not particularly limited, and spherical, hollow, porous, rod-like, plate-like, fibrous, or irregular shapes can be used. The primary particle diameter is preferably in the range of from 5 to 200 nm.

As the titanium oxide fine particles, not only an extender pigment but also an ultraviolet light-responsive photocatalyst can be used, and for example, anatase-type titanium oxide, rutile-type titanium oxide, brookite-type titanium oxide and the like can be used. Further, particles designed to respond to visible light by doping the crystal structure of titanium oxide with a different element can also be used. As the element to be doped with titanium oxide, an anion element such as nitrogen, sulfur, carbon, fluorine, or phosphorus, or a cation element such as chromium, iron, cobalt, or manganese is suitably used. The form of the compound may be powder, sol or slurry dispersed in an organic solvent or water. Examples of commercially available powdery titanium oxide fine particles include AEROSIL P-25 manufactured by Nippon Aerosil Co., Ltd. and ATM-100 manufactured by TAYCA CORPORATION. Examples of commercially available slurry-like titanium oxide fine particles include TKD-701 manufactured by TAYCA CORPORATION.

### Fibrous Substrate

The curable resin composition of the present embodiment may further contain a fibrous substrate. The fibrous substrate is not particularly limited, but is preferably one used for a fiber-reinforced resin. Examples thereof include inorganic fibers and organic fibers.

Examples of the inorganic fibers include inorganic fibers such as carbon fibers, glass fibers, boron fibers, alumina fibers, and silicon carbide fibers, as well as carbon fibers, activated carbon fibers, graphite fibers, tungsten carbide fibers, silicon carbide fibers, ceramic fibers, natural fibers, mineral fibers such as basalt, boron nitride fibers, boron carbide fibers, and metal fibers. Examples of the metal fibers include aluminum fibers, copper fibers, brass fibers, stainless steel fibers, and steel fibers.

Examples of the organic fiber include synthetic fibers made of resin materials such as polybenzazole, aramid, polyparaphenylene benzoxazole (PBO), polyphenylene sulfide, polyester, acrylic, polyamide, polyolefin, polyvinyl alcohol, and polyarylate; natural fibers such as cellulose, pulp, cotton, wool, and silk; and regenerated fibers such as protein, polypeptide, and alginic acid.

Among these, carbon fibers and glass fibers are preferable because they have a wide industrial application range. Among these, only one type may be used, or a plurality of types may be simultaneously used.

The fibrous substrate may be an aggregate of fibers, may be continuous or discontinuous, may be woven or nonwoven. The fibers may be arranged in one direction to form a fiber bundle, or the fiber bundles may be arranged in a sheet form. The shape may be a three-dimensional shape in which an aggregate of fibers is thickened.

### Dispersion Medium

In the curable resin composition of the present embodiment, a dispersion medium may be used for the purpose of adjusting the solid content and viscosity of the resin composition. The dispersion medium may be any liquid medium that does not impair the effects of the present embodiment. Examples thereof include various organic solvents and liquid organic polymers.

Examples of the organic solvent include ketones such as acetone, methyl ethyl ketone (MEK), and methyl isobutyl ketone (MIBK), cyclic ethers such as tetrahydrofuran (THF) and dioxolane, esters such as methyl acetate, ethyl acetate, and butyl acetate, aromatics such as toluene and xylene, and alcohols such as carbitol, cellosolve, methanol, isopropanol, butanol, and propylene glycol monomethyl ether. These can be used singly or in combination. Among these, methyl ethyl ketone is preferable from the viewpoint of volatility during coating and solvent recovery.

The liquid organic polymer is a liquid organic polymer that does not directly contribute to the curing reaction, and examples thereof include an acrylic polymer (Floren WK-20: KYOEISHA CHEMICAL Co., Ltd.), an amine salt of a special modified phosphoric acid ester (HIPLAAD ED-251: Kusumoto Chemicals, Ltd.), a modified acrylic block copolymer (DISPERBYK2000; BYK).

### Additional Composition

The curable resin composition of the present embodiment may contain an additional composition. Examples thereof include a catalyst, a polymerization initiator, an inorganic pigment, an organic pigment, an extender pigment, a clay mineral, a wax, a surfactant, a stabilizer, a flow regulator, a coupling agent, a dye, a leveling agent, a rheology control agent, an ultraviolet absorber, an antioxidant, a flame retardant, a plasticizer, and a reactive diluent.

A cured article can be obtained by curing the curable resin composition of the present embodiment. In the case of curing, curing may be performed at room temperature or by heating. In the case of performing thermal curing, curing may be performed by single heating, or curing may be performed through multi-stage heating steps.

The curable resin composition of the present embodiment can also be cured with an active energy ray. In this case, a photocationic polymerization initiator may be used as the polymerization initiator. As the active energy rays, visible rays, ultraviolet rays, X-rays, electron beams, and the like can be used.

Examples of the photocationic polymerization initiator include arylsulfonium salts and aryl-iodonium salts, and specifically, arylsulfonium hexafluorophosphate, arylsulfonium hexafluoroantimonate, arylsulfonium tetrakis (pentafluoro) borate, tri(alkylphenyl) sulfonium hexafluorophosphate, and the like can be used. These photocationic polymerization initiators may be used singly, or two or more of these may be used in combination.

### Method for Preparing Curable Resin Composition

The method for preparing the curable resin composition of the present embodiment is not particularly limited as long as the above-described components are uniformly mixed. For example, the curable resin composition can be prepared by uniformly mixing using a pot mill, a ball mill, a bead mill, a roll mill, a homogenizer, a super mill, a homodisper, a universal mixer, a Banbury mixer, a kneader, or the like.

In the curable resin composition of the present embodiment, the epoxy resin (A) of the present embodiment described above, the epoxy resin (B) of the present embodiment described above, the curable functional group-containing compound (C) of the present embodiment described above, the thermally expandable particles (D) of the present embodiment described above, and as necessary, a resin other than the curing agent, filler, fibrous substrate, dispersion medium, or various compounds described above that can be used in combination described above are dissolved in a dispersion medium such as the organic solvent described above. After dissolution, the solvent is distilled off and dried under reduced pressure with a vacuum oven or the like, whereby a curable resin composition can be obtained. The curable resin composition of the present embodiment may be in a state in which the above-described constituent materials are uniformly mixed. In this case, it is preferable to uniformly mix them with a mixer or the like. The blending proportion of each constituent material can be appropriately adjusted according to characteristics such as mechanical strength and heat resistance of the desired cured article. In the production of the curable resin composition, the mixing order of specific constituent materials is not particularly limited.

### Cured Article

The cured article of the present embodiment is obtained by curing the curable resin composition of the present embodiment. As the curing method, a known method can be appropriately selected and employed depending on the properties of the epoxy resin (A), the epoxy resin (B), the curable functional group-containing compound (C), and the like to be used.

The cured article of the present embodiment is cured by the curable functional group-containing compound (C) of the present embodiment as described above, and thus, it is possible to maintain good mechanical strength by developing an appropriate crosslinking density.

The structure of the obtained cured article can be checked by an infrared absorption (IR) spectrum method using Fourier transform infrared spectroscopy (FT-IR) or the like, an element analysis method, an X-ray scattering method, or the like.

The cured article produced from the curable resin composition of the present embodiment has adhesiveness, flexibility, and dismantling properties, and is useful for the following applications.

The curable resin cured article of the present embodiment can be laminated with a base material to form a laminated product. As the base material of the laminated product, an inorganic material such as metal or glass, an organic material such as plastic or wood, or the like may be appropriately used depending on the application, and the base material may have a shape of the laminated product, a flat plate, a sheet shape, a three-dimensional structure, or a three-dimensional shape. It may have any shape according to the purpose, such as a shape having a curvature on the entire surface or a part thereof. The hardness, thickness, and the like of the base material are not limited either. A multilayer laminated product may be formed by laminating a first base material, a layer formed of the cured article of the curable resin composition of the present embodiment, and a second base material in this order. The curable resin composition of the present embodiment has excellent adhesiveness, and thus, it can be suitably used as an adhesive for bonding the first base material and the second base material. The curable resin cured article of the present embodiment may be used as a base material, and the cured article of the present embodiment may be further laminated.

In addition, the curable resin cured article of the present embodiment can relieve stress, and thus, the curable resin cured article can be particularly suitably used for bonding different materials. For example, even when the base material is a metal and/or a metal oxide, and the second base material is a laminated product of a different material such as a plastic layer, the adhesive strength is maintained because of the stress relaxation ability of the cured article of the present embodiment.

In the laminated product obtained by laminating the cured article of the present embodiment and a base material, the layer containing the cured article may be formed by direct coating or molding on the base material, or an already molded layer may be laminated. In the case of direct coating, the coating method is not particularly limited, and examples thereof include a spray method, a spin coating method, a dip method, a roll coating method, a blade coating method, a doctor roll method, a doctor blade method, a curtain coating method, a slit coating method, a screen printing method, and an inkjet method. In the case of direct molding, in-mold molding, insert molding, vacuum molding, extrusion laminate molding, press molding, and the like are exemplified. When a molded composition is laminated, an uncured or semi-cured composition layer may be laminated and then cured, or a layer containing a cured article obtained by completely curing the composition may be laminated on the base material. Alternatively, the cured article of the present embodiment may be laminated by applying and curing a precursor that can be a substrate, or the precursor that can be a substrate or the composition of the present embodiment may be cured after being bound in an uncured or semi-cured state. The precursor that can serve as a base material is not particularly limited, and examples thereof include various curable resin compositions.

The cured article obtained using the curable resin composition of the present embodiment has particularly high adhesiveness to a metal and/or a metal oxide, and thus can be particularly preferably used as a primer for metal. Examples of the metal include copper, aluminum, gold, silver, iron, platinum, chromium, nickel, tin, titanium, zinc, various alloys, and materials obtained by combining these metals, and examples of the metal oxide include single oxides and/or composite oxides of these metals. In particular, it has excellent adhesive strength to iron, copper, and aluminum, and thus, it can be favorably used as an adhesive for iron, copper, and aluminum.

The curable resin composition of the present embodiment can be suitably used as an adhesive for structural members in the fields of automobiles, trains, civil engineering and construction, electronics, aircraft, and space industry. For example, even when the adhesive is used for adhesion of different materials such as between a metal and a nonmetal, high adhesiveness can be maintained without being affected by a change in temperature environment, and peeling or the like hardly occurs. In addition to the use for structural members, the adhesive can be used as an adhesive for general office work, medical use, carbon fiber, cells, modules, cases, and the like of storage batteries, and can be used as an adhesive for bonding optical components, an adhesive for laminating optical disks, an adhesive for mounting printed wiring boards, a die bonding adhesive, an adhesive for semiconductors such as underfill, an underfill for BGA reinforcement, an anisotropic conductive film, an anisotropic conductive paste, and the like.

When the curable resin composition of the present embodiment has a fibrous substrate and the fibrous substrate is a reinforcing fiber, the curable resin composition containing the fibrous substrate can be used as a fiber-reinforced resin. The method for incorporating the fibrous substrate into the composition is not particularly limited as long as the effects of the present embodiment are not impaired, and examples thereof include a method of compositing the fibrous substrate and the composition by a method such as kneading, coating, impregnation, injection, or compression bonding. The method can be appropriately selected depending on the form of the fiber and the use of the fiber-reinforced resin.

The method for molding the fiber-reinforced resin is not particularly limited. An extrusion molding method is generally used to produce a plate-shaped product. Planar pressing is also possible. In addition, an extrusion molding method, a blow molding method, a compression molding method, a vacuum molding method, an injection molding method, and the like can be used. When a film-shaped product is produced, a solution casting method can be used in addition to a melt extrusion method, and when a melt molding method is used, inflation film molding, cast molding, extrusion lamination molding, calendar molding, sheet molding, fiber molding, blow molding, injection molding, rotation molding, coating molding, and the like can be exemplified. In the case of a resin that is cured with active energy rays, a cured article can be produced using various curing methods using active energy rays. In particular, when a thermosetting resin is contained as a main component of the matrix resin, examples of the molding method include a molding method in which a molding material is formed into prepreg and pressurized and heated by a press or an autoclave, resin transfer molding (RTM), vacuum assist resin transfer molding (VaRTM), lamination molding, and hand lay-up molding.

The cured article using the curable resin composition of the present embodiment is excellent in adhesiveness, flexibility, and dismantling properties, and thus, the curable resin composition can be used for a large case, a motor housing, a casting material inside the case, and molding materials such as a gear and a pulley. These may be cured articles of a resin alone, or may be fiber-reinforced cured articles such as a glass chip.

The fiber-reinforced resin can form a state called an uncured or semi-cured prepreg. After the product is distributed in a prepreg state, final curing may be performed to form a cured article. In the case of forming a laminated product, a laminated product in which each layer is in close contact can be formed by forming a prepreg, then laminating other layers, and then performing final curing, which is preferable. The mass proportion of the composition to be used and the fibrous substrate is not particularly limited, but it is usually preferable to prepare the prepreg so that the resin content in the prepreg is from 20 to 60 mass%.

The cured article of the present embodiment is excellent in adhesiveness, flexibility, and dismantling properties. Thus, it can be used as a heat-resistant material and an electronic material. In particular, it can be suitably used for a semiconductor sealing material, a circuit board, a build-up film, a build-up board, or the like, an adhesive, or a resist material. It can also be suitably used for a matrix resin of a fiber-reinforced resin, and is particularly suitable as a highly heat-resistant prepreg. The heat-resistant member and the electronic member thus obtained can be suitably used for various applications. Examples thereof include industrial machine parts, general machine parts, parts for automobiles, railways, vehicles, and the like, parts related to space and air, electronic and electrical parts, building materials, containers and packaging members, daily necessities, sports and leisure goods, housing members for wind power generation, and the like, but are not limited thereto.

Among these, it can be suitably used as an adhesive for structural members in the fields of automobiles, trains, civil engineering and construction, electronics, aircraft, and space industries by taking advantage of the excellent flexibility of the cured article. Even when the adhesive of the present embodiment is used for adhesion of different materials such as between a metal and a nonmetal, high adhesiveness can be maintained without being affected by a change in temperature environment, and peeling or the like hardly occurs. In addition to the use for structural members, the adhesive of the present embodiment can be used as an adhesive for general office work, medical use, carbon fiber, cells, modules, cases, and the like of storage batteries, and can be used as an adhesive for bonding optical components, an adhesive for laminating optical disks, an adhesive for mounting printed wiring boards, a die bonding adhesive, an adhesive for semiconductors such as underfill, an underfill for BGA reinforcement, an anisotropic conductive film, an anisotropic conductive paste, and the like.

In addition, by taking advantage of the characteristics of the cured article of the present embodiment that are excellent in easily dismantlable properties, it is possible to use an easily dismantlable adhesive material containing the curable resin composition of the present embodiment. The easily dismantlable adhesive material is preferably the curable resin composition of the present embodiment. The dismantling method using the easily dismantlable adhesive material according to the present embodiment may include, for example a bonding step of attaching the easily dismantlable adhesive material to a surface of an adherend and bonding the easily dismantlable adhesive material to the adherend, a curing step of curing the easily dismantlable adhesive material to obtain a cured article, a heat treatment step of performing a heat treatment on the cured article to thermally dissociate the reversible binding derived from the curable functional group-containing compound (C) and contained in either General Formula (4-1) or (4-2) and expand the thermally expandable particles (D), and a dismantling step of dismantling the adherend and the cured article.
The dismantling method using the easily dismantlable adhesive material of the present embodiment may include, for example a bonding step of attaching the easily dismantlable adhesive material to a surface of an adherend and bonding the easily dismantlable adhesive material to the adherend, a curing step of curing the easily dismantlable adhesive material to obtain a cured article, a heat treatment step of performing a heat treatment on the cured article to thermally dissociate the reversible binding derived from the curable functional group-containing compound (C) and contained in either General Formula (4-1) or (4-2) and expand the thermally expandable particles (D), a cooling step of cooling the cured article after the thermal treatment to room temperature, and a dismantling step of dismantling the adherend and the cured article.

Hereinafter, typical products will be described with examples.

### 1. Semiconductor Sealing Material

Examples of the method for obtaining a semiconductor sealing material from the curable resin composition of the present embodiment include a method in which the resin composition and a blending agent such as a curing accelerator and an inorganic filler are sufficiently melted and mixed until the resin composition and the blending agent become uniform, using an extruder, a kneader, a roll, or the like as necessary. In this case, fused silica is typically used as the inorganic filler, but when the composition is used as a power transistor or a highly thermally conductive semiconductor encapsulating material for power IC, it is preferable to use highly filled crystalline silica, alumina, silicon nitride, or the like having a higher thermal conductivity than fused silica, or fused silica, crystalline silica, alumina, silicon nitride or the like. The filling rate is preferably in the range of from 30 to 95 mass% of the inorganic filler per 100 parts by mass of the curable resin composition, and is more preferably 70 parts by mass or more and still more preferably 80 parts by mass or more to improve the flame retardancy, the moisture resistance, and the solder crack resistance and to reduce the linear expansion coefficient.

### 2. Semiconductor Device

Examples of the semiconductor package molding for obtaining a semiconductor device from the curable resin composition of the present embodiment include a method in which the semiconductor sealing material is molded using a casting mold, a transfer molding machine, an injection molding machine, or the like, and further heated at 50 to 250°C for 2 to 10 hours.

### 3. Printed Circuit Board

Examples of the method for obtaining a printed circuit board from the composition of the present embodiment include a method in which the prepreg is laminated by a known method, copper foils are appropriately overlapped, and the laminated product is subjected to thermocompression bonding at 170 to 300°C under a pressure of 1 to 10 MPa for 10 minutes to 3 hours.

### 4. Flexible Board

Examples of the method for producing a flexible board from the crosslinkable resin composition of the present embodiment include production by a method including the following three steps. The first step is a step of applying a crosslinkable resin composition containing a resin component, an organic solvent, and the like to an electrically insulating film using an applicator such as a reverse roll coater or a comma coater, the second step is a step of heating the electrically insulating film coated with the crosslinkable resin composition at 60 to 170°C for 1 to 15 minutes using a heater to volatilize the solvent from the electrically insulating film to form a B-staged crosslinkable resin composition, and the third step is a step of thermocompression-bonding (pressure bonding is preferably from 2 to 200 N/cm and the pressure bonding temperature is preferably from 40 to 200°C) a metal foil as an adhesive using a heating roll or the like to the electrically insulating film with the B-staged crosslinkable resin composition. As long as sufficient adhesion performance can be obtained through the above three steps, the production may be terminated here, but when complete adhesion performance is required, it is preferable to further post-cure the resin composition under the condition of from 100 to 200°C for 1 to 24 hours. The thickness of the resin composition layer after final curing is preferably in the range of from 5 to 100 µm.

### 5. Build-up Board

Examples of a method for obtaining a build-up board from the composition of the present embodiment include the following steps. First, a step of applying the composition in which rubber, a filler, and the like are appropriately blended to a circuit board on which a circuit is formed using a spray coating method, a curtain coating method, or the like, and then curing the composition (step 1). Thereafter, a step of drilling a predetermined through hole portion or the like as necessary, and then performing a treatment with a roughening agent, washing the surface with hot water to form unevenness, and plating a metal such as copper (step 2). A step of sequentially repeating such operations as desired to alternately build-up and form the resin insulating layer and the conductor layer of a predetermined circuit pattern (step 3). The through hole portion is drilled after the formation of the resin insulating layer as the outermost layer. In addition, in the build-up board of the present embodiment, a copper foil with resin obtained by semi-curing the resin composition on a copper foil is thermocompression-bonded at 170 to 300°C on a wiring board on which a circuit is formed, and thus, a roughened surface can be formed, a plating process step can be omitted, and a build-up board can be produced.

### 6. Build-up Film

As a method for obtaining a build-up film from the composition of the present embodiment, the build-up film can be produced by applying the composition to the surface of a support film (Y) as a base material, and further drying the organic solvent by heating or blowing hot air to form a layer (X) of the composition.

As the organic solvent used here, for example, ketones such as acetone, methyl ethyl ketone, and cyclohexanone, acetic esters such as ethyl acetate, butyl acetate, cellosolve acetate, propylene glycol monomethyl ether acetate, and carbitol acetate, carbitols such as cellosolve and butyl carbitol, aromatic hydrocarbons such as toluene and xylene, dimethylformamide, dimethylacetamide, N-methylpyrrolidone, and the like are preferably used, and it is preferable to use them at a proportion of a nonvolatile content of from 30 to 60 mass%.

The thickness of the layer (X) to be formed is usually equal to or more than the thickness of the conductor layer. The thickness of the conductor layer included in a circuit board is usually in the range of from 5 to 70 µm, and thus, the thickness of the resin composition layer is preferably from 10 to 100 µm. The layer (X) of the composition in the present embodiment may be protected by a protective film described later. By protecting the layer with a protective film, adhesion of dust and the like to the surface of the resin composition layer and scratches can be prevented.

Examples of the support film and the protective film include polyolefins such as polyethylene, polypropylene, and polyvinyl chloride, polyesters such as polyethylene terephthalate (hereinafter, sometimes abbreviated as "PET") and polyethylene naphthalate, polycarbonate, polyimide, and release paper, and metal foils such as copper foil and aluminum foil. The support film and the protective film may be subjected to a mat treatment, a corona treatment, or a release treatment. The thickness of the support film is not particularly limited, but is usually from 10 to 150 µm, preferably from 25 to 50 µm. The thickness of the protective film is preferably from 1 to 40 µm.

The support film (Y) is peeled off after being laminated on a circuit board or after forming an insulating layer by heat curing. Adhesion of dust and the like in the curing step can be prevented by peeling off the support film (Y) after the curable resin composition layer constituting the build-up film is heated and cured. In the case of peeling after curing, the support film is usually subjected to a release treatment in advance.

A multilayer printed circuit board can be produced by using the build-up film obtained as described above. For example, when the layer (X) is protected by a protective film, the protective film is peeled off, and then the layer (X) is laminated on one surface or both surfaces of the circuit board so as to be in direct contact with the circuit board, for example, by a vacuum lamination method. The lamination method may be a batch method or a continuous method using a roll. As necessary, the build-up film and the circuit board may be heated (preheated) as necessary before lamination. As conditions for lamination, the pressure bonding temperature (lamination temperature) is preferably from 70 to 140°C, the pressure bonding pressure is preferably from 1 to 11 kgf/cm² (from 9.8 × 10⁴ to 107.9 × 10⁴ N/m²), and lamination is preferably performed under reduced pressure of an air pressure of 20 mmHg (26.7 hPa) or less.

### 7. Conductive Paste

Examples of the method for obtaining a conductive paste from the curable resin composition of the present embodiment include a method in which conductive particles are dispersed in the composition. The conductive paste can be a paste resin composition for circuit connection or an anisotropic conductive adhesive depending on the type of conductive particles to be used.

### EXAMPLES

Next, the present invention will be specifically described with reference to Examples and Comparative Examples, and in the following, "part" and "%" are on a mass basis unless otherwise specified. The present invention is not limited thereto.

¹H and ¹³C-NMR, FD-MS spectra, and GPC were measured under the following conditions.

¹H-NMR: "JNM-ECA 600" manufactured by JEOL RESONANCE
Magnetic field strength: 600 MHz
Number of integrations: 32 times
Solvent: DMSO-ds
Sample concentration: 30 mass%

¹³C-NMR: "JNM-ECA 600" manufactured by JEOL RESONANCE
Magnetic field strength: 150 MHz
Number of integrations: 320 times
Solvent: DMSO-ds
Sample concentration: 30 mass%

FD-MS: "JMS-T 100 GC AccuTOF" manufactured by JEOL Ltd.
Measurement range: m/z = from 50.00 to 2000.00
Change rate: 25.6 mA/min
Final current value: 40 mA
Cathode voltage: -10 kV

GPC: "HLC-8320 GPC" manufactured by Tosoh Corporation
Column: "TSK-GEL G2000 HXL" + "TSK-GEL G3000 HXL" + "TSK-GEL G4000 HXL" manufactured by Tosoh Corporation
Detector: RI (differential refractometer)
Measurement condition: 40°C
Mobile phase: tetrahydrofuran
Flow speed: 1 ml/min
Standard: "PStQuick A", "PStQuick B", "PStQuick E", and "PStQuick F" manufactured by Tosoh Corporation

The epoxy equivalent of the synthesized epoxy resin was measured in accordance with JIS K7236, and the epoxy equivalent (g/eq) was calculated.

Examples of the method for calculating the number of repeating units include GPC molecular weight measurement and calculation from various appropriate instrumental analysis results such as FD-MS and NMR.

### Synthesis Example 1

Into a flask equipped with a thermometer, a cooling tube, and a stirrer, 420 g (2.0 equivalents) of diglycidyl ether of 1,12-dodecanediol (manufactured by Yokkaichi Chemical Company Limited: epoxy equivalent 210 g/eq) and 240 g (2.1 equivalents) of bisphenol A (hydroxyl equivalent: 114 g/eq) were charged, and the temperature was raised to 140°C over 30 minutes, and then 6.6 g of a 20% sodium hydroxide solution was charged. Thereafter, the mixture was heated to 150°C over 30 minutes, and further reacted at 150°C for 16 hours. Thereafter, a neutralized amount of sodium phosphate was added to obtain 646 g of a hydroxy compound (Ph-1). This hydroxy compound (Ph-1) was confirmed to contain a hydroxy compound as the target compound from the fact that a peak of M+ = 771 corresponding to the theoretical structure of m = 1 in Structural Formula (Ph-1) shown below was obtained in the mass spectrum. The hydroxyl equivalent of this hydroxy compound (Ph-1) calculated from GPC was 2053 g/eq, and the average value of repeating units m was 6.9.

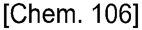

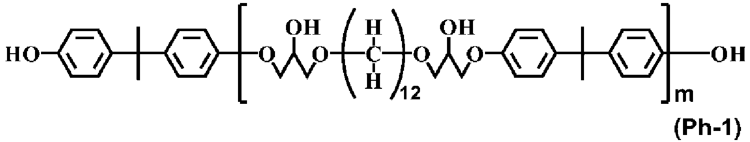

### Synthesis Example 2

A hydroxy compound (Ph-2) was obtained in an amount of 697 g by the same reaction as in Synthesis Example 1 except that 420 g (2.0 equivalents) of the diglycidyl ether of 1,12-dodecanediol (epoxy equivalent 210 g/eq) in Synthesis Example 1 was changed to 472 g (2.0 equivalents) of diglycidyl ether of 1,15-pentadecanediol (epoxy equivalent 236 g/eq). This hydroxy compound (Ph-2) was confirmed to contain a hydroxy compound as the target compound from the fact that a peak of M+ = 813 corresponding to the theoretical structure of m = 1 in Structural Formula (Ph-2) shown below was obtained in the mass spectrum. The hydroxyl equivalent of this hydroxy compound (Ph-2) calculated from GPC was 2226 g/eq, and the average value of repeating units m was 6.8.

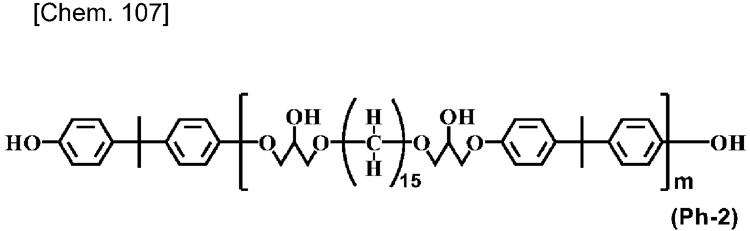

### Synthesis Example 3

A hydroxy compound (Ph-3) in an amount of 607 g was obtained by the same reaction as in Synthesis Example 1 except that 420 g (2.0 equivalents) of the diglycidyl ether of 1,12-dodecanediol (epoxy equivalent 210 g/eq) in Synthesis Example 1 was changed to 380 g (2.0 equivalents) of diglycidyl ether of 1,9-nonanediol (epoxy equivalent 190 g/eq). This hydroxy compound (Ph-3) was confirmed to contain a hydroxy compound as the target compound from the fact that a peak of M+ = 729 corresponding to the theoretical structure of m = 1 in Structural Formula (Ph-3) shown below was obtained in the mass spectrum. The hydroxyl equivalent of this hydroxy compound (Ph-3) calculated from GPC was 1989 g/eq, and the average value of repeating units m was 7.2.

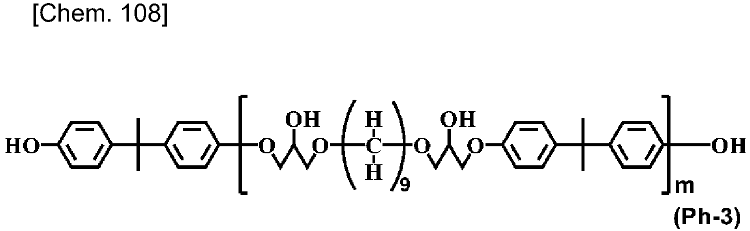

### Synthesis Example 4

A hydroxy compound (Ph-4) in an amount of 1211 g was obtained by the same reaction as in Synthesis Example 1, except that 420 g (2.0 equivalents) of the diglycidyl ether of 1,12-dodecanediol (manufactured by Yokkaichi Chemical Company Limited: epoxy equivalent 210 g/eq) and 240 g (2.1 equivalents) of the bisphenol-A (hydroxyl equivalent 114 g/eq) in Synthesis Example 1 were changed to 962 g (2.0 equivalents) of diglycidyl ether of polypropylene glycol ("DENACOL EX-931" manufactured by Nagase ChemteX Corporation: epoxy equivalent 481 g/eq) and 274 g (2.4 equivalents) of bisphenol-A (hydroxyl equivalent 114 g/ eq). This hydroxy compound (Ph-4) was confirmed to contain a hydroxy compound as the target compound from the fact that a peak of M+ = 1226 corresponding to the theoretical structure of m = 1, n2 = 11 in Structural Formula (Ph-4) shown below was obtained in the mass spectrum. The hydroxyl equivalent of this hydroxy compound (Ph-4) calculated from GPC was 1582 g/eq, and the average value of repeating units m was 3.3.

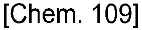

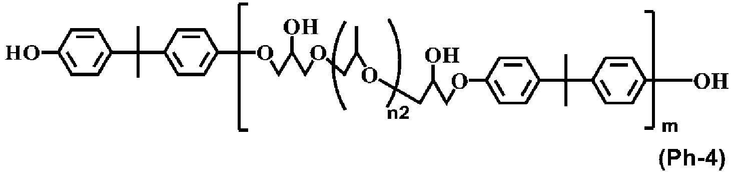

### Synthesis Example 5

A hydroxy compound (Ph-5) in an amount of 1140 g was obtained by the same reaction as in Synthesis Example 1, except that 420 g (2.0 equivalents) of the diglycidyl ether of 1,12-dodecanediol (manufactured by Yokkaichi Chemical Company Limited: epoxy equivalent 210 g/eq) and 240 g (2.1 equivalents) of the bisphenol-A (hydroxyl equivalent 114 g/eq) in Synthesis Example 1 were changed to 890 g (2.0 equivalents) of diglycidyl ether of polytetramethylene glycol ("DENACOL EX-991L" manufactured by Nagase ChemteX Corporation: epoxy equivalent 445 g/eq) and 274 g (2.4 equivalents) of bisphenol-A (hydroxyl equivalent 114 g/ eq). This hydroxy compound (Ph-5) was confirmed to contain a hydroxy compound as the target compound from the fact that a peak of M+ = 1380 corresponding to the theoretical structure of m = 1, n2 = 11 in Structural Formula (Ph-5) shown below was obtained in the mass spectrum. The hydroxyl equivalent of this hydroxy compound (Ph-5) calculated from GPC was 2520 g/eq, and the average value of repeating units m was 5.1.

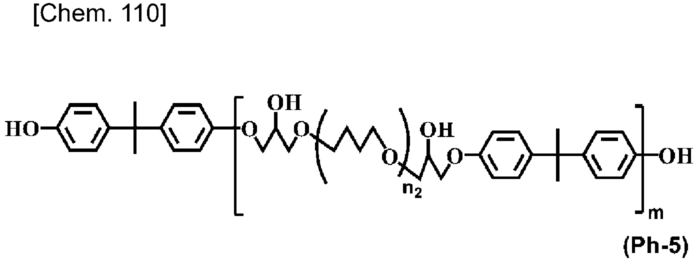

### Synthesis Example 6

A hydroxy compound (Ph-6) in an amount of 317 g was obtained by the same reaction as in Synthesis Example 1, except that 420 g (2.0 equivalents) of the diglycidyl ether of 1,12-dodecanediol (manufactured by Yokkaichi Chemical Company Limited: epoxy equivalent 210 g/eq) and 240 g (2.1 equivalents) of the bisphenol A (hydroxyl equivalent 114 g/eq) in Synthesis Example 1 were changed to 126.2 g (0.39 mol) of diglycidyl ether of 1,6-hexanediol ("SR-16H" manufactured by Sakamoto Yakuhin Kogyo Co., Ltd.: epoxy equivalent 160 g/eq), 78.1 g (0.08 mol) of diglycidyl ether of polypropylene glycol ("DENACOL EX-931" manufactured by Nagase ChemteX Corporation: epoxy equivalent 481 g/eq), and 114.6 g (0.50 mol) of bisphenol A (hydroxy equivalent 114 g/eq). This hydroxy compound (Ph-6) was confirmed to contain a hydroxy compound as the target compound from the fact that a peak of M+ = 1684 corresponding to the theoretical structure of m1 = 1, m2 = 1, n2 = 11 in Structural Formula (Ph-6) shown below was obtained in the mass spectrum. The hydroxyl equivalent of this hydroxy compound (Ph-6) calculated from GPC was 1597 g/eq.

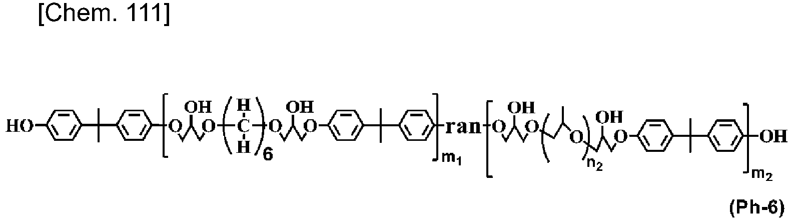

### Synthesis Example 7

A hydroxy compound (Ph-7) in an amount of 318 g was obtained by the same reaction as in Synthesis Example 1, except that 420 g (2.0 equivalents) of the diglycidyl ether of 1,12-dodecanediol (manufactured by Yokkaichi Chemical Company Limited: epoxy equivalent 210 g/eq) and 240 g (2.1 equivalents) of the bisphenol A (hydroxyl equivalent 114 g/eq) in Synthesis Example 1 were changed to 136 g (0.43 mol) of the diglycidyl ether of 1,6-hexanediol ("SR-16H" manufactured by Sakamoto Yakuhin Kogyo Co., Ltd.: epoxy equivalent 160 g/eq), 66 g (0.07 mol) of diglycidyl ether of polytetramethylene glycol ("DENACOL EX-991L" manufactured by Nagase ChemteX Corporation: epoxy equivalent 445 g/eq), and 119.7 g (0.53 mol) of bisphenol A (hydroxy equivalent 114 g/eq). This hydroxy compound (Ph-7) was confirmed to contain a hydroxy compound as the target compound from the fact that a peak of M+ = 1839 corresponding to the theoretical structure of m1 = 1, m2 = 1, n2 = 11 in Structural Formula (Ph-7) shown below was obtained in the mass spectrum. The hydroxyl equivalent of this hydroxy compound (Ph-7) calculated from GPC was 1896 g/eq.

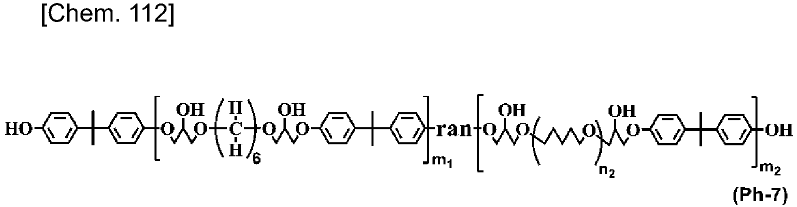

### Synthesis Example 8

Into a flask equipped with a thermometer, a cooling tube, and a stirrer, 420 g (2.0 equivalents) of diglycidyl ether of 1,12-dodecanediol (manufactured by Yokkaichi Chemical Company Limited: epoxy equivalent 210 g/eq) and 456 g (4.0 equivalents) of bisphenol A (hydroxyl equivalent: 114 g/eq) were charged, and the temperature was raised to 140°C over 30 minutes, and then 4.0 g of a 4% sodium hydroxide solution was charged. Thereafter, the mixture was heated to 150°C over 30 minutes, and further reacted at 150°C for 6 hours. Thereafter, a neutralized amount of sodium phosphate was added to obtain 858 g of a hydroxy compound (Ph-8). This hydroxy compound (Ph-8) was confirmed to contain a hydroxy compound as the target compound from the fact that a peak of M+ = 771 corresponding to the theoretical structure of m = 1 in Structural Formula (Ph-8) shown below was obtained in the mass spectrum. The hydroxyl equivalent of this hydroxy compound (Ph-8) calculated from GPC was 388 g/eq.

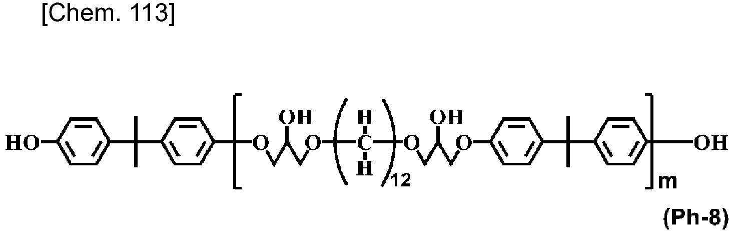

### Synthesis Example 9

A hydroxy compound (Ph-9) in an amount of 1390 g was obtained by the same reaction as in Synthesis Example 8 except that 420 g (2.0 equivalents) of the diglycidyl ether of 1,12-dodecanediol (epoxy equivalent 210 g/eq) in Synthesis Example 8 was changed to 962 g (2.0 equivalents) of diglycidyl ether of polypropylene glycol ("DENACOL EX-931" manufactured by Nagase ChemteX Corporation: epoxy equivalent 481 g/eq). This hydroxy compound (Ph-9) was confirmed to contain a hydroxy compound as the target compound from the fact that a peak of M+ = 1226 corresponding to the theoretical structure of m = 1, n2 = 11 in Structural Formula (Ph-9) shown below was obtained in the mass spectrum. The hydroxyl equivalent of this hydroxy compound (Ph-9) calculated from GPC was 593 g/eq.

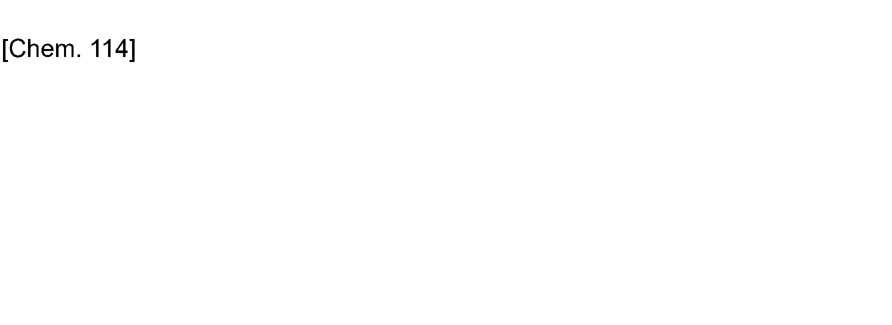

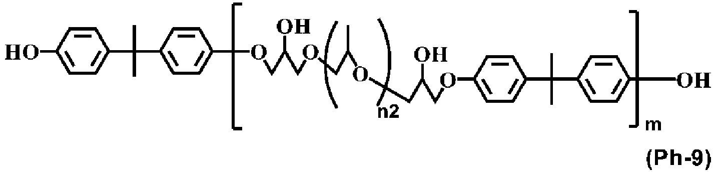

### Synthesis Example 10

While a flask equipped with a thermometer, a dropping funnel, a cooling tube, and a stirrer was purged with nitrogen, 205.3 g of the hydroxy compound (Ph-1) obtained in Synthesis Example 1, 647.5 g (7.0 mol) of epichlorohydrin, and 150 g of n-butanol were added to the flask and dissolved. Thereafter, the temperature was raised to 65°C, then the pressure was reduced to an azeotropic pressure, and 10.6 g (0.13 mol) of a 49% sodium hydroxide solution was added dropwise over 5 hours. Then, stirring was continued for 0.5 hours under the same conditions. During this period, the fraction distilled out by azeotropy was separated with a Dean-Stark trap, the aqueous layer was removed, and the reaction was performed while returning the oil layer to the reaction system. Thereafter, unreacted epichlorohydrin was distilled off by distillation under reduced pressure. To the obtained crude epoxy resin, 200 g of methyl isobutyl ketone and 100 g of n-butanol were added and dissolved. Further, 15.0 g of a 10% sodium hydroxide solution was added to this solution, the mixture was reacted at 80°C for 2 hours, and then water washing was repeated three times with 100 g of water until the PH of the washing liquid became neutral. Then, the inside of the system was dehydrated by azeotropy, microfiltration was performed, and then the solvent was distilled off under reduced pressure, whereby 235 g of an epoxy resin (Ep-1) was obtained. The epoxy equivalent of the obtained epoxy resin (Ep-1) was 2320 g/eq. The epoxy resin was confirmed to contain the epoxy resin (Ep-1) as the target product because a peak of M+ = 883 corresponding to a theoretical structure of m = 1, q = 1, p₁ = 0, and p₂ = 0 in Structural Formula (Ep-1) shown below was obtained in a mass spectrum of the epoxy resin.

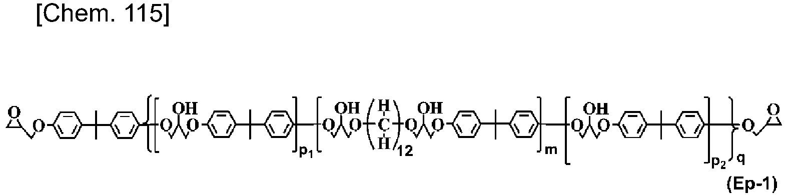

### Synthesis Example 11

An epoxy resin (Ep-2) in an amount of 251 g was obtained by the same reaction as in Synthesis Example 10, except that 205.3 g of the hydroxy compound (Ph-1) in Synthesis Example 10 was changed to 222.6 g of the hydroxy compound (Ph-2). The epoxy equivalent of the obtained epoxy resin (Ep-2) was 2510 g/eq. The epoxy resin was confirmed to contain the epoxy resin (Ep-2) as the target product because a peak of M + = 925 corresponding to a theoretical structure of m = 1, p1 = 0, p2 = 0, and q = 1 in Structural Formula (Ep-2) shown below was obtained in a mass spectrum of the epoxy resin.

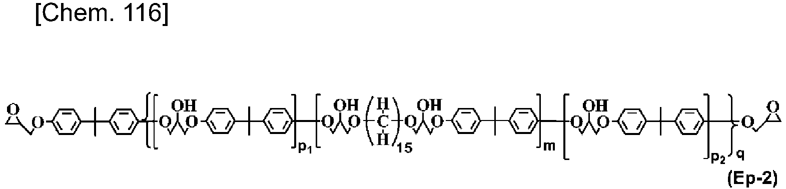

### Synthesis Example 12

An epoxy resin (Ep-3) in an amount of 229 g was obtained by the same reaction as in Synthesis Example 10, except that 205.3 g of the hydroxy compound (Ph-1) in Synthesis Example 10 was changed to 198.9 g of the hydroxy compound (Ph-3). The epoxy equivalent of the obtained epoxy resin (Ep-3) was 2250 g/eq. The epoxy resin was confirmed to contain the epoxy resin (Ep-3) as the target product because a peak of M+ = 841 corresponding to a theoretical structure of m = 1, p1 = 0, p2 = 0, and q = 1 in Structural Formula (Ep-3) shown below was obtained in a mass spectrum of the epoxy resin.

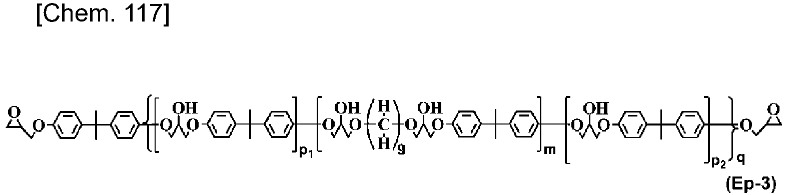

### Synthesis Example 13

An epoxy resin (Ep-4) in an amount of 193 g was obtained by the same reaction as in Synthesis Example 10, except that 205.3 g of the hydroxy compound (Ph-1) in Synthesis Example 10 was changed to 158.2 g of the hydroxy compound (Ph-4). The epoxy equivalent of the obtained epoxy resin (Ep-4) was 1802 g/eq. The epoxy resin was confirmed to contain the epoxy resin (Ep-4) as the target product because a peak of M+ = 1336 corresponding to a theoretical structure of m = 1, n2 = 11, p1 = 0, p2 = 0, and q = 1 in Structural Formula (Ep-4) shown below was obtained in a mass spectrum of the epoxy resin.

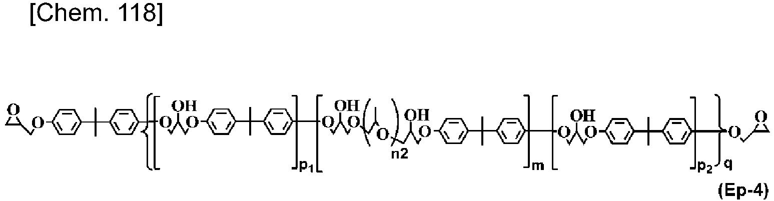

### Synthesis Example 14

An epoxy resin (Ep-5) in an amount of 277 g was obtained by the same reaction as in Synthesis Example 10, except that 205.3 g of the hydroxy compound (Ph-1) in Synthesis Example 10 was changed to 252.0 g of the hydroxy compound (Ph-5). The epoxy equivalent of the obtained epoxy resin (Ep-5) was 2834 g/eq. The epoxy resin was confirmed to contain the epoxy resin (Ep-5) as the target product because a peak of M+ = 1492 corresponding to a theoretical structure of m = 1, n2 = 11, p1 = 0, p2 = 0, and q = 1 in Structural Formula (Ep-5) shown below was obtained in a mass spectrum of the epoxy resin.

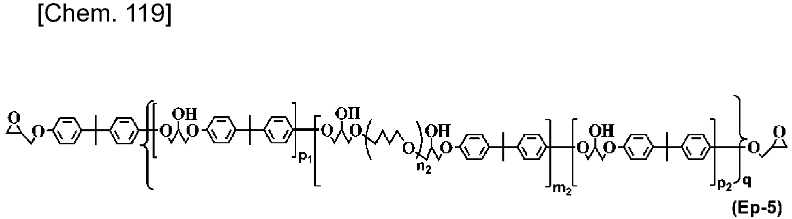

### Synthesis Example 15

An epoxy resin (Ep-6) in an amount of 229 g was obtained by the same reaction as in Synthesis Example 10, except that 205.3 g of the hydroxy compound (Ph-1) in Synthesis Example 10 was changed to 198.4 g of the hydroxy compound (Ph-6). The epoxy equivalent of the obtained epoxy resin (Ep-6) was 2244 g/eq. The epoxy resin was confirmed to contain the epoxy resin (Ep-6) as the target product because a peak of M+ = 1796 corresponding to a theoretical structure of m1 = 1, m2 = 2, n2 = 11, p1 = 0, p2 = 0, and q = 1 in Structural Formula (Ep-6) shown below was obtained in a mass spectrum of the epoxy resin.

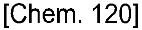

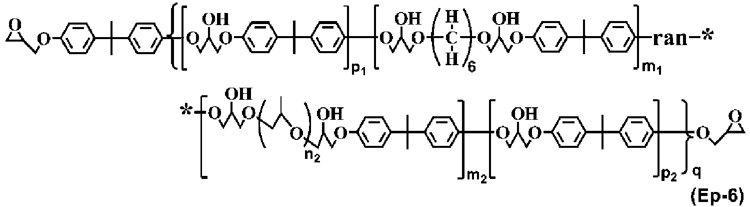

### Synthesis Example 16

An epoxy resin (Ep-7) in an amount of 223 g was obtained by the same reaction as in Synthesis Example 10, except that 205.3 g of the hydroxy compound (Ph-1) in Synthesis Example 10 was changed to 191.4 g of the hydroxy compound (Ph-7). The epoxy equivalent of the obtained epoxy resin (Ep-7) was 2167 g/eq. The epoxy resin was confirmed to contain the epoxy resin (Ep-7) as the target product because a peak of M+ = 1951 corresponding to a theoretical structure of m1 = 1, m2 = 2, n2 = 11, p1 = 0, p2 = 0, and q = 1 in Structural Formula (Ep-7) shown below was obtained in a mass spectrum of the epoxy resin.

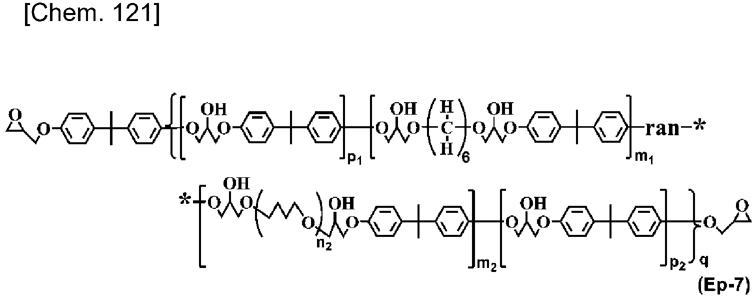

### Synthesis Example 17

An epoxy resin (Ep-8) in an amount of 399 g was obtained by the same reaction as in Synthesis Example 10, except that 205.3 g of the hydroxy compound (Ph-1) in Synthesis Example 10 was changed to 388 g of the hydroxy compound (Ph-8). The epoxy equivalent of the obtained epoxy resin (Ep-8) was 488 g/eq. The epoxy resin was confirmed to contain the epoxy resin (Ep-8) as the target product because a peak of M+ = 883 corresponding to a theoretical structure of m = 1, p1 = 0, p2 = 0, and q = 1 in Structural Formula (Ep-8) shown below was obtained in a mass spectrum of the epoxy resin.

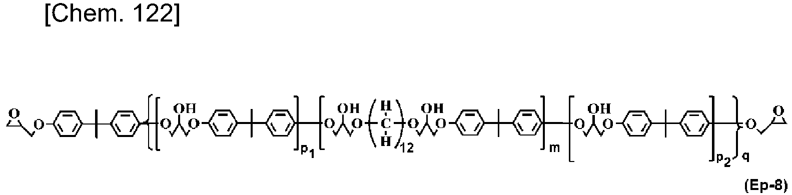

### Synthesis Example 18

An epoxy resin (Ep-9) in an amount of 584 g was obtained by the same reaction as in Synthesis Example 10, except that 205.3 g of the hydroxy compound (Ph-1) in Synthesis Example 10 was changed to 593 g of the hydroxy compound (Ph-9). The epoxy equivalent of the obtained epoxy resin (Ep-9) was 714 g/eq. The epoxy resin was confirmed to contain the epoxy resin (Ep-9) as the target product because a peak of M+ = 1336 corresponding to a theoretical structure of m = 1, p1 = 0, p2 = 0, and q = 1 in Structural Formula (Ep-9) shown below was obtained in a mass spectrum of the epoxy resin.

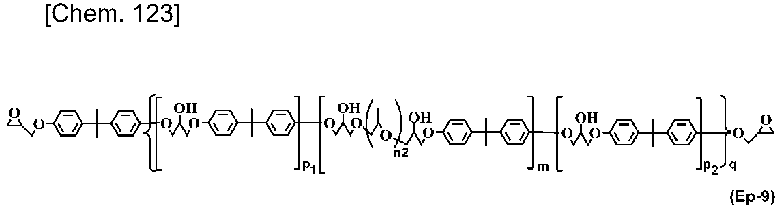

### Synthesis Example 19

While a flask equipped with a thermometer, a dropping funnel, a cooling tube, and a stirrer was purged with nitrogen, 48.8 g (epoxy equivalent 488 g/eq) of the epoxy resin (EP-8) obtained in Synthesis Example 17 and 19.6 g (0.2 mol) of furfuryl alcohol were added to the flask and dissolved. Thereafter, 0.7 g (0.007 mol) of triethylamine was added, and the mixture was heated to 70°C over 30 minutes, and further reacted at 70°C for 9 hours. Thereafter, the temperature was raised to 150°C, and excessive furfuryl alcohol was distilled off under reduced pressure, whereby 53 g of a furan compound (F-1) was obtained. The molecular weight of this furan compound (F-1) measured by GPC was Mn = 1600 and Mw = 4900. The furan compound (F-1) had a molecular weight of 575 g/eq per mole of furan structure calculated by 1H-NMR.

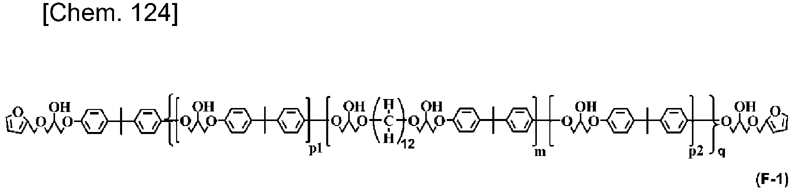

### Synthesis Example 20

A flask equipped with a thermometer, a stirrer, and a cooling tube was charged with 29 g of the furan compound (F-1, furan equivalent 575 g/eq) obtained in Synthesis Example 19, 5.3 g of 1,6'-bismaleimide-(2,2,4-trimethyl)hexane (BMI-THM manufactured by Daiwa Fine Chemicals Co., Ltd.), and 50 g of toluene, and the mixture was purged with nitrogen, and then reacted at 60°C for 20 hours. Thereafter, toluene was distilled off under reduced pressure under decompression, whereby 34 g of a furan compound (F-2) was obtained. The molecular weight measured by GPC was Mn = 2000 and Mw = 7900. The molecular weight per mole of the furan structure calculated by ¹H-NMR was 2043 g/eq. In the following chemical formulae over two or more lines, * indicates that it is directly bound to the position of * in the next line.

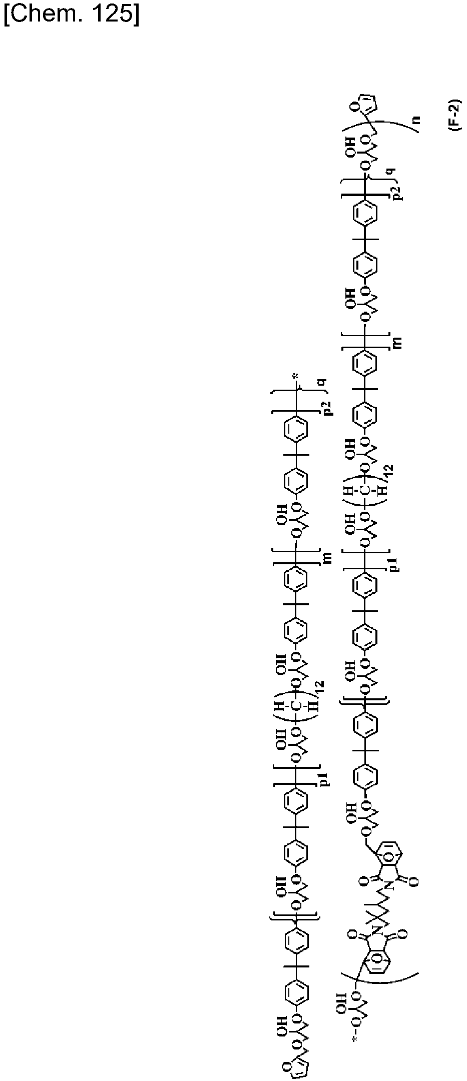

### Synthesis Example 21

A reaction was performed in the same manner as in Synthesis Example 19 except that 48.8 g (epoxy equivalent 488 g/eq) of the epoxy resin (Ep-8) in Synthesis Example 19 was changed to 71.4 g (epoxy equivalent 714 g/eq) of the epoxy resin (Ep-9), whereby 73 g of a furan compound (F-3) was obtained. The molecular weight of this furan compound (F-3) measured by GPC was Mn = 1900 and Mw = 5100. The furan compound (F-3) had a molecular weight of 796 g/eq per mole of furan structure calculated by ¹H-NMR.

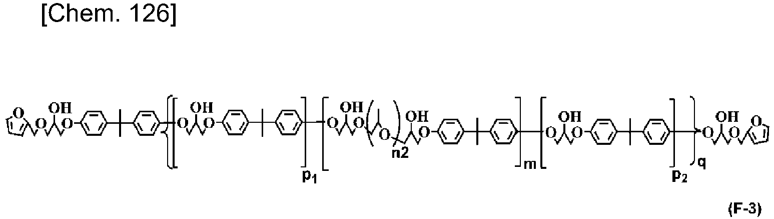

### Synthesis Example 22

A reaction was performed in the same manner as in Synthesis Example 20 except that 29 g of the furan compound (F-1, furan equivalent 575 g/eq) in Synthesis Example 20 was changed to 40 g of the furan compound (F-3, furan equivalent 796 g/eq), whereby 46 g of a furan compound (F-4) was obtained. The molecular weight measured by GPC was Mn = 2300 and Mw = 9000. The molecular weight per mole of the furan structure calculated by ¹H-NMR was 2706 g/eq.

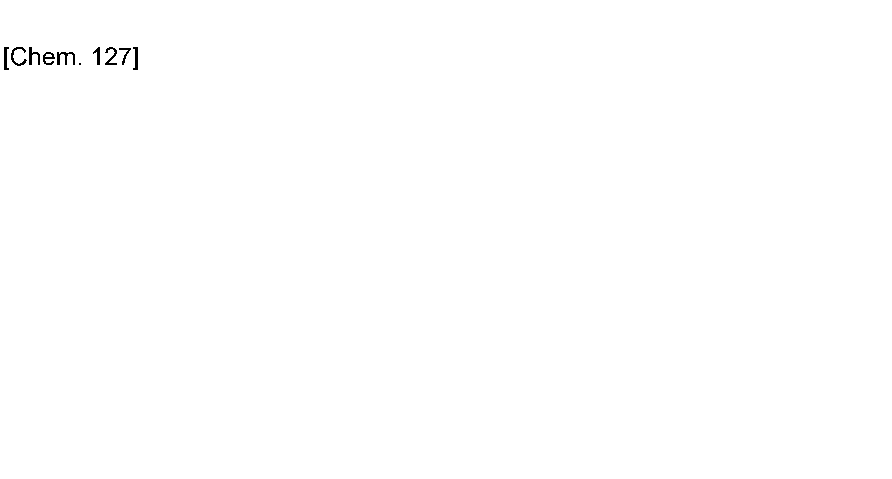

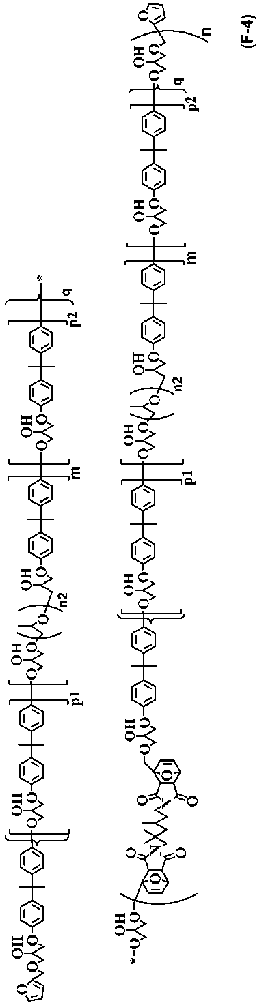

### Synthesis Example 23

A reaction was performed in the same manner as in Synthesis Example 20 except that 5.3 g of 1,6'-bismaleimide-(2,2,4-trimethyl)hexane (BMI-THM manufactured by Daiwa Fine Chemicals Co., Ltd.) in Synthesis Example 20 was changed to 11.9 g, whereby 41 g of a maleimide compound (M-1) was obtained. The molecular weight measured by GPC was Mn = 2300 and Mw = 9000. The molecular weight per 1 mol of the maleimide structure calculated by 1H-NMR was 1627 g/eq.

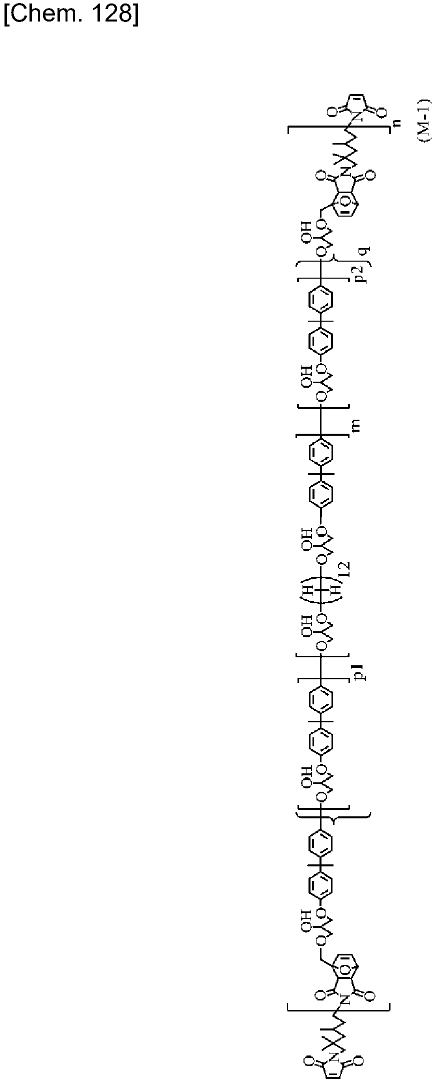

### Synthesis Example 24

Into a flask equipped with a thermometer, a stirrer, and a cooling tube, 34 g of the furan compound (F-2, furan equivalent 2043 g/eq) obtained in Synthesis Example 20, 3.1 g of N-(4-aminophenyl)maleimide (manufactured by Tokyo Chemical Industry Co., Ltd.), and 50 g of toluene were charged, and the mixture was purged with nitrogen, then reacted at 60°C for 12 hours. Thereafter, tetrohydrofuran was distilled off under reduced pressure by decompression, whereby 33 g of an amino group-containing compound (D-1) was obtained. The molecular weight measured by GPC was Mn = 2100 and Mw = 8400. The active hydrogen equivalent calculated by 1H-NMR was 1115 g/eq.

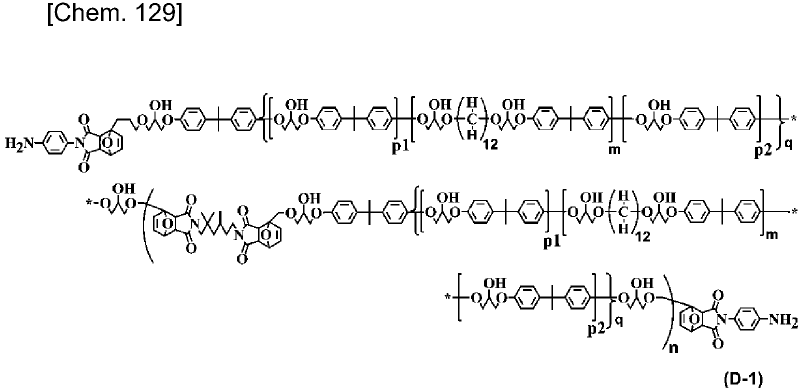

### Synthesis Example 25

A reaction was performed in the same manner as in Synthesis Example 24 except that 34 g of the furan compound (F-2, furan equivalent 2043 g/eq) in Synthesis Example 24 was changed to 45 g of the furan compound (F-4, furan equivalent 2706 g/eq), whereby 44 g of an amino group-containing compound (D-2) was obtained. The molecular weight measured by GPC was Mn = 2700 and Mw = 10100. The active hydrogen equivalent calculated by 1H-NMR was 1447 g/eq.

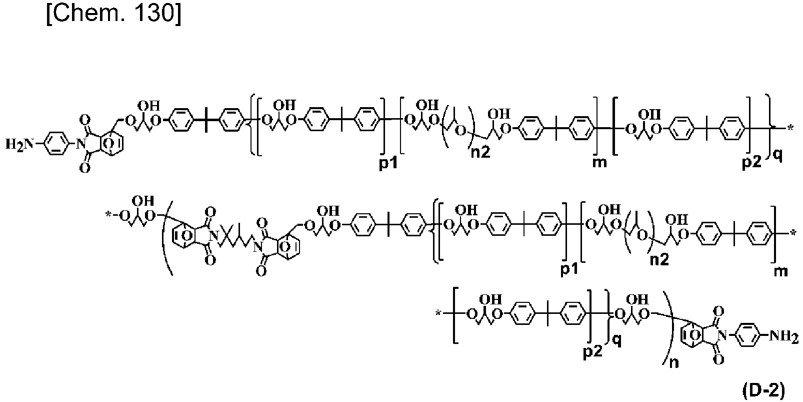

### Synthesis Example 26

Into a flask equipped with a thermometer, a stirrer, and a cooling tube, 40 g of the maleimide compound (M-1, maleimide equivalent 1627 g/eq) obtained in Synthesis Example 23, 2.4 g of furfurylamine (manufactured by Tokyo Chemical Industry Co., Ltd.), and 50 g of toluene were charged, and the mixture was purged with nitrogen, and then reacted at 60°C for 12 hours. Thereafter, toluene was distilled off under reduced pressure by decompression, whereby 38 g of an amino group-containing compound (D-3) was obtained. The molecular weight measured by GPC was Mn = 2400 and Mw = 9100. The active hydrogen equivalent calculated by 1H-NMR was 862 g/eq.

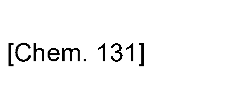

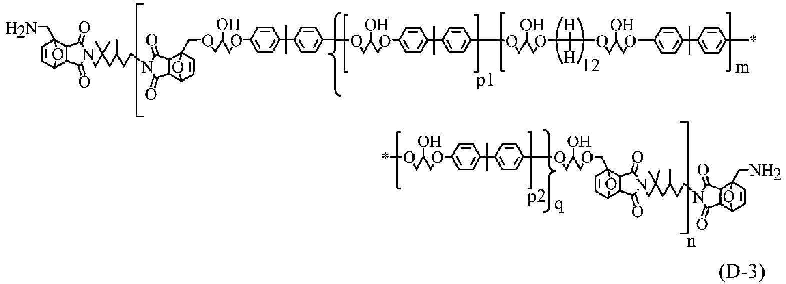

### Synthesis Example 27

An amino group-containing compound (D-4) was synthesized as described below with reference to the method described in Macromol. Mater. Eng. 2020, 305, 2000359.

Into a flask equipped with a thermometer, a stirrer, and a cooling tube, 18 g of 4,4'-diphenylmethane bismaleimide (BMI-1000 manufactured by Daiwa Fine Chemicals Co., Ltd.), 15 g of furfurylamine, and 50 g of toluene were charged, and the mixture was purged with nitrogen, then reacted at 60°C for 2 hours. Thereafter, toluene was distilled off under reduced pressure by decompression, whereby 31 g of an amino group-containing compound (D-4) was obtained. The amino group-containing compound was confirmed to contain the amino group-containing compound (D-4) as the target product because a peak of M + = 552 was obtained in the mass spectrum.

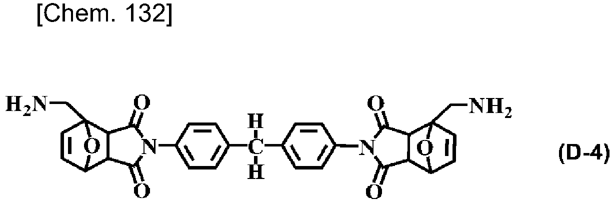

### Synthesis Example 28

Into a flask equipped with a thermometer, a stirrer, and a cooling tube, 34 g of the furan compound (F-2, furan equivalent 2043 g/eq) obtained in Synthesis Example 20, 3.2 g of 4-hydroxyphenylmaleimide (Tokyo Chemical Industry Co., Ltd.), and 50 g of toluene were charged, and the mixture was purged with nitrogen, then reacted at 60°C for 12 hours. Thereafter, tetrohydrofuran was distilled off under reduced pressure by decompression, whereby 33 g of a phenolic hydroxyl group-containing compound (D-5) was obtained. The molecular weight measured by GPC was Mn = 2200 and Mw = 8300. The hydroxyl equivalent calculated by 1H-NMR was 2288 g/eq.

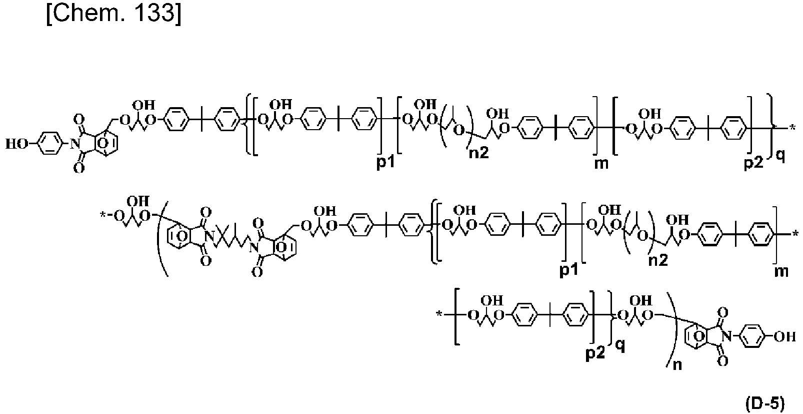

### Synthesis Example 29

A reaction was performed in the same manner as in Synthesis Example 28 except that 34 g of the furan compound (F-2, furan equivalent 2043 g/eq) in Synthesis Example 28 was changed to 45 g of the furan compound (F-4, furan equivalent 2706 g/eq), whereby 44 g of a phenolic hydroxyl group-containing compound (D-6) was obtained. The molecular weight measured by GPC was Mn = 2700 and Mw = 10100. The hydroxyl equivalent calculated by 1H-NMR was 2895 g/eq.

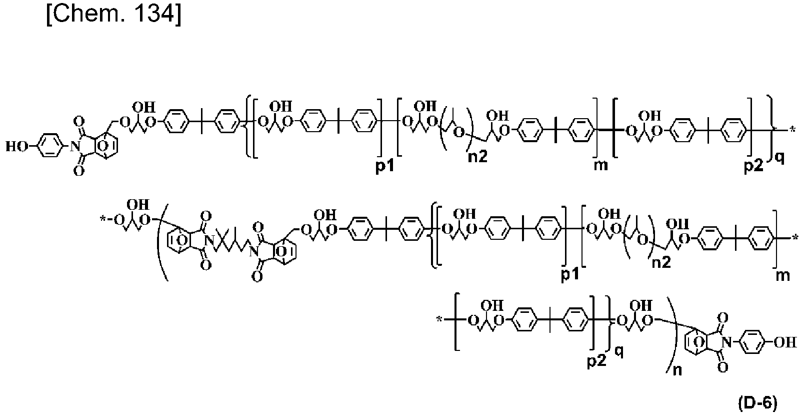

### Production of Composition and Cured Article of Examples 1 to 32 and Comparative Examples 1 to 6

Each compound was used in the formulation according to Tables 1 and 2 (the numbers in the tables are based on mass), and was uniformly mixed with a mixer ("THINKY MIXER ARV-200" manufactured by THINKY CORPORATION), whereby a curable resin composition was obtained. This curable resin composition was sandwiched between aluminum mirror plates ("JIS H 4000 A1050P" manufactured by Engineering Test Service Co., Ltd.) with a silicon tube as a spacer, and was heated and cured under predetermined conditions, whereby a cured article having a thickness of 0.7 mm was obtained.

### Tensile Elongation

The resultant cured article was punched out into a dumbbell shape (JIS K 7161-2-1BA) with a punching blade, and the dumbbell shape was used as a test piece. The tensile test of the test piece was performed in accordance with JIS K 7162-2 using a tensile tester ("Autograph AG-IS" manufactured by Shimadzu Corporation), and the elongation at break at 23°C was evaluated (test speed: 2 mm/min).

### Evaluation of Adhesiveness and Dismantling Property

Each compound was used in the formulation according to Tables 1 and 2 (the numbers in the tables are based on mass), and was uniformly mixed with a mixer ("THINKY MIXER ARV-200" manufactured by THINKY CORPORATION), whereby a curable resin composition was obtained. This resin composition was applied to one of two cold-rolled steel sheets ("SPCC-SD" manufactured by TP Giken Co., Ltd., 1.0 mm × 25 mm × 100 mm), glass beads ("J-80" manufactured by Potters-Ballotini Co., Ltd.) were added as a spacer, and another SPCC-SD was bonded thereto (adhesion area: 25 mm × 12.5 mm). The resultant product was heated and cured at a temperature shown in Tables 1 and 2 to obtain a shear test piece. The test piece was subjected to a tensile shear test to evaluate the adhesiveness. The test was performed in accordance with JIS K 6850, and the maximum point stresses in a measurement environment of 23°C were compared.
- Initial adhesive strength: A shear test was performed on the produced test piece without any particular treatment.
- Adhesive strength after heating: The prepared test piece was heated at 200°C for 30 minutes in a heating dryer, and the base material was cooled to room temperature, followed by a shear test.
- Dismantling property evaluation: The rate of decrease in strength was calculated from "(initial adhesive strength - adhesive strength after heating)/initial adhesive strength × 100".
- Evaluation of reproducibility of dismantling property: The standard deviation of "adhesive strength after heating" was evaluated, and evaluated according to the following criteria. A: Standard deviation is less than 0.5 MPa (reproducibility is very good)
   B: Standard deviation is 0.5 MPa or more and less than 1.5 MPa (reproducibility is good)
   C: Standard deviation is 1.5 MPa or more (poor reproducibility)
   -: Evaluation was not performed because the strength reduction rate was less than 10% (no dismantling function)
The maximum point stresses in the measurement environment of 23°C were compared.

### Structural Periodicity

A section of the resin cured article was produced with an ultramicrotome, and the structural periodicity was observed. The observation was performed with a scanning electron microscope (SEM) so that the contrast of the morphology can be clearly distinguished.

### SEM

Used model: JSM-7800F manufactured by JEOL Ltd.
Acceleration voltage: 5 kV

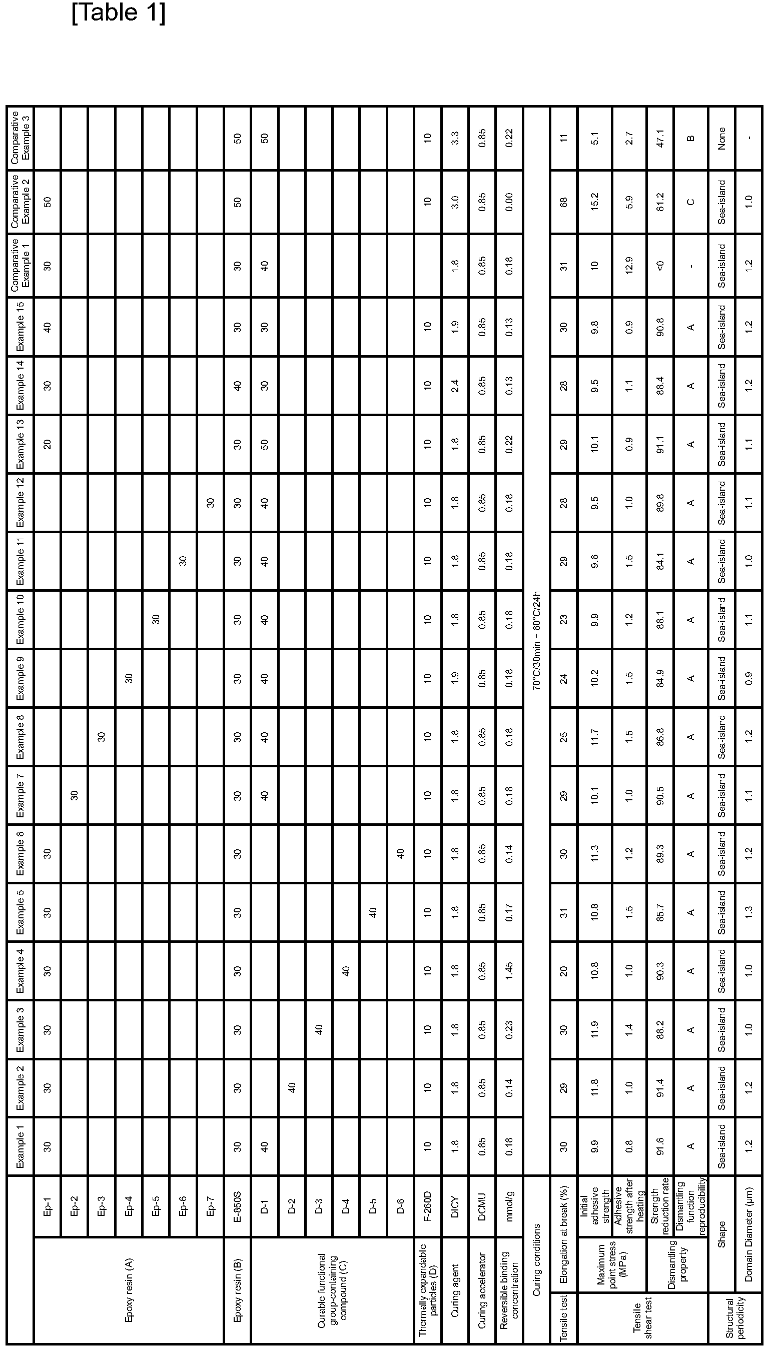

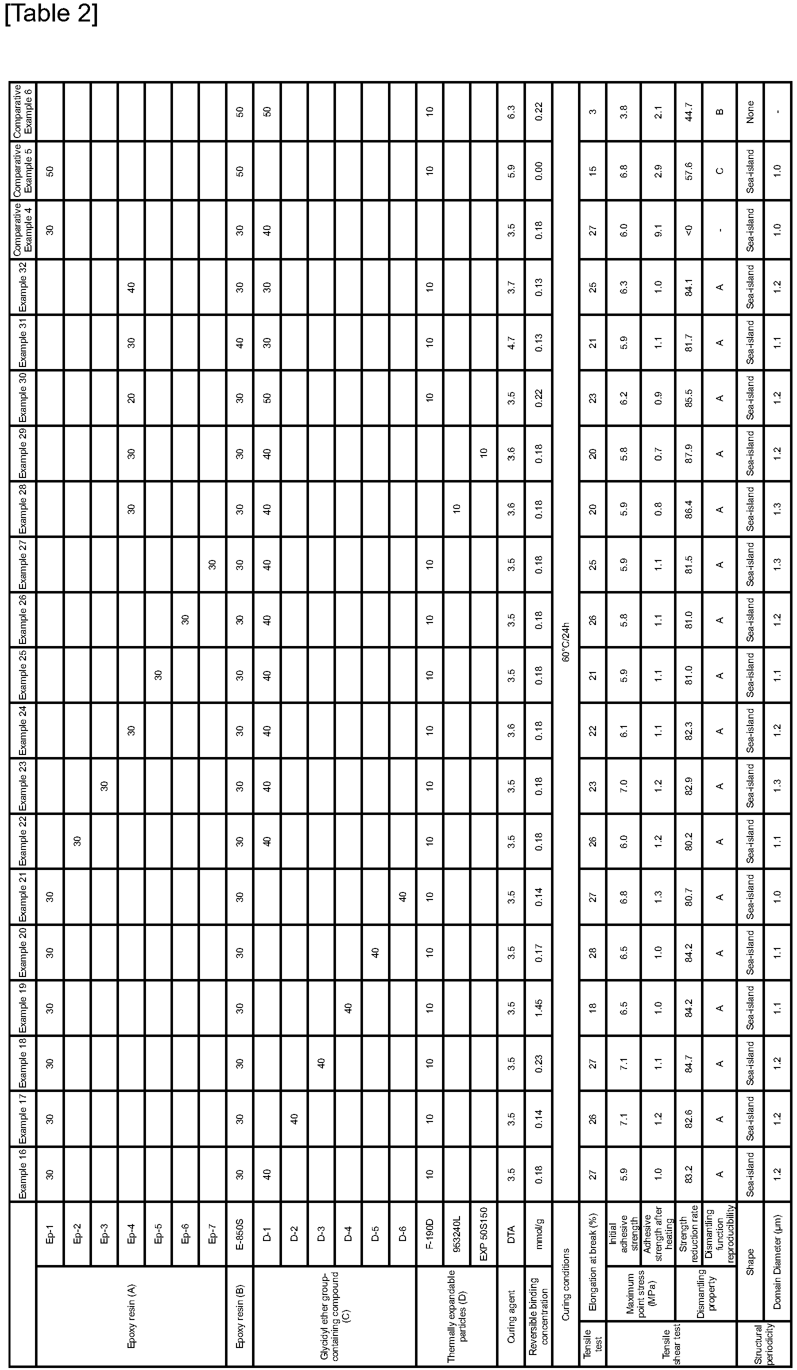

The formulations shown in the tables are as follows.
E-850S: bisphenol A-type liquid epoxy resin (epoxy equivalent: 188 g/eq, manufactured by DIC Corporation)
DICY: dicyandiamide ("DICY7" manufactured by Mitsubishi Chemical Corporation)
DCMU: 3-(3,4-dichlorophenyl)-1,1-dimethylurea ("B-605-IM" manufactured by DIC Corporation)
DTA: diethylenetriamine (manufactured by KANTO CHEMICAL CO., INC.) F-260D, F-190D: thermal expansion capsule (Matsumoto Yushi-Seiyaku Co., Ltd.)
953240L: thermally expanded graphite (Ito Graphite Co., Ltd.)
EXP 50 S150: thermally expanded graphite (Fuji Graphite Industry Co., Ltd.)

Examples 1 to 32 showed good results in all of the flexibility, initial adhesive strength, strength reduction rate in additional heating, and dismantling function expression reproducibility. In this system, the expansion material expands at the time of heating to induce destruction of the adhesive layer and a decrease in the adhesive area at the adhesive layer/base material interface. Thus, this system exhibits easily dismantlable properties not only at the time of heating operation but also after returning to normal temperature.

Further, this system has a phase separation structure, suggesting a possibility that the reversible binding unit is unevenly distributed in the adhesive layer. The reversible binding structure is unevenly distributed in the flexible sea phase, and thus, the dissociation effect through the Retro-Diels-Alder reaction during heating is further enhanced. As a result, softening and embrittlement of the adhesive layer at the time of heating are induced, and the expansion effect of the expansion capsule is further promoted, and as a result, it is presumed that the reproducibility of the easily dismantlable properties is improved.

In Comparative Examples 1 and 4, no expansion material was contained in the composition, and thus, the dismantling function was not exhibited. Although dissociation of reversible binding (Retro-Diels-Alder reaction) occurs at the time of heating, it is considered that the bond is formed again (Diels-Alder reaction) by the step of cooling to normal temperature, and thus, dismantling properties under normal temperature conditions are not exhibited.

In Comparative Example 2 and Comparative Example 5, the variation in the adhesive strength when the adherend was additionally heated was large, and the reproducibility of the dismantling function was not obtained. Comparative Example 2 and Comparative Example 5 did not contain a reversible binding, and it is presumed that the expression of the function was insufficient only by the effect of the expansion material.

In Comparative Examples 3 and 6, the flexibility of the cured article and the initial adhesive strength were very low. In Examples, flexibility and adhesiveness are provided by the phase separation structure of the epoxy resin (A) and the epoxy resin (B), but in Comparative Examples 3 and 6, the phase separation structure was not exhibited, and it is considered that flexibility and adhesiveness were not exhibited.

## Claims

1. A curable resin composition comprising:
an epoxy resin (A) represented by General Formula (1) shown below and having an epoxy equivalent of from 500 to 10000 g/eq;
an epoxy resin (B) having an epoxy equivalent of from 100 to 300 g/eq;
a curable functional group-containing compound (C) represented by General Formula (4-1) or (4-2) shown below; and
thermally expandable particles (D): 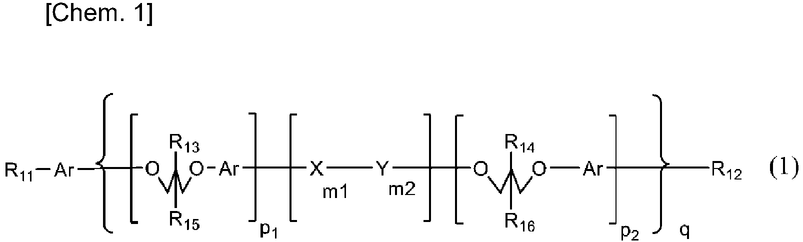
where in Formula (1), Ar each independently represents a structure having an unsubstituted or substituted aromatic ring,
X is a structural unit represented by General Formula (2) shown below, and Y is a structural unit represented by General Formula (3) shown below: 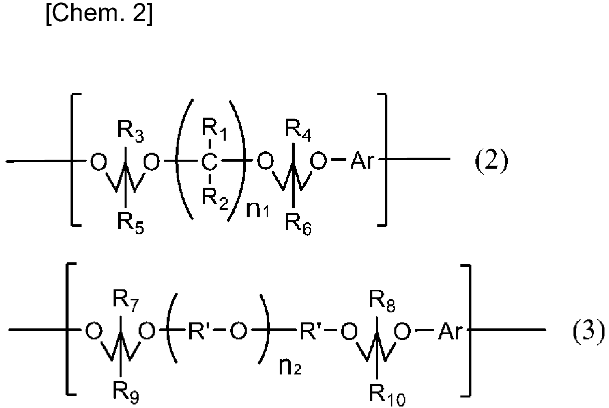
where in Formulae (2) and (3), Ar is the same as described above,
R₁ and R₂ are each independently a hydrogen atom, a methyl group, or an ethyl group,
R' is a divalent hydrocarbon group having from 2 to 12 carbon atoms,
R₃, R₄, R₇, and R₈ are each independently a hydroxyl group, a glycidyl ether group, or a 2-methylglycidyl ether group,
R₅, R₆, R₉, and R₁₀ are each independently a hydrogen atom or a methyl group,
n1 is an integer of from 4 to 16,
n2 is an average value of repeating units and is from 2 to 30;
R₁₁ and R₁₂ are each independently a glycidyl ether group or a 2-methylglycidyl ether group,
R₁₃ and R₁₄ are each independently a hydroxyl group, a glycidyl ether group, or a 2-methylglycidyl ether group,
R₁₅ and R₁₆ are a hydrogen atom or a methyl group,
m1, m2, p1, p2, and q are average values of repetition,
m1 and m2 are each independently from 0 to 25 and satisfy m1 + m2 ≥ 1,
p1 and p2 are each independently from 0 to 5, and
q is from 0.5 to 5, provided that a bond between X represented by General Formula (2) and Y represented by General Formula (3) is optionally random or block, and a total number of structural units X or Y present in one molecule is m1 or m2, respectively: 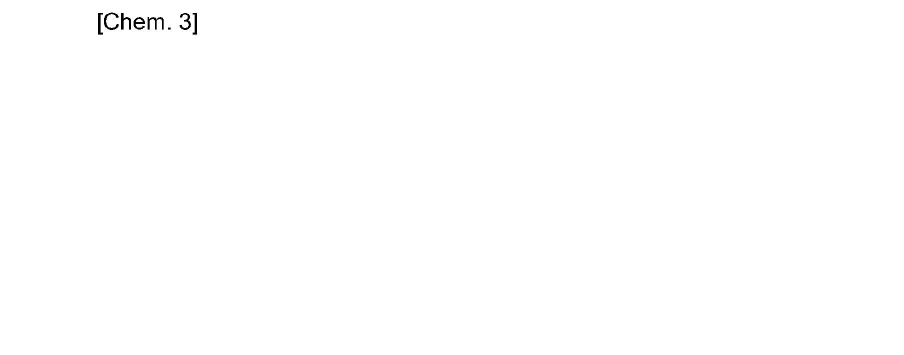 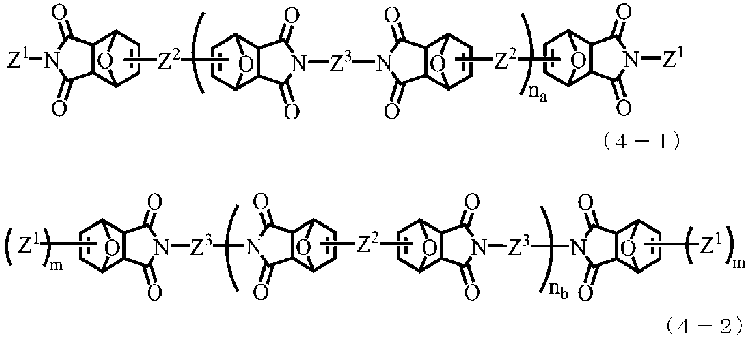
where in Formulae (4-1) and (4-2), a furan-derived structure optionally includes a halogen atom, an alkoxy group, an aralkyloxy group, an aryloxy group, a nitro group, an amide group, an alkyloxycarbonyl group, an aryloxycarbonyl group, a cyano group, an alkyl group, a cycloalkyl group, an aralkyl group, or an aryl group as a substituent, nₐ and n_{b} are each independently from 0 to 10 as an average value of repetition numbers, m is an integer of from 1 to 4, Z¹ is any of structures represented by Formula (5) shown below, Z² is any of structures represented by Formulae (6A) and (6B) shown below, Z³ is any of structures represented by Formulae (7-1) to (7-3) shown below, and a plurality of structures in one molecule are optionally the same or different: 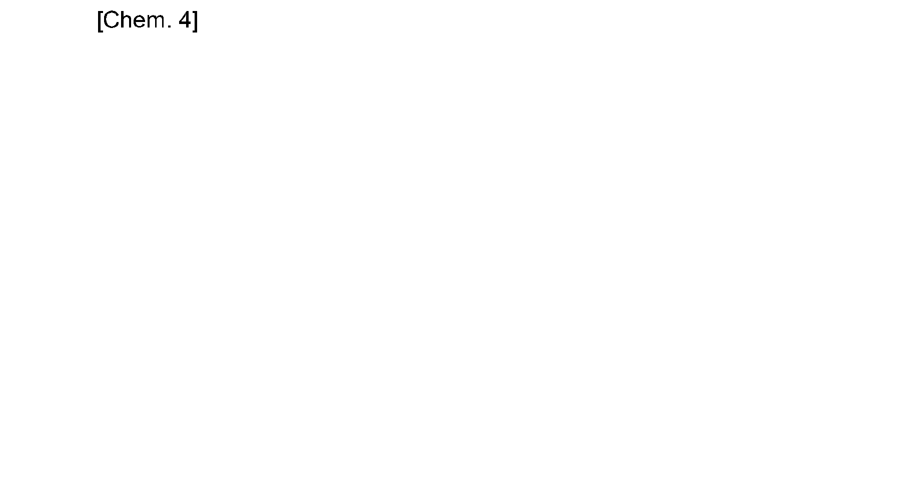 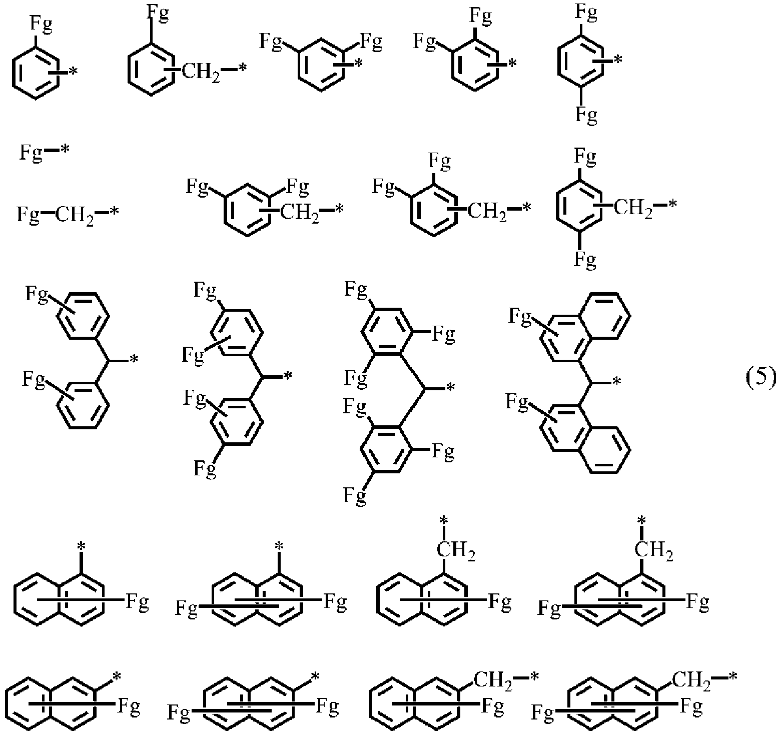
where in Formula (5), an aromatic ring is optionally substituted or unsubstituted, and * represents a binding point, Fg is a curable functional group, and -Fg on a naphthalene ring indicates that it is optionally bound to any position: 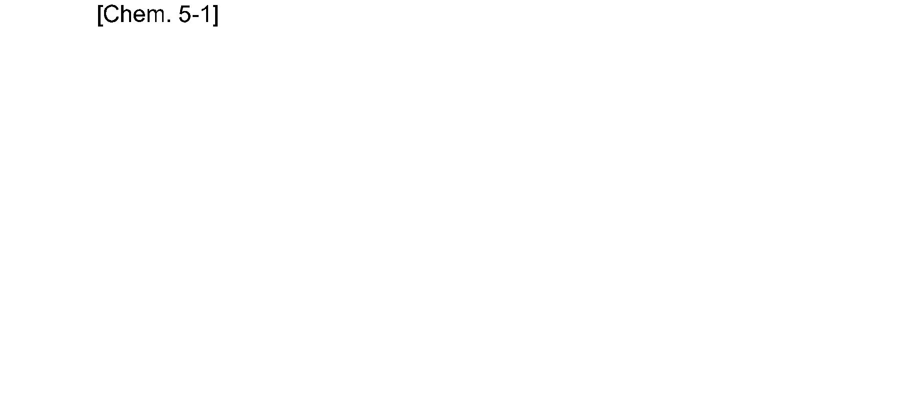 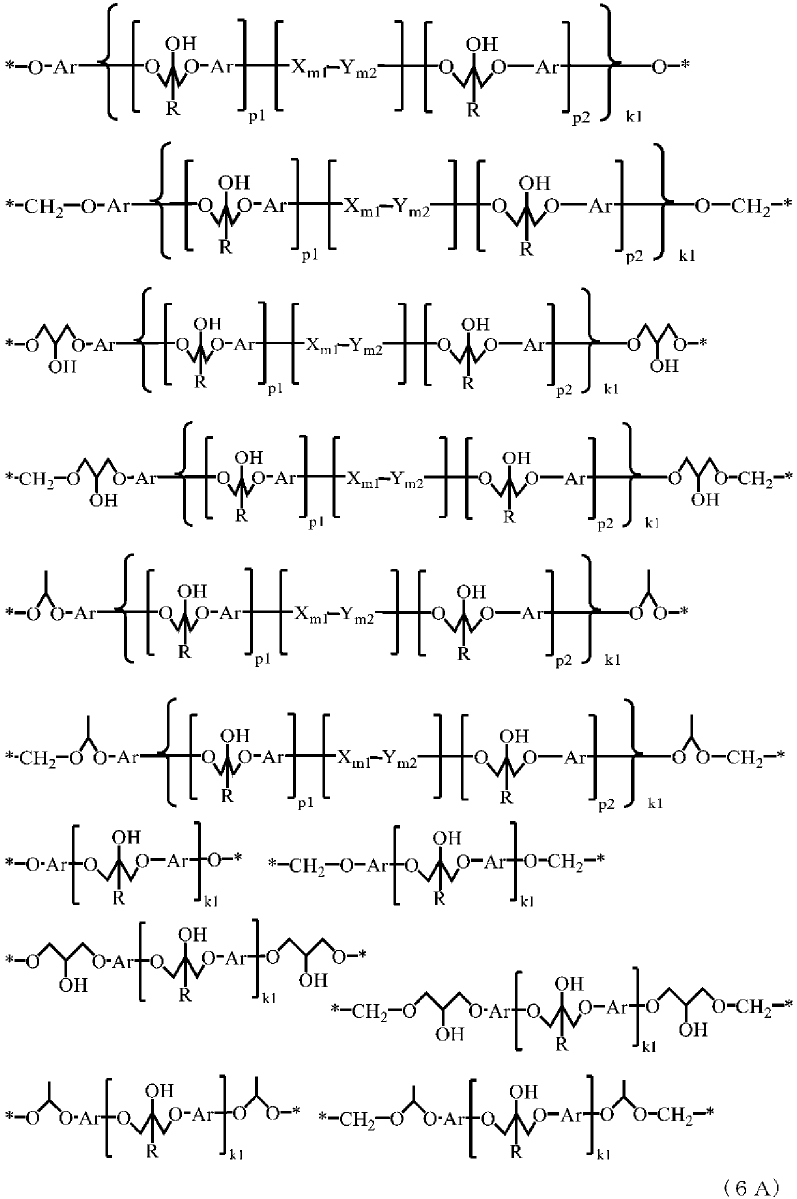 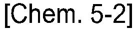 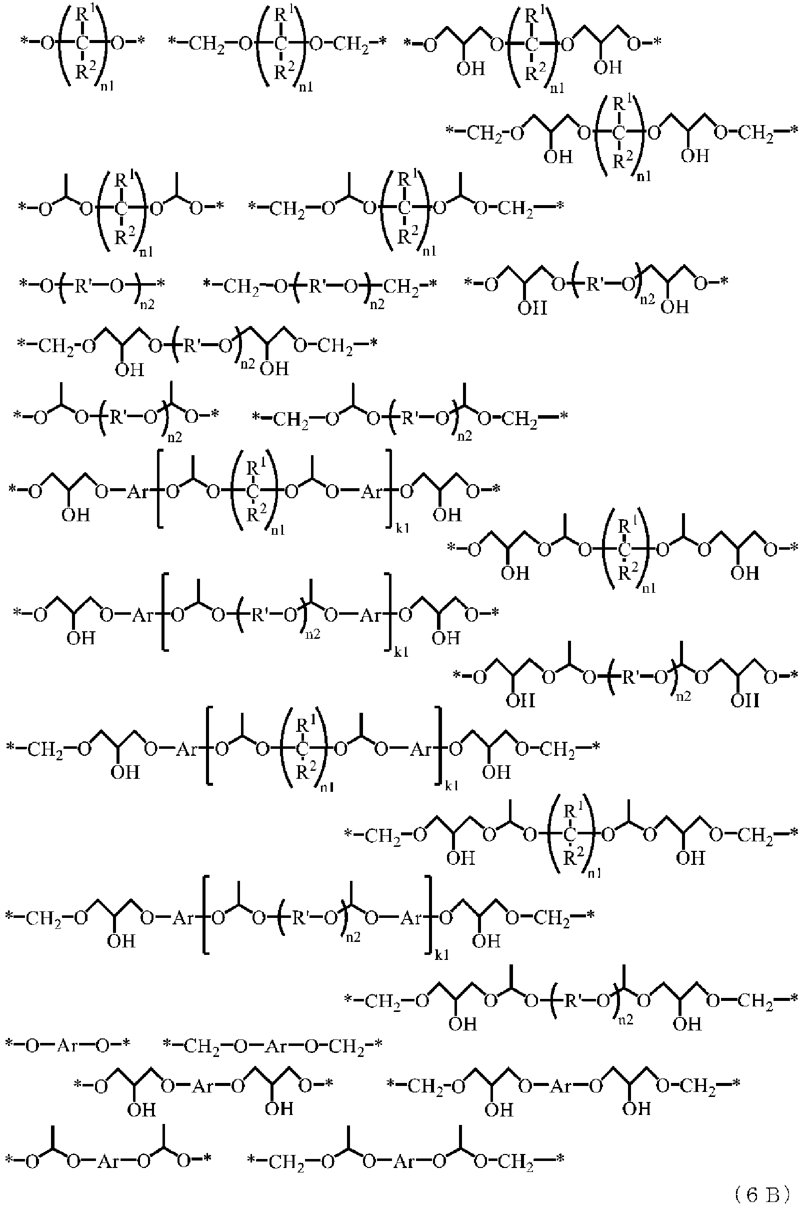
where in Formulae (6A) and (6B), Ar each independently represents an unsubstituted or substituted aromatic ring-containing structure,
R¹ and R² are each independently a hydrogen atom, a methyl group, or an ethyl group,
R is a hydrogen atom or a methyl group,
R' is a divalent hydrocarbon group having from 2 to 12 carbon atoms,
n1 is an integer of from 4 to 16, and n2 is an average value of repeating units and is from 2 to 30;
k1 is an average of repetition numbers and ranges from 0.5 to 5;
p1 and p2 are each independently from 0 to 5,
X is a structural unit represented by Formula (6-1) shown below, and Y is a structural unit represented by Formula (6 -2) shown below; 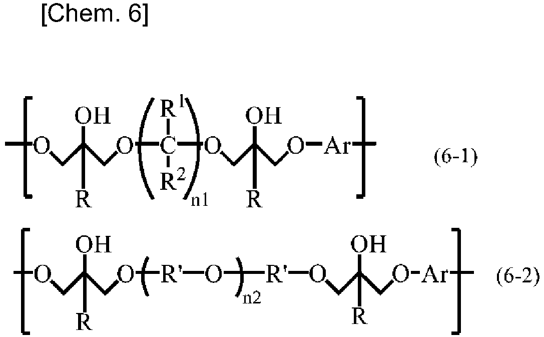
where in Formulae (6-1) and (6-2), Ar, R, R¹, R², R', n1, and n2 are the same as described above;
m1 and m2 are average values of repetition, each independently from 0 to 25, and satisfy m1 + m2 ≥ 1,
provided that a bond between the structural unit X represented by Formula (6-1) and the structural unit Y represented by Formula (6-2) is optionally random or block, and a total number of structural units X or Y present in one molecule is m1 or m2, respectively: 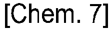 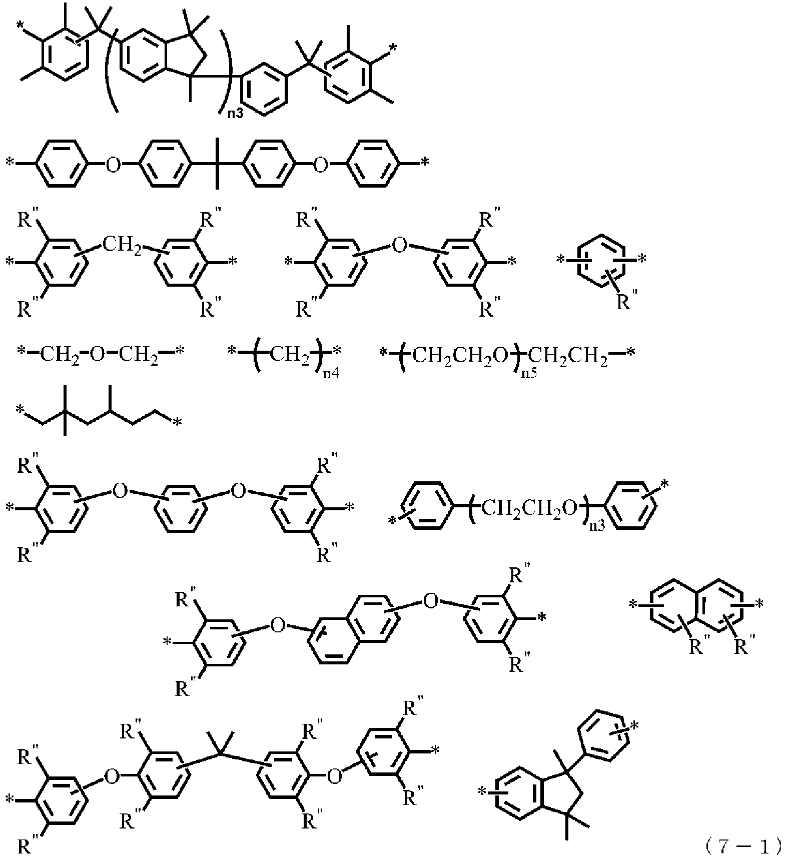 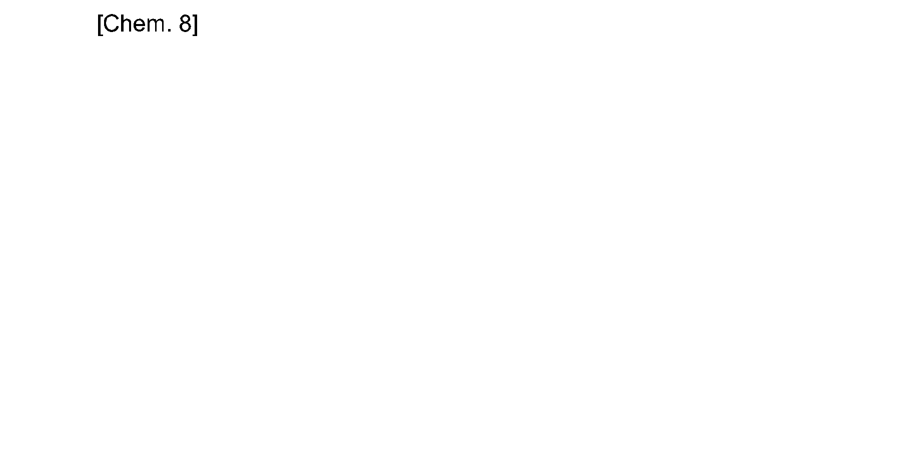 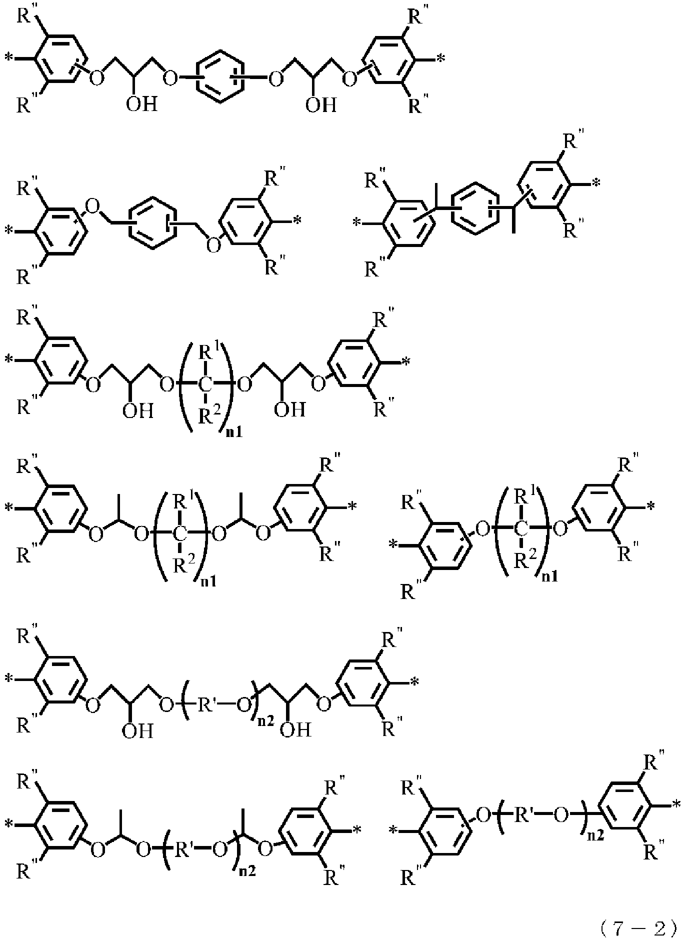 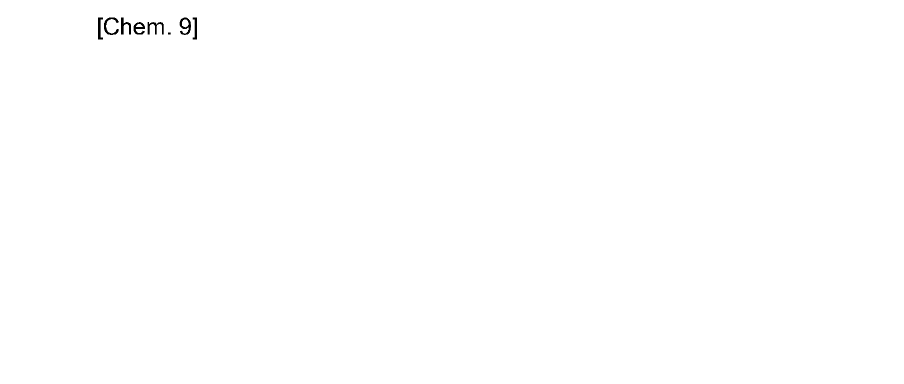 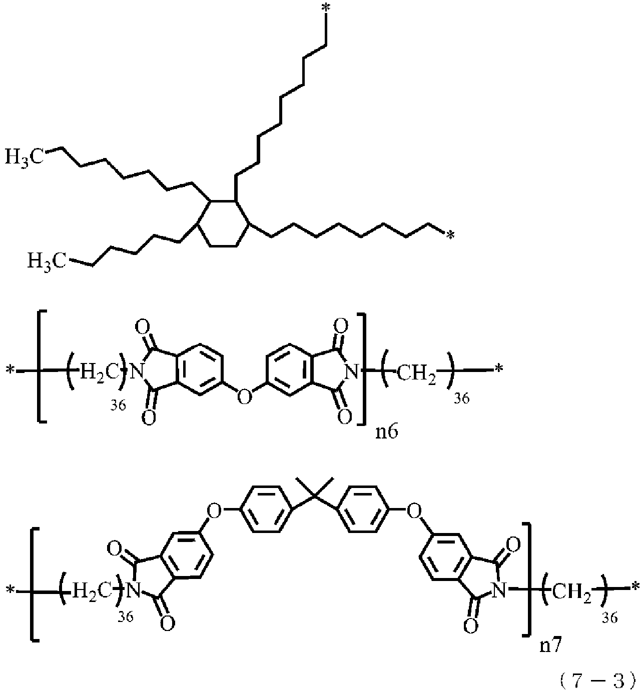
where in Formulae (7-1) to (7-3), n3 and n5 are average values of repetition numbers and are each from 0.5 to 10, n4 is an integer of from 1 to 16, and R" is each independently a hydrogen atom, a methyl group, or an ethyl group.

2. The curable resin composition according to claim 1, wherein the curable functional group-containing compound (C) is a hydroxyl group-containing compound or an amine group-containing compound.

3. The curable resin composition according to claim 1 or 2, wherein a concentration of a reversible binding in the curable functional group-containing compound (C) is 0.10 mmol/g or more relative to a total mass of curable components in the curable resin composition.

4. The curable resin composition according to claim 1 or 2, further comprising an epoxy resin curing agent other than the curable functional group-containing compound (C).

5. The curable resin composition according to claim 1 or 2, wherein a mass ratio (A):(B) between the epoxy resin (A) and the epoxy resin (B) is from 90:10 to 10:90.

6. The curable resin composition according to claim 1 or 2, wherein the thermally expandable particles (D) are at least one type selected from the group consisting of thermally expandable microcapsules and expanded graphite.

7. The curable resin composition according to claim 1 or 2, wherein a proportion of the thermally expandable particles (D) to be used is in a range of from 3 to 40 parts by mass per 100 parts by mass of a total of the epoxy resin (A) and the epoxy resin (B).

8. A cured article produced by curing the curable resin composition described in claim 1 or 2.

9. A laminated product comprising a base material and a layer containing the cured article described in claim 8.

10. A heat-resistant member comprising the cured article described in claim 8.

11. A dismantlable adhesive material comprising the curable resin composition described in claim 1 or 2.

12. A dismantling method using the dismantlable adhesive material described in claim 11, the method comprising:
a bonding step of attaching the dismantlable adhesive material to a surface of an adherend and bonding the dismantlable adhesive material to the adherend;
a curing step of curing the dismantlable adhesive material to produce a cured article,
a heat treatment step of performing a heat treatment on the cured article to thermally dissociate a reversible binding derived from the curable functional group-containing compound (C) and contained in General Formula (4-1) or (4-2) and expand the thermally expandable particles (D); and
a dismantling step of dismantling the adherend and the cured article.

13. The dismantling method according to claim 12, further comprising, after the heat treatment step and before the dismantling step, a cooling step of cooling the cured article after the heat treatment to room temperature.
